(19) Europäisches Patentamt
European Patent Office
Office européen des brevets

(11) **EP 4 492 032 A1**

(12) **EUROPEAN PATENT APPLICATION**
published in accordance with Art. 153(4) EPC

(43) Date of publication:
**15.01.2025 Bulletin 2025/03**

(21) Application number: **23766976.7**

(22) Date of filing: **10.03.2023**

(51) International Patent Classification (IPC):
**G01M 17/007** (2006.01)     **B62M 6/40** (2010.01)

(52) Cooperative Patent Classification (CPC):
**B62M 6/40; G01M 17/007**

(86) International application number:
**PCT/JP2023/009361**

(87) International publication number:
**WO 2023/171800 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **10.03.2022   JP 2022037059**
**14.09.2022   JP 2022146575**

(71) Applicant: **HONDA MOTOR CO., LTD.**
**Minato-ku**
**Tokyo 107-8556 (JP)**

(72) Inventors:
• **NOMURA, Naoki**
  **Wako-shi, Saitama 351-0193 (JP)**
• **SUNAMOTO, Masayuki**
  **Wako-shi, Saitama 351-0193 (JP)**
• **ONUKI, Hirotaka**
  **Wako-shi, Saitama 351-0193 (JP)**
• **HATTORI, Makoto**
  **Wako-shi, Saitama 351-0193 (JP)**

(74) Representative: **Weickmann & Weickmann**
**PartmbB**
**Postfach 860 820**
**81635 München (DE)**

(54) **MANAGEMENT METHOD FOR VEHICLE, MANAGEMENT PROGRAM FOR VEHICLE, STORAGE MEDIUM, AND INFORMATION PROCESSING DEVICE**

(57)     This management method for an electric bicycle (10) obtained by mounting a vehicle body frame (67) and a motor (M) comprises: a measurement step (S182) for measuring, in a state in which a back wheel (78) connected to the motor (M) is being driven by the motor (M) in a first time period, a measurement value (662), which is at least one of (A)the amount of generated power or the rotation state amount of at least one of the motor (M), the back wheel (78), and a power transmission path, and (B) the state amount of a battery (2) that supplies electric power to the motor (M); and a comparison step (S183) for comparing the measurement value (662) with a threshold corresponding to the measurement value (662) in a second time period that is later than the first time period.

EP 4 492 032 A1

## FIG.11

OPERATION COMFIRMATION
PROCESS S180

```
    ┌──────────────────┐   ┌──────────────────┐   ┌──────────────────┐
    │ ELECTRIC BICYCLE │   │   STORE TABLET   │   │      SERVER      │
    └──────────────────┘   └──────────────────┘   └──────────────────┘
           10                    60                      90
```

STARTT REQUEST
S181

MEASURE MEASURMENT VALUE
S182

COMPARE MEASUREMENT VALUE AND THRESHOLD VALUE
S183

TRANSMIT MEASUREMENT VALUE AND COMPARISON RESULT
S184

DISPLAY MEASUREMENT VALUE AND DETERMINATION RESULTE
S185

STORE MEASUREMENT VALUE, COMPARISON RESULT, AND DETERMINATION RESULT
S186

TRANSMIT MEASUREMENT VALUE, COMPARISON RESULT, AND DETERMINATION RESULT
S187

STORE MEASUREMENT VALUE AND DETERMINATION RESULT
S188

**Description**

TECHNICAL FIELD

The present invention relates to a vehicle management method, a vehicle management program, a storage medium, and an information processing device.

BACKGROUND ART

An electric assist bicycle has been known which assists a stepping force of a crank pedal with power of a motor (for example, Patent Literature 1 and Patent Literature 2). The electric assist bicycle includes a bicycle in which an electric assist unit is retrofitted to an existing vehicle body frame, as in Patent Literature 2, for example, unlike a completed bicycle in which an electric assist unit is pre-installed at a manufacturing factory.

CITATION LIST

PATENT LITERATURE

Patent Literature 1: JPH11-005583A
Patent Literature 2: JP2001-039377A

SUMMARY OF INVENTION

TECHNICAL PROBLEM

In an electric assist bicycle to which an electric assist unit is retrofitted or an electric assist bicycle in which an electric assist unit is installed in advance at manufacturing factory, various electric components for electric assist, such as a control circuit, a motor, and a battery, are mounted on a vehicle body frame. It is desirable to confirm and manage whether the electric components are appropriately mounted on a vehicle body frame and appropriately operate, at least after installation and before starting to use.

The present invention provides a vehicle management method, a vehicle management program, a storage medium, and an information processing device capable of appropriately managing a vehicle configured by installation of a vehicle body and a power source mounted on the vehicle body.

SOLUTION TO PROBLEM

The first invention provides a management method for a vehicle which is configured by installation of a vehicle body and a power source mounted on the vehicle body, the method including:

a measurement step of measuring, in a first time period, in a state where the vehicle configured by installation of the vehicle body and the power source drives a wheel connected to the power source by the power source, a measurement value that is at least one of

(A) a rotational state quantity of at least one of the power source, the wheel, and a power transmission path between the power source and the wheel, or a generated power amount, or
(B) a state quantity of an energy source configured to supply energy for the power source;

a comparison step of comparing, in a second time period after the first time period, the measurement value with a threshold value for the measurement value.

The second invention provides a management method for a vehicle configured by installation of a vehicle body and a power source mounted on the vehicle body, the method including:

a generation step of generating, in a ninth time period, information for displaying confirmation information that is information to be confirmed by an entity of manufacturing or others which is any one of a manufacturing entity, a managing entity, an owning entity, or a use entity of the vehicle with regard to the vehicle configured by installation of the vehicle body and the power source, on a terminal used by the entity of manufacturing or others, and

an acquisition step of acquiring, in tenth time period after the ninth time period, input information that is information input by the entity of manufacturing or others in accordance with execution confirmation information that is information for confirming that the entity of manufacturing or others has confirmed an item to be confirmed included in the confirmation information.

The third invention provides a management method for a vehicle which is configured by installation of a vehicle body and a power source mounted on the vehicle body, the method including an acquisition step of acquiring:

image information on the vehicle configured by installation of the vehicle body and the power source in which the vehicle body and the power source appear in a same angle of view;
image information in which a part of the vehicle body where the power source is installed appears; or
image information in which identification information of the vehicle body indicated on the vehicle body, or identification information of the power source indicated on the power source, or identification information of an entity of manufacturing or others which is any one of a manufacturing entity, a managing entity, an owning entity, or a use entity of the vehicle appears.

The fourth invention provides a management program for a vehicle which is configured by installation of a vehicle body and a power source mounted on the vehicle body, the program causing a computer to execute:

an acquisition step of acquiring, in a first time period, in a state where the vehicle configured by installation of the vehicle body and the power source drives a wheel connected to the power source by the power source, a measurement value that is at least one of

(A) a rotational state quantity of at least one of the power source, the wheel, and a power transmission path between the power source and the wheel, or a generated power amount, or
(B) a state quantity of an energy source configured to supply energy for the power source;

a comparison step of comparing, in a second time period after the first time period, the measurement value with a threshold value for the measurement value.

The fifth invention provides a management program for a vehicle which is configured by installation of a vehicle body and a power source mounted on the vehicle body, the program causing a computer to execute:

a generation step of generating, in a ninth time period, information for displaying confirmation information that is information to be confirmed by an entity of manufacturing or others which is any one of a manufacturing entity, a managing entity, an owning entity, or a use entity of the vehicle with regard to the vehicle configured by installation of the vehicle body and the power source, on a terminal used by the entity of manufacturing or others, and
an acquisition step of acquiring, in tenth time period after the ninth time period, input information that is information input by the entity of manufacturing or others in accordance with execution confirmation information that is information for confirming that the entity of manufacturing or others has confirmed an item to be confirmed included in the confirmation information.

The sixth invention provides a management program for a vehicle which is configured by installation of a vehicle body and a power source mounted on the vehicle body, the program causing a computer to execute an acquisition step of acquiring:

image information on the vehicle configured by installation of the vehicle body and the power source in which the vehicle body and the power source appear in a same angle of view;
image information in which a part of the vehicle body where the power source is installed appears; or
image information in which identification information of the vehicle body indicated on the vehicle body, or identification information of the power source indicated on the power source, or identification information of an entity of manufacturing or others which is any one of a manufacturing entity, a managing entity, an owning entity, or a use entity of the vehicle appears.

The seventh invention provides a computer-readable storage medium storing the aforementioned management programs.

The eighth invention provides an information processing device for managing a vehicle which is configured by installation of a vehicle body and a power source mounted on the vehicle body, the information processing device including:

an acquisition unit configured to acquire, in a first time period, in a state where the vehicle configured by installation of the vehicle body and the power source drives a wheel connected to the power source by the power source, a measurement value that is at least one of

(A) a rotational state quantity of at least one of the power source, the wheel, and a power transmission path between the power source and the wheel, or a generated power amount, or
(B) a state quantity of an energy source configured to supply energy for the power source;

a comparison unit configured to compare, in a second time period after the first time period, the measurement value with a threshold value for the measurement value.

The ninth invention provides an information processing device for managing a vehicle which is configured by installation of a vehicle body and a power source mounted on the vehicle body, the information processing device including:

a display generation unit configured to generate information for displaying confirmation information that includes information to be confirmed by an entity of manufacturing or others which is any one of a manufacturing entity, a managing entity, an owning entity, or a use entity of the vehicle with regard to the vehicle configured by installation of the vehicle body and the power source, on a terminal used by the entity of manufacturing or others, and
an acquisition unit configured to acquire input information that is information input by the entity of manufacturing or others in accordance with execution confirmation information that is information for confirming that the entity of manufacturing or others has confirmed an item to be confirmed.

The tenth invention provides an information processing device for managing a vehicle which is configured by installation of a vehicle body and a power source mounted on the vehicle body, the information processing device including an acquisition unit configured to acquire:

image information on the vehicle configured by installation of the vehicle body and the power source in which the vehicle body and the power source appear in a same angle of view;
image information in which a part of the vehicle body where the power source is installed appears; or
image information in which identification information of the vehicle body indicated on the vehicle body, or identification information of the power source indicated on the power source, or identification information of an entity of manufacturing or others which is any one of a manufacturing entity, a managing entity, an owning entity, or a use entity of the vehicle appears.

ADVANTAGEOUS EFFECTS OF INVENTION

According to the present invention, it is possible to appropriately manage the vehicle configured by installation of the vehicle body and the power source mounted on the vehicle body.

BRIEF DESCRIPTION OF DRAWINGS

FIG. 1 is a diagram illustrating a correlation between parties involved in an electric bicycle management method according to an embodiment of the present invention.
FIG. 2 is a graph illustrating a relationship between an assist ratio and a vehicle speed of an electric assist bicycle.
FIG. 3 is a side view of a sports cycle type electric bicycle 10.
FIG. 4 is a schematic diagram of a power transmission mechanism T including a power unit 20.
FIG. 5 is a schematic diagram of a power transmission mechanism T including a power unit 20 in which a switching transmission device 30 is provided between a driven sprocket 81 and a rear wheel 78.
FIG. 6 is a diagram illustrating electric paths and communication paths of the power unit 20, a battery 2, and a control circuit 40 in the electric bicycle 10.

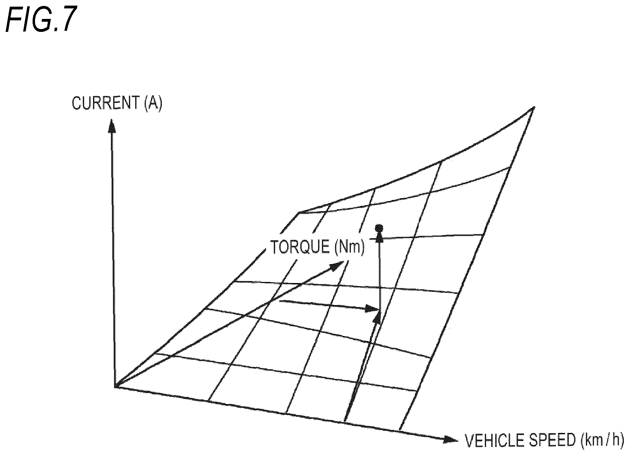

FIG. 7 is a control map in which a target current for a vehicle speed and a target torque is set.
FIG. 8 is a diagram illustrating a relationship between a user, a sales store, and a server.

FIG. 9 is a flowchart of the electric bicycle management method according to the embodiment of the present invention.

FIG. 10 is a flowchart of an installation check process.

FIG. 11 is a sequence diagram of an operation confirmation process.

FIG. 12 is a diagram illustrating an example of a flow at the time of installing an assist device.

FIG. 13 is a functional block diagram of the electric bicycle 10, a store tablet 60, and a server 90.

FIG. 14 is a screen for selecting communication address information of the control circuit 40 in a store application.

FIG. 15 is a screen for selecting a vehicle model in the store application.

FIG. 16 is a screen for confirming vehicle information and acquiring a vehicle body number in the store application.

FIG. 17 is a screen showing that a vehicle ID is given in the store application.

FIG. 18 is a screen for acquiring a power unit number and a battery number in the store application.

FIG. 19 is a screen showing vehicle information associated with the vehicle ID in the store application.

FIG. 20 is a screen showing an installation screen 650 in which image information 651 to 655 is displayed.

FIG. 21 is a screen showing an installation screen 650 in which a plurality of check items 656 are displayed.

FIG. 22 is an operation confirmation screen displayed when operation confirmation is performed in the store application.

FIG. 23 is a screen for acquiring user information on a user as a delivery destination in the store application.

FIG. 24 is a delivery content confirmation screen for confirming the user information on the user as the delivery destination and vehicle information on a delivered vehicle in the store application.

FIG. 25 is a screen in the store application showing that an owning entity of the vehicle has been changed from a sales store X to the user on the store application.

FIG. 26 is an owned vehicle screen in the store application showing a list of vehicles owned by the sales store X.

FIG. 27 is a screen in the store application displayed after selection of a vehicle in the owned vehicle screen in FIG. 26.

FIG. 28 is a screen for displaying user information on a user who is an owning entity of the vehicle in the store application.

FIG. 29 is a screen for performing a vehicle pick-up procedure in the store application.

FIG. 30 is a store menu screen in the store application.

FIG. 31 is a side view of a city cycle type electric bicycle 10.

FIG. 32 is an explanatory diagram of a modified power transmission mechanism T.

FIG. 33 is an explanatory diagram of another modified power transmission mechanism T.

FIG. 34 is a diagram showing a correlation between a parties involved in a management method of an electric bicycle, and showing a manner in which a user purchases a non-electric bicycle body from a dealer A.

DESCRIPTION OF EMBODIMENTS

Hereinafter, an embodiment of a vehicle management method, a vehicle management program, a storage medium storing the management program, and an information processing device according to the present invention will be described with reference to the drawings, taking an electric bicycle as an example of a vehicle.

[Correlation Between Parties]

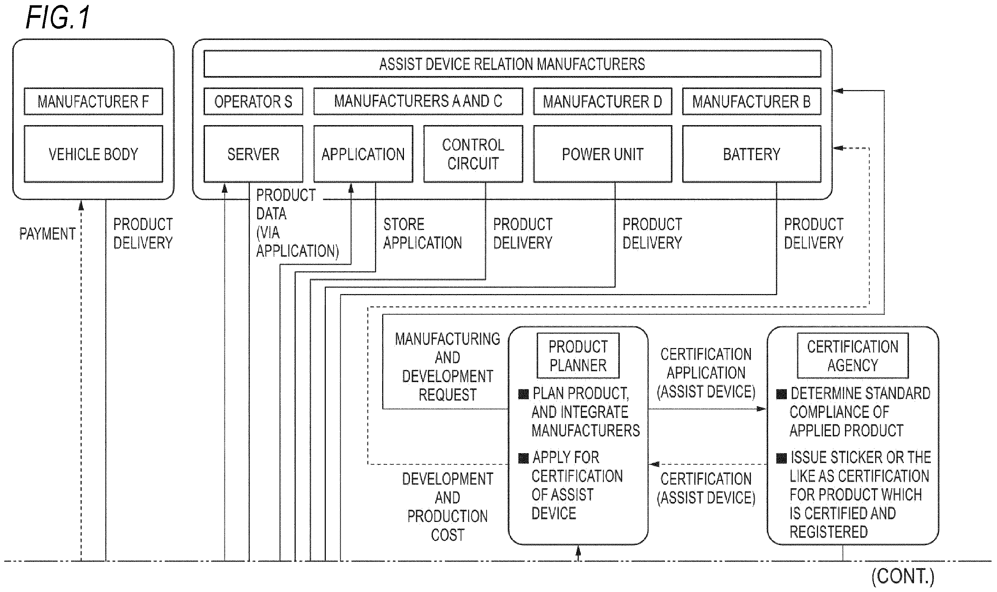

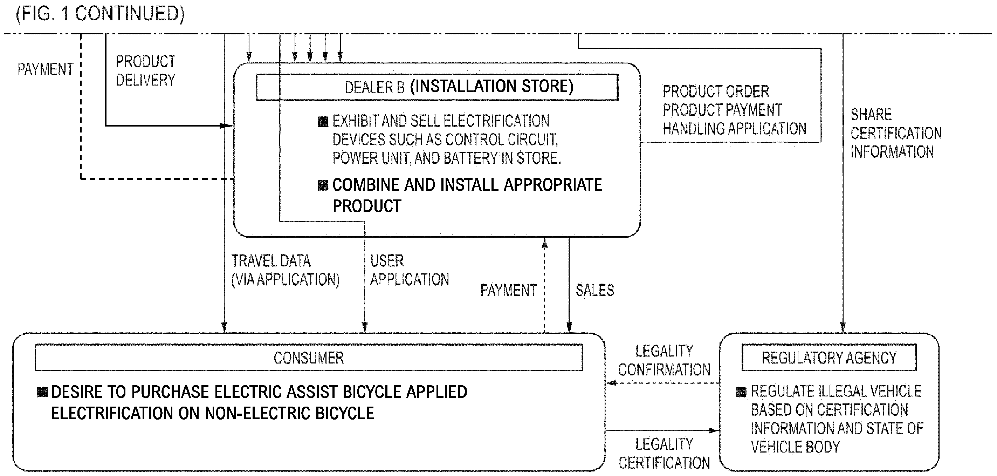

First, a description will be given of a correlation between parties involved in an electric bicycle management method. FIG. 1 is a party correlation diagram in which parties involved in an electric bicycle management method are summarized.

The parties involved in the electric bicycle management method include a plurality of manufacturers A, C, D, and B which manufacture components of an assist device (including a power unit, a control unit, and a battery. "Electrification devices" in the diagram.), an operator S which operates a server, a manufacturer F which manufactures a vehicle body of a non-electric bicycle to which the assist device is to be installed, a dealer B which purchases the vehicle body of the non-electric bicycle from the manufacturer F and installs the assist device to the vehicle body of the non-electric bicycle, a user which purchases the electric bicycle from the dealer B, a product planner which performs product planning of the assist device and integrates the manufacturers A, C, D, and B and the operator S, a certification agency that determines standards compliance of the assist device or the electric bicycle to which the assist device is installed, and a regulatory agency that regulates an illegal vehicle. The correlation of the parties is an example, and another party may be involved, and at least a part of the plurality of manufacturers A, C, D, and B and the operator S (hereinafter, may be referred to as a manufacturer or the like) may be integrated. The manufacturer, the consumer, and the product planner may be a natural person or a corporation, or may be an association, a financial group, a private organization, or the like without a juridical personality. In the following description, it is assumed that the certification agency determines the standards compliance of an electric bicycle to which an assist device is installed. Hereinafter, an electric bicycle corresponding to a combination certified and registered by the certification agency may be referred to as a certified vehicle.

The manufacturer F delivers a vehicle body of a non-electric bicycle to the dealer B and receives a payment.

The product planner requests the manufacturers A, C, D, and B and the operator S to manufacture and develop various devices, and pays development and production costs.

The operator S develops, manufactures, and owns a server. The server collects and stores information on the electric bicycle, and performs necessary processing and the like on the information on the electric bicycle. The server communicates with a control circuit of the electric bicycle or a portable terminal of a consumer via a user application to exchange travel data and the like, and communicates with a computer (for example, a tablet terminal with a camera) of the dealer B via a store application to exchange vehicle data and the like. The server may be a distributed server including a plurality of server devices or a distributed virtual server (a cloud server) created in a cloud environment.

The manufacturer A develops an application (application software) for easily managing the electric bicycle, provides a user application to the consumer, and provides a store application to the dealer B.

The manufacturer C develops and manufactures a control circuit holding a control program, and delivers the control circuit to the dealer B. The manufacturer D develops and manufactures a power unit (a power unit in FIG. 1) and delivers the power unit to the dealer B. The control circuit and the power unit may be delivered to the dealer B after being integrated by the manufacturer C, the manufacturer D, or the like before being delivered to the dealer B, or may be delivered to the dealer B separately and then integrated by the dealer B, or may be delivered to the dealer B separately and then installed separately.

The manufacturer B develops and manufactures a battery and delivers the battery to the dealer B.

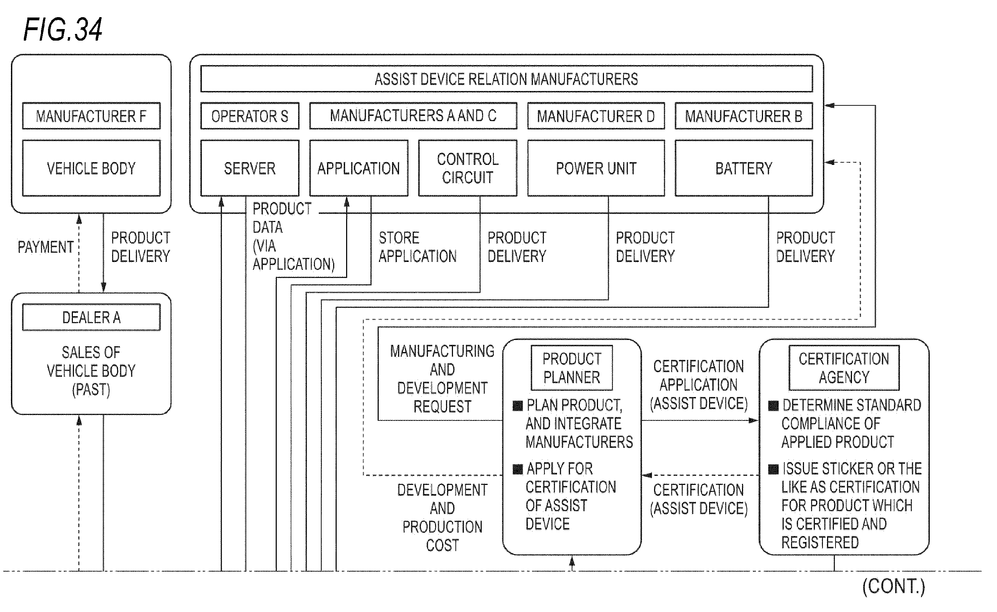

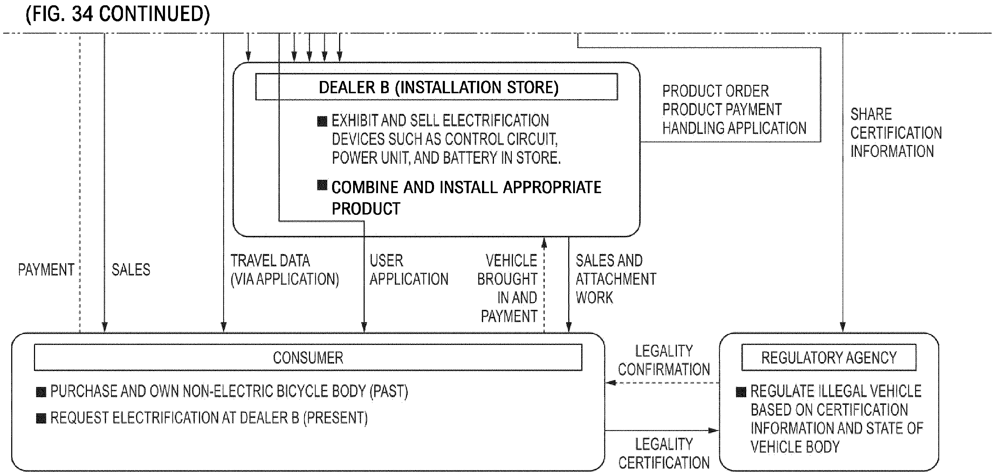

The dealer B performs installation work by appropriately assembling the assist device to a new non-electric bicycle purchased from the manufacturer F. The dealer B installs the assist device to the non-electric bicycle, and then sells the electric bicycle to the user. Further, although details will be described later with reference to FIG. 34, the dealer B may exhibit and sell the assist device in a store, and may, for example, install the assist device to the non-electric bicycle brought by the user.

The user is a person who wishes to purchase an electric bicycle, and makes a payment to the dealer B when purchasing the electric bicycle.

The product planner requests the manufacturers A, C, D, and B and the operator S to manufacture and develop various devices, and applies for a certification of the electric bicycle to the certification agency. It is preferable that the product planner applies for certifications of all combinations of the non-electric bicycle, the power unit, the control circuit, and the battery assumed in advance. For example, when there are ten combinations thereof, applications for ten types of electric bicycles are made. The certification agency determines the standards compliance of the electric bicycle for which an application is made, and issues a sticker or the like as a certification for a product which is certified and registered. The certification agency shares certification information with the regulatory agency.

The regulatory agency is, for example, the police, and regulates an illegal vehicle based on the certification information provided from the certification agency and a state of the electric bicycle.

It is needless to say that the electric bicycle retrofitted with the assist device complies with regulations at the time of being sold from the dealer B to the consumer, and thereafter, an electric bicycle management method is important in order to maintain the electric bicycle in a complying state complying with the regulations.

[Regulations]

Here, the regulations imposed on the electric bicycle in Japan will be described.

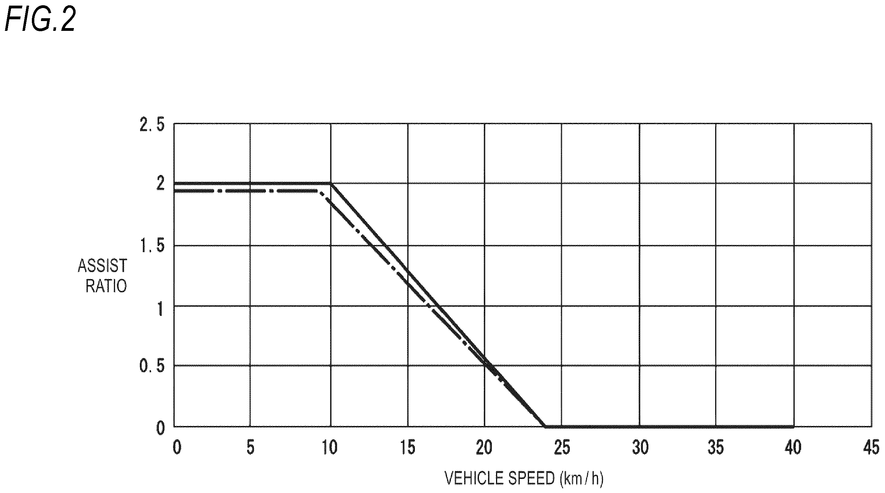

According to the regulations of Japan, as indicated by a solid line in FIG. 2, an upper limit value of an assist ratio is 2 until a vehicle speed reaches 10 km/h, and the assist ratio needs to be gradually decreased from 2 to 0 when the vehicle speed changes from 10 km/h to 24 km/h. Therefore, for example, as illustrated in FIG. 2, the control circuit manufactured by the manufacturer C is programmed to obtain an assist ratio indicated by a one-dot chain line which does not go beyond the regulation (the solid line) of Japan. The example indicated by the one-dot chain line in FIG. 2 is set such that a predetermined allowance (a margin) with respect to the upper limit of the assist ratio is secured in a range of less than 10 km/h and a range of 10 km/h to 24 km/h.

[Vehicle Structure]

Subsequently, an electric bicycle is exemplified as an embodiment of the vehicle of the present invention.

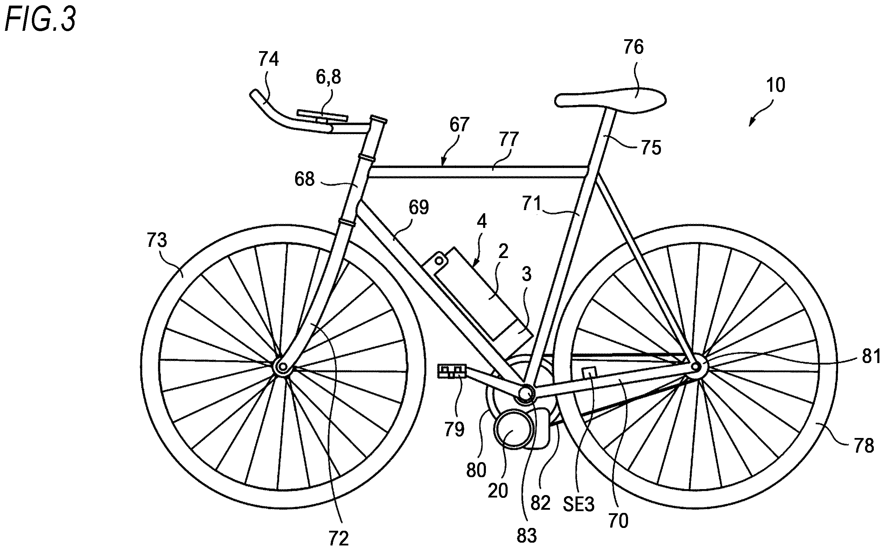

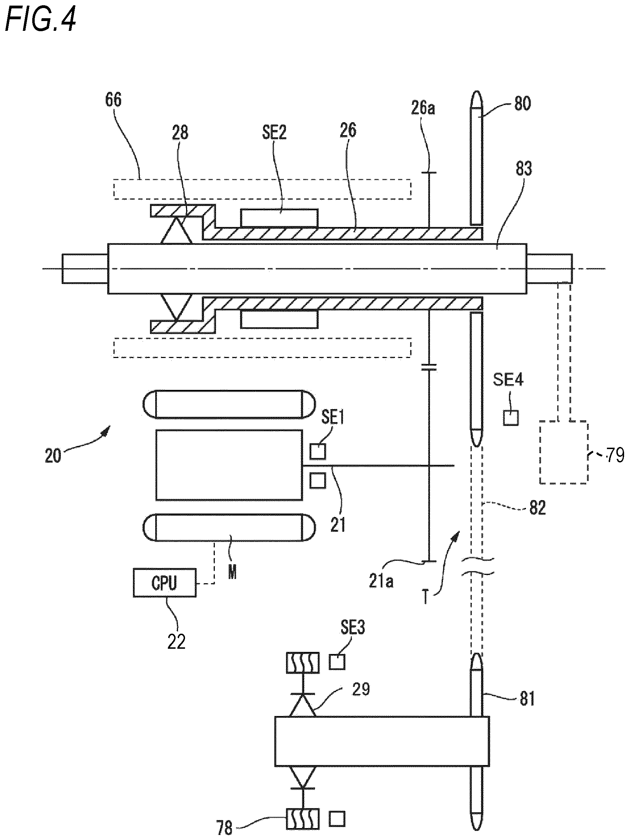

As illustrated in FIGS. 3 and 4A, an electric bicycle 10 is an electric assist bicycle which includes a front wheel 73, a rear wheel 78, a vehicle body frame 67, a power unit 20 driving the rear wheel 78, and a battery unit 4 electrically connected to the power unit 20, and which is capable of outputting an assist force generated by the power unit 20. FIG. 3 shows a case where the electric bicycle 10 is a sports cycle type as an example.

The vehicle body frame 67 includes a head pipe 68 at a front end, a down pipe 69 going down toward a rear side from the head pipe 68 and extending from a front portion to a rear portion of a vehicle body, a support pipe 66 (see FIG. 4) fixed to a rear end of the down pipe 69 and extending in a left-right direction, a seat post 71 rising upward from the support pipe 66, a top pipe 77 connecting the head pipe 68 and the seat post 71 at above the down pipe 69, and a pair of left and right rear forks 70 extending rearward from the support pipe 66.

Front forks 72 are supported by the head pipe 68 so as to be steerable, and the front wheel 73 is pivotally supported by lower ends of the front forks 72. A steering handlebar 74 is provided at an upper end of the front forks 72. The steering handlebar 74 is provided with a portable terminal holder 6 for holding a portable terminal 8 owned by an occupant (for example, a driver, also referred to as a user). The portable terminal 8 is, for example, a smartphone. It should be noted that the portable terminal holder 6 is not necessarily required, and the portable terminal 8 may be carried by an occupant, that is, the portable terminal 8 may be attached to (stored by) the occupant himself/herself or a wearing article (clothes and bags) of the occupant. The rear wheel 78 as a drive wheel is pivotally supported between rear ends of the pair of left and right rear forks 70 extending rearward from the seat post 71. A support shaft 75 including a seat 76 at an upper end thereof is attached to the seat post 71 such that a position of the seat 76 in an up-down direction can be adjusted.

The battery unit 4 which supplies electric power to the power unit 20 is detachably fixed to the down pipe 69. More specifically, the battery unit 4 includes a base 3 attached to an upper surface of the down pipe 69, and a battery 2 detachably attached to the base 3 and having a plurality of cells therein to accumulate energy (electric power).

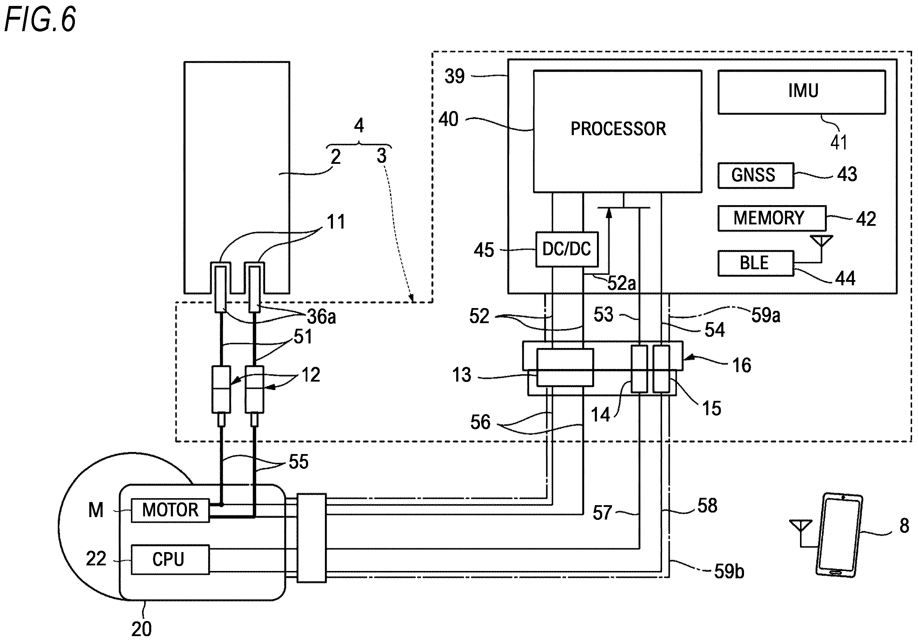

FIG. 6 is a diagram illustrating electric paths and communication paths of the power unit 20, the battery 2, and the control circuit 40 in the electric bicycle 10.

In the base 3, the control circuit 40, a DC/DC converter 45, an inertial measurement unit (also referred to as IMU) 41, a global navigation satellite system (GNSS) unit 43, a memory 42, and a Bluetooth low energy (BLE) unit 44 are arranged. In the following description, the control circuit 40, the DC/DC converter 45, the IMU 41, the GNSS unit 43, the memory 42, and the BLE unit 44 are collectively referred to as the control unit 39.

The control circuit 40 includes, for example, a central processing unit (CPU) capable of executing various calculations, a random access memory (RAM) used as a work area of the CPU, and a storage medium such as a read only memory (ROM) storing various kinds of information. The control circuit 40 calculates a torque (also simply referred to as power) to be generated by a motor M of the power unit 20 so that an assist force determined by a pedal stepping force described later and an assist ratio corresponding to a vehicle speed of the electric bicycle 10 is generated. Accordingly, the motor M operates in accordance with a CPU 22 of the power unit 20 which receives a calculation result (a drive request) from the control circuit 40. Here, the control circuit 40 only needs to calculate at least a "command value or request value correlated with the power to be generated from the motor M", and may calculate an output limit value of the motor M or an output limit value of the battery 2, or perform calculations for controlling based on the output limit value. The "power" may be an output in addition to the torque or may be a current command or a current request.

The DC/DC converter 45 steps down a supplied DC voltage as in the form of DC to generate a power supply voltage for the control circuit 40, the inertial measurement unit 41, the memory 42, the GNSS unit 43, and the BLE unit 44. In FIG. 6, a power supply line connecting the DC/DC converter 45 to the inertial measurement unit 41, the GNSS unit 43, the memory 42, and the BLE unit 44 is omitted.

The inertial measurement unit 41 is, for example, a 9-axis sensor having functions of a 3-axis acceleration sensor, a 3-axis angular velocity sensor, and a 3-axis azimuth sensor, and detects a mounting posture of the control circuit 40. The GNSS unit 43 acquires position information of the electric bicycle 10. The memory 42 is, for example, an SD card, and temporarily or permanently holds information, travel data, and the like of the electric bicycle 10. The BLE unit 44 is a communication device for performing BT connection (Bluetooth communication) with the portable terminal 8, the store tablet 60, or the like.

The base 3 includes a male terminal 36a (a plug) electrically connected to a female terminal (a receptacle) 11 provided in the battery 2, a bullet pair 12 connected to the male terminal 36a via a power line 51, an electrical connector pair 13 electrically connected to the control circuit 40 via a power line 52 and the DC/DC converter 45, a communication connector pair 14 electrically connected to the control circuit 40 via a communication line 53, and a communication connector pair 15 communicably connected to the control circuit 40 via a communication line 54.

The bullet pair 12 is detachably connected to the battery 2 via the power line 51 and the male terminal 36a, and is also connected to the power unit 20 via a power line 55. The electrical connector pair 13 is connected to the DC/DC converter 45 via the power line 52, and is also connected to the power unit 20 via a power line 56. The power line 56 is configured to be supplied with electric power from the battery 2 through a branch from the power line 55 or the like. The communication connector pair 14 is connected to the control circuit 40 via the communication line 53, and is also connected to the power unit 20 via a communication line 57. The communication connector pair 15 is connected to the control circuit 40 via the communication line 54, and is also connected to the power unit 20 via a communication line 58. The communication method via the communication lines 54 and 58 is not particularly limited, but is, for example, universal asynchronous receiver transmitter (UART) communication.

The electrical connector pair 13, the communication connector pair 14, and the communication connector pair 15 constitute the same connector pair 16. The power line 52, the communication line 53, and the communication line 54 constitute a first harness 59a, and the power line 56, the communication line 57, and the communication line 58 constitute a second harness 59b. In this way, since the connector pairs are integrated by the connector pair 16, and the power lines and the communication lines are bundled and integrally routed, assembly work can be facilitated.

In an electric system and a communication system configured as described above, electric power from the battery 2 is supplied to the motor M of the power unit 20, and electric power supplied from the power unit 20 and stepped down by the DC/DC converter 45 is supplied to the control circuit 40, the inertial measurement unit 41, the GNSS unit 43, the memory, and the BLE unit 44. The control circuit 40 receives electric power before being stepped down by the DC/DC converter 45 via a power branch line 52a, and outputs a power switch signal to the power unit 20 via the communication lines 53 and 57. In a state where electric power is supplied to the control circuit 40, when an activation request for the power unit 20 from the user is made via the user application of the portable terminal 8, a power switch signal is transmitted to the power unit 20 via the communication lines 53 and 57, and the power unit 20 is activated. When the power unit 20 is activated, information exchange is performed between the power unit 20 and the control circuit 40 via the communication lines 54 and 58, and information exchange can be performed between the control circuit 40 and the portable terminal 8 of the user via the BLE unit 44.

Returning to FIGS. 3 and 4, a pair of crank pedals 79 are coupled to a left end and a right end of a crankshaft 83 which coaxially penetrates the support pipe 66 of the vehicle body frame 67. The stepping force (hereinafter referred to as a pedal stepping force) applied to the crank pedal 79 from the occupant is transmitted to the crankshaft 83 and input to an endless chain 82 via a drive sprocket 80. The chain 82 is wound around the drive sprocket 80 and a driven sprocket 81 provided on an axle of the rear wheel 78.

In the power unit 20, an output shaft 21 of the motor M and the crankshaft 83 are disposed in parallel. The crankshaft 83 is rotatably supported on an inner side of a cylindrical sleeve 26 via a first one-way clutch 28. At an outer peripheral side of the sleeve 26, a driven gear 26a meshing with a motor output gear 21a provided on the output shaft 21 of the motor M and the drive sprocket 80 are fixed. Therefore, a torque of the motor M is transmitted to the drive sprocket 80 via the motor output gear 21a, the driven gear 26a, and the sleeve 26. That is, the motor M is provided in parallel with the crank pedal 79.

A second one-way clutch 29 is provided between the driven sprocket 81 and the rear wheel 78.

In the electric bicycle 10 configured as described above, when the crank pedal 79 is pedaled in an advancing direction (also referred to as a forward rotation direction or a forward direction), the first one-way clutch 28 is engaged, and forward rotation power of the crankshaft 83 is transmitted to the drive sprocket 80 via the sleeve 26 and is further transmitted to the driven sprocket 81 via the chain 82. At this time, since the second one-way clutch 29 is also engaged, the forward rotation power transmitted to the driven sprocket 81 is transmitted to the rear wheel 78. In this way, the drive sprocket 80, the driven sprocket 81, and the chain 82 constitute a power transmission mechanism T that transmits the power input to the sleeve 26 to the rear wheel 78.

On the other hand, when the crank pedal 79 is pedaled in a reversing direction (also referred to as a reverse rotation direction or a reverse direction), the first one-way clutch 28 is not engaged, reverse rotation power of the crankshaft 83 is not transmitted to the sleeve 26, and the crankshaft 83 idles.

Further, for example, when the forward rotation power in the advancing direction (the forward rotation direction) is input from the rear wheel 78 as in the case where the electric bicycle 10 is pushed in the advancing direction, the second one-way clutch 29 is not engaged and the forward rotation power of the rear wheel 78 is not transmitted to the driven sprocket 81. Therefore, the rear wheel 78 rotates relative to the driven sprocket 81. On the other hand, when the reverse rotation power in the reversing direction (the reverse rotation direction) is input from the rear wheel 78 as in the case where the electric bicycle 10 is pushed in the reversing direction, the second one-way clutch 29 is engaged, and the reverse rotation power of the rear wheel 78 is transmitted to the driven sprocket 81, and is further transmitted to the drive sprocket 80 via the chain 82. At this time, since the first one-way clutch 28 is also engaged, the reverse rotation power transmitted to the drive sprocket 80 is transmitted to the crankshaft 83 and the crank pedal 79, and the crankshaft 83 and the crank pedal 79 are reversely rotated.

The power unit 20 is provided with a motor rotation speed sensor SE1 which detects a rotation speed of the motor M. The motor rotation speed sensor SE1 includes a magnet and a Hall IC provided at an outer peripheral portion of the output shaft 21 of the motor M.

The sleeve 26 is provided with a torque sensor SE2 which detects a pedal torque value Tq generated by the pedal stepping force. The torque sensor SE2 is a magnetic displacement detection type torque sensor disposed on an outer peripheral portion of the sleeve 26.

The control circuit 40 which controls the power unit 20 calculates the pedal stepping force based on the pedal torque value Tq which is an output value of the torque sensor SE2, and performs pulse width modulation (PWM) control over the motor M so that an assist force determined by the pedal stepping force and an assist ratio corresponding to a speed (hereinafter also referred to as a vehicle speed) of the electric bicycle 10 is generated.

More specifically, the control circuit 40 controls the motor M to generate power which correlates with (for example, is proportional to) the power input to the crank pedal 79. Specifically, the control circuit 40 allows the motor M to generate a target torque having a magnitude obtained by multiplying the pedal torque value Tq acquired by the torque sensor SE2 by the assist ratio corresponding to the vehicle speed, and executes assist control of the electric bicycle 10.

To explain the assist control more specifically, the control circuit 40 acquires the assist ratio corresponding to the current vehicle speed from FIG. 2. Next, the control circuit 40 determines the target torque based on the pedal torque value Tq and the assist ratio as described above. Next, the control circuit 40 sets a target current for the motor M based on a three-dimensional control map as illustrated in FIG. 6 in which the target current corresponding to the vehicle speed and the target torque is set. The control circuit 40 uses a value obtained by multiplying the target current by a predetermined filter function (for example, an infinite impulse response (IIR) filter) as an instruction current and transmits the instruction current to the CPU 22 of the power unit 20 via the communication lines 54 and 58. The motor M outputs power based on the instruction current based on a command from the CPU 22. As the instruction current approaches the target current over time, the power generated from the motor M approaches the target torque. When the instruction current reaches the target current or can be approximated as reaching the target current, the power generated from the motor M reaches the target torque or can be approximated as reaching the target torque.

The rear fork 70 is provided with a rear wheel rotation speed sensor SE3. The rear wheel rotation speed sensor SE3 is, for example, a magnetic detection sensor, and detects a magnetic pulse when a magnet attached to a spoke of the rear wheel 78 passes through the sensor. The rear wheel rotation speed sensor SE3 transmits the detected magnetic pulse as a vehicle speed pulse to the control circuit 40, and the control circuit 40 calculates the vehicle speed based on a pulse interval thereof. In general, only one magnet is attached to the rear wheel 78, and thus the magnetic pulse is detected once per one rotation of the rear wheel 78. Therefore, assuming that the vehicle speed is V [km/h] and a circumferential length of the rear wheel 78 is Ct [m], the vehicle speed V [km/h] is expressed by the following equation (1).

$$V \ [km/h] = \{Ct \ [m]/\text{magnetic pulse interval (s)}\} \times 3600/1000 \ (1)$$

The rear wheel rotation speed sensor SE3 is attached together with the power unit 20 at the dealer B at the time of installing the assist device.

A cadence sensor SE4 is attached to a periphery of the drive sprocket 80. Since the drive sprocket 80 rotates integrally with the crank pedal 79 when the first one-way clutch 28 is engaged, the rotation of the drive sprocket 80 can be regarded as the rotation of the crank pedal 79. The cadence sensor SE4 is, for example, a magnetic detection sensor. The drive sprocket 80 is provided with eight magnets evenly spaced in a circumferential direction, and the cadence sensor SE4 detects a magnetic pulse when each of the magnets pass through the sensor. The cadence sensor SE4 transmits the detected magnetic pulse as a cadence pulse (cadence related information) to the control circuit 40 to be described later, and the control circuit 40 calculates cadence indicating a speed of the rotation (motion) of the crank pedal 79 based on a pulse interval thereof. The cadence pulse is detected eight times per one rotation of the crank pedal 79. Therefore, cadence C [rpm] is expressed by the following equation (2).

$$C \ [rpm] = \{1/(8 \times \text{magnetic pulse interval (s)})\} \times 60 \ (2)$$

Since the drive sprocket 80 is coupled to the driven gear 26a via the sleeve 26, when a gear diameter of the driven gear 26a is the same as a gear diameter of the motor output gear 21a, the rotation speeds of the drive sprocket 80 and the motor output gear 21a are the same. Therefore, when the motor output gear 21a and the driven gear 26a have the same gear diameter, the cadence C can be acquired by the motor rotation speed sensor SE1. Further, the cadence C may be acquired in parallel by both the cadence sensor SE4 and the motor rotation speed sensor SE1.

Here, a relationship between the rotation speeds of the respective members of the electric bicycle 10 and the gear ratio will be described.

In general, the gear ratio is a rotation speed of an output unit with respect to a rotation speed of an input unit. In the electric bicycle 10, the rotation speed of the input unit is the rotation speed of the sleeve 26, and the rotation speed of the output unit is the rotation speed of the rear wheel 78. In the present embodiment, since the gear ratio between the motor output gear 21a and the driven gear 26a is set to 1, the rotation speed of the sleeve 26 is equal to the rotation speed of the motor M detected by the motor rotation speed sensor SE1. The rotation speed of the sleeve 26 is equal to the rotation speed of the crankshaft 83 in a state where the first one-way clutch 28 is engaged.

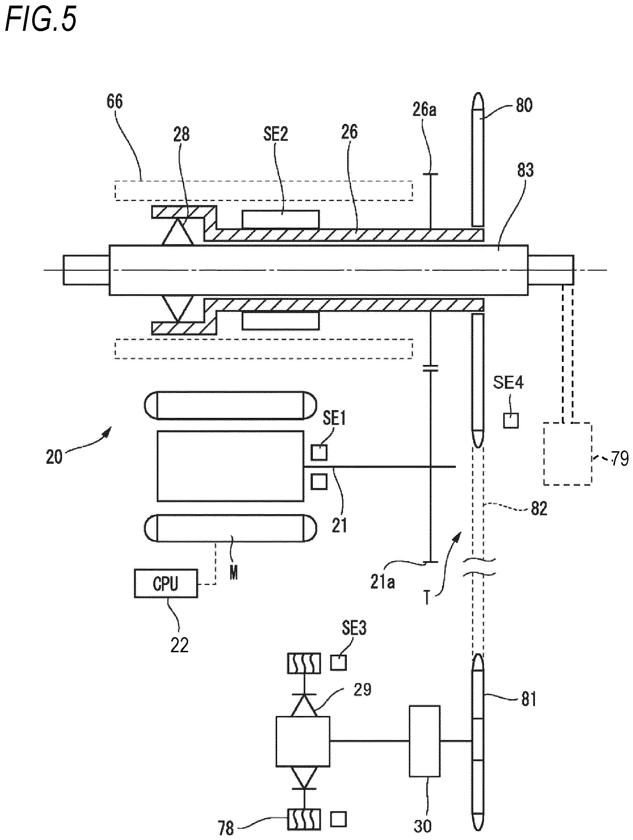

The rotation of the sleeve 26 is changed in speed by a difference in outer diameter between the drive sprocket 80 and the driven sprocket 81. The rotation of the sleeve 26 is further changed in speed by a switching transmission device 30 when the switching transmission device 30 is provided between the driven sprocket 81 and the rear wheel 78 as shown in FIG. 5. These components constitute the power transmission mechanism T which transmits the power input to the sleeve 26 to the rear wheel 78. The rotation speed of the rear wheel 78 is detected by the rear wheel rotation speed sensor SE3.

Assuming that the rotation speed of the sleeve 26, which is the rotation speed of the input unit, is Ni [rpm], the rotation speed of the rear wheel 78, which is the rotation speed of the output unit, is No [rpm], a gear ratio between the drive sprocket 80 and the driven sprocket 81 is Rg, and a gear ratio of the switching transmission device 30 is Rt, the rotation speed No [rpm] of the rear wheel 78 is expressed by the following equation (3).

$$No\ [rpm] = Ni\ [rpm] \times Rg \times Rt\ (3)$$

The gear ratio Rg between the drive sprocket 80 and the driven sprocket 81 in the equation (3) is expressed by the following equation (4), where D [m] is an outer diameter of the drive sprocket 80 and d [m] is an outer diameter of the driven sprocket 81.

$$Rg = \pi D/\pi d = D/d\ (4)$$

The gear ratio Rt of the switching transmission device 30 is appropriately set.
In addition, when the gear ratio of the power transmission mechanism T (hereinafter, referred to as a composite gear ratio) is set as Rc, the composite gear ratio Rc is expressed by multiplying the gear ratio Rg between the drive sprocket 80 and the driven sprocket 81 by the gear ratio Rt of the switching transmission device 30, as indicated by the equation (5). As in the present embodiment illustrated in FIG. 4, in the electric bicycle 10 in which the switching transmission device 30 is not provided, Rt = 1.

$$Rc = Rg \times Rt\ (5)$$

When the equation (3) is rewritten using the equation (5), the rotation speed No [rpm] of the rear wheel 78 is expressed by the following equation (6) using the rotation speed Ni [rpm] of the sleeve 26 and the composite gear ratio Rc of the power transmission mechanism T.

$$No\ [rpm] = Ni\ [rpm] \times Rc\ (6)$$

When the rotation speed No [rpm] of the rear wheel 78 in the equation (6) and the circumferential length Ct [m] of the rear wheel 78 are used, a speed No' [km/h] of the electric bicycle 10 is expressed by the following equation (7).

$$No'\ [km/h] = Ni\ [rpm] \times Rc \times Ct\ [m] \times 60/1000\ (7)$$

[Vehicle Body Management Method]

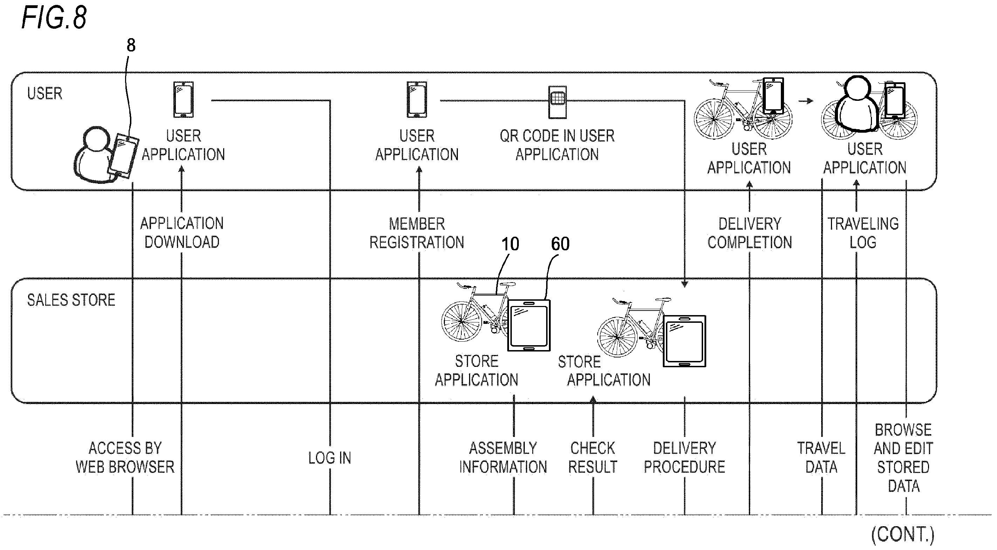

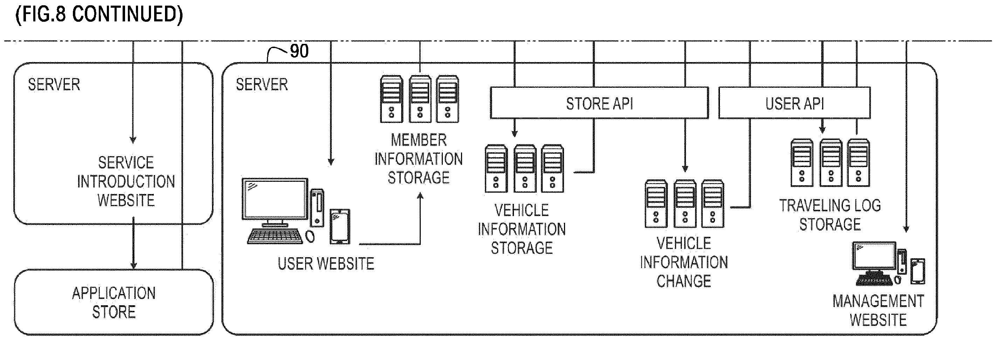

Next, a management method of the electric bicycle 10 will be described. Prior to the detailed description of the management method, the relationship between the user (the user in FIG. 1), the sales store (the dealer B in FIG. 1), and the server 90 (the server of the operator S in FIG. 1) will be described with reference to FIG. 8.
First, the user downloads a user application for facilitating the management of the electric bicycle 10 to the portable terminal 8. The user application is developed by the manufacturer A in FIG. 1. The user application is downloaded before the electric bicycle 10 is purchased (that is, before delivery from the sales store). When downloading, the user accesses a service introduction website of the user application, moves from the service introduction website to an application store, and downloads the user application from the application store. The user may download the user application by directly accessing the application store without accessing the service introduction website.
After downloading the application, the user accesses a user website of the server 90 on the user application, and performs a member registration procedure necessary for using the user application. Specifically, the user inputs user information such as the name, sex, address, mobile number, and mail address of the user. The server 90 stores the user information input by the user and completes member registration of the user. After the member registration, a user ID unique to the user is given to the user application, and the user ID is stored in the server 90 in association with the user information. The user may directly access the user website to perform the member registration procedure instead of using the user application.
The sales store first introduces a store application on the store tablet 60. For example, the sales store accesses the server 90 from the store tablet 60 to download the store application or physically connects a storage medium storing an execution file of the store application to the store tablet 60 to introduce the store application to the store tablet 60. A store ID which is identification information for identifying a sales store is registered in the store application, and different store IDs are registered for each sales store.
The store application and the server 90 are linked via an application programming interface (API). Various processes (for example, screen display, various operations, and the like) in the store application are executed by calling the API.

When assembling the electric bicycle 10, a staff member of the sales store inputs assembly information to the store application. The assembly information includes, for example, vehicle model information and information such as an identification number for identifying a component mounted on the vehicle body. After completing the assembly of the electric bicycle 10, the staff member checks whether the assembly work is properly performed in check items, and further confirms the operation of the electric bicycle 10. The assembly information includes information on the check of the assembly work and the confirmation of the operation of the electric bicycle 10. The assembly information input by the staff member is stored in the server 90 as vehicle information.

After checking the assembly work of the electric bicycle 10 and confirming the operation of the electric bicycle 10, results thereof are displayed on the store tablet 60. When the results are acceptable, the electric bicycle 10 can be delivered (sold) from the sales store to the user.

When purchasing the electric bicycle 10 from the sales store, the user causes a display of the portable terminal 8 to display a QR code (registered trademark) including the user information in the user application. The sales store reads the QR code of the user with the store tablet 60 and acquires the user information. Subsequently, the sales store performs a delivery procedure in the store application, and changes an owning entity of the electric bicycle 10 from the sales store to the user. At this time, the owning entity in the vehicle information stored in the server 90 is changed from the sales store to the user. The electric bicycle 10 is delivered to the user, that is, the purchase of the electric bicycle 10 is completed.

When the user uses the electric bicycle 10, the server 90 acquires travel data, error information of each component, and the like from the portable terminal 8 and/or the control circuit 40 attached to the vehicle body. The travel data, error information, and the like are stored in the server 90 as traveling logs. The user can confirm the traveling logs on the user application. The user can access a management website of the server 90 and browse and edit the data (member information, vehicle information, traveling logs, and the like) stored in the server 90. The user application and the server 90 are also linked via the API, and various processes (for example, screen display, various operations, and the like) in the user application are executed by calling the API.

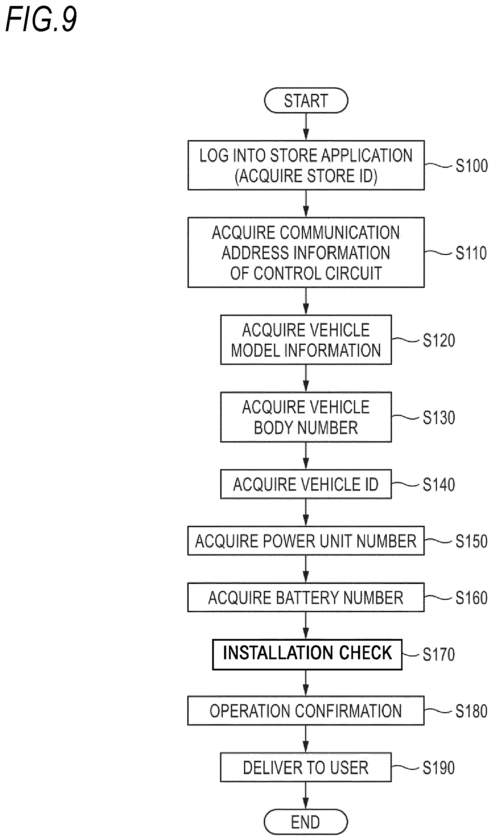

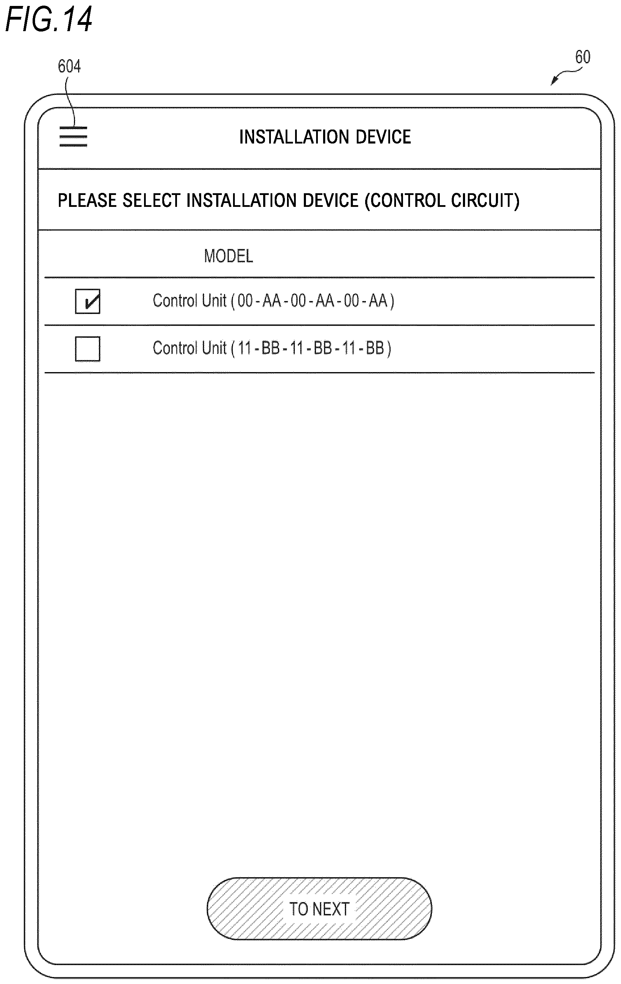

Subsequently, the management method of the electric bicycle 10 will be described in detail with reference to FIGS. 9 to 30. Although details will be described later, FIGS. 14 to 30 are examples of function screens of the store application displayed on a display of the store tablet 60 owned by a sales store X.

As illustrated in FIG. 9, the management method includes steps S100 to S160 performed when the assist device is installed, step S170 of checking an installation work, step S180 of confirming an operation of the electric bicycle 10 after the installation, and step S190 performed at the time of delivery to the user. Steps S100 to S190 are performed by a computer provided to the store tablet 60, the server 90, and/or the electric bicycle 10 (that is, an after-mentioned control unit 610 of the store tablet 60, an after-mentioned control unit 910 of the server 90, and/or the control circuit 40 of the electric bicycle 10).

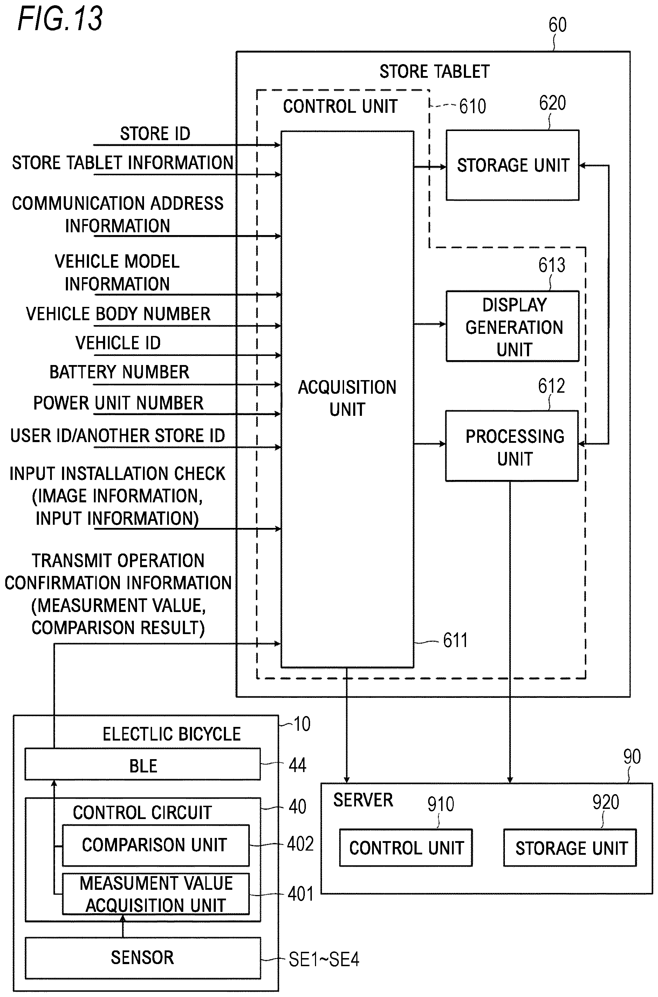

Before describing each step, functional configurations of the store tablet 60, the server 90, and the electric bicycle 10 will be described with reference to FIG. 13.

The store tablet 60 includes, for example, a control unit 610 including a CPU capable of executing various calculations and a RAM used as a work area of the CPU, and a storage unit 620 such as a ROM that stores various kinds of information. The control unit 610 includes an acquisition unit 611 that acquires various types of vehicle information to be described later, image information, and input information, and a processing unit 612 that associates the various types of vehicle information acquired by the acquisition unit 611, and a display generation unit 613 that generates information for displaying after-mentioned check items 656 and the like on the store tablet 60. The storage unit 620 stores various types of the vehicle information, the image information, and the input information acquired by the acquisition unit 611 and information associated with the processing unit 612. The store tablet 60 and the server 90 are wirelessly connected via a mobile communication system or the like, and the store tablet 60 and the control circuit 40 are wirelessly connected via Bluetooth connection.

The server 90 includes a control unit 910 implemented by a CPU executing a program stored in a storage device of the server 90, and a storage unit 920 that stores a processing result of the control unit 910 and information from the store tablet 60.

The control circuit 40 of the electric bicycle 10 includes a measurement value acquisition unit 401 for acquiring a measurement value measured by a sensor provided in the electric bicycle 10, such as sensors SE1 to SE4 and a current sensor (not shown) provided in the battery unit 4, and a comparison unit 402 for comparing the measurement value with a predetermined determination threshold value.

(installation Process)

First, a flow performed when the assist device (that is, the power unit 20, the control unit 39, and the battery unit 4) is installed will be described. A staff account is assigned in advance to the staff member of the sales store X that attaches the assist device to the vehicle body frame 67. The staff member logs in the store application of the store tablet 60 with the assigned staff account during the installtaion work (step S 100).

Further, each sales store is given a unique store ID which is identification information for identifying the sales store. When the staff member of the sales store X logs into the store application, the store ID of the sales store X is specified in the store application by the staff member inputting (or selecting) the store ID, in other words, in step S 100, the store tablet 60 acquires the store ID of the sales store X. In this way, the store tablet 60 and the store ID of the sales store X are associated with each other by logging into the store application. The store ID of the sales store X and store tablet information (for example, media access control (MAC) address) which is identification information for identifying the store tablet 60 may be associated with each other. The server 90 acquires log-in information for the store application, and stores the person, time, and sales store of performing the work.

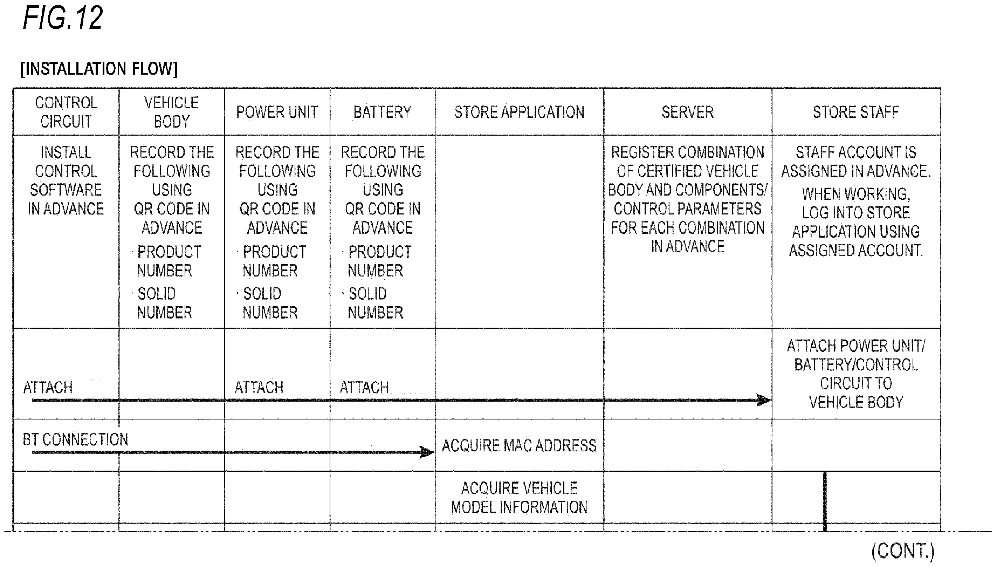

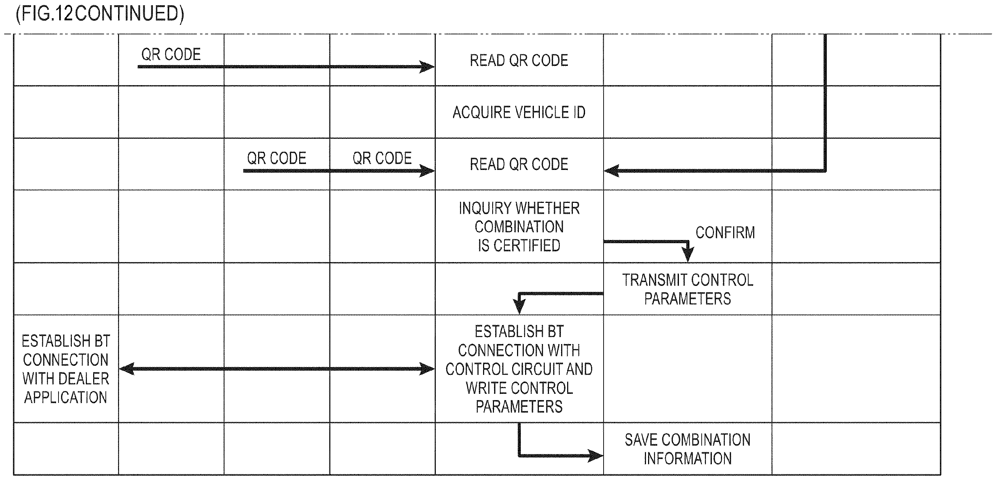

Subsequently, the staff member of the sales store X installs the control unit 39, the power unit 20, and the battery unit 4 to the vehicle body frame 67. FIG. 12 shows an example of the flow performed when the assist device is installed. The component installation work may be performed before logging into the store application.

Returning to FIG. 9, after (or when) each component is installed, the store tablet 60 acquires communication address information which is identification information for identifying the control circuit 40 (step S 110). The communication address information is, for example, a MAC address, and is information unique to the control circuit 40. Specifically, the control circuit 40 is provided so as to be capable of communicating (specifically, connected via BT) with the store tablet 60, and the store tablet 60 receives the communication address information transmitted from the control circuit 40.

FIG. 14 is an example of a store application screen for selecting the control circuit 40 (denoted as a "device" or "control unit" in the figure) displayed on the display of the store tablet 60. The communication address information (12-digit alphanumeric characters) of the control circuit 40 is selectably displayed on the store tablet 60. When the store tablet 60 receives communication address information of another control circuit different from the control circuit 40, the communication address information of another control circuit is also selectably displayed on the store tablet 60. The staff member of the sales store X confirms communication address information written on, for example, a seal attached to the control circuit 40 (the control unit 39). The staff member selects the communication address information of the installed control circuit 40 on the store tablet 60, and thus, connection between the store tablet 60 and the control circuit 40 is established. When the communication address information is selected, a personal identification number (PIN) code is required, but the PIN code at the stage of installing the assist device is the same for all control circuits.

Since the store tablet 60 and the control circuit 40 are connected, the association between the store ID of the sales store X registered in the store tablet 60 and the communication address information of the control circuit 40 is completed. In this way, the sales store X can manage the control circuit 40 in association with the store ID of the sales store X.

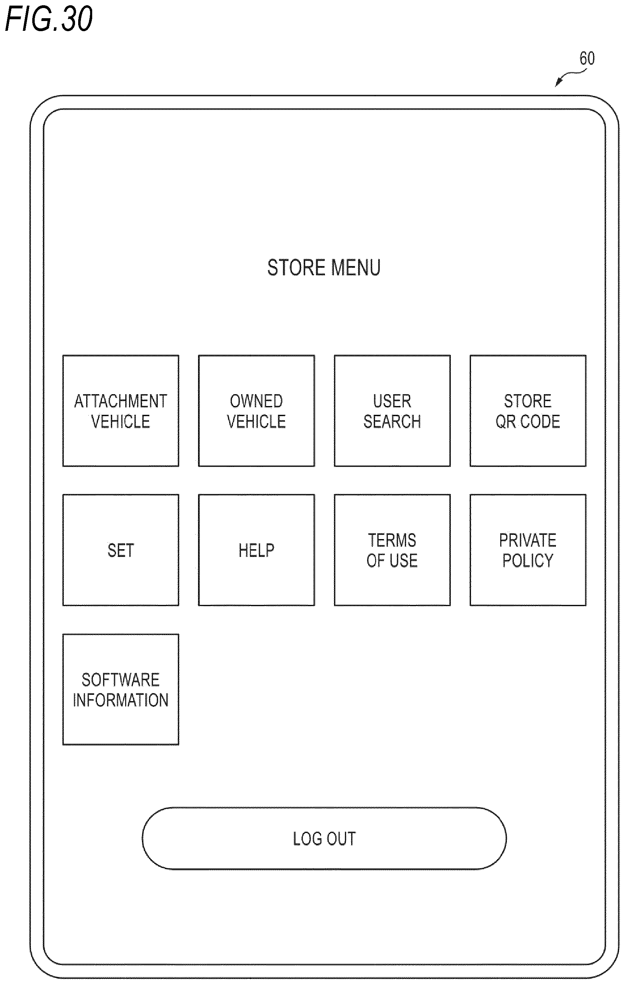

A menu button 604 is displayed at a left upper end of the store application screen (see FIGS. 14 to 16 and FIGS. 18 to 29). When the menu button 604 is selected, a store menu in FIG. 30 is displayed, and buttons for managing a vehicle owned by the sales store X, managing a user (a customer for the sales store X), setting the store application, and the like are displayed.

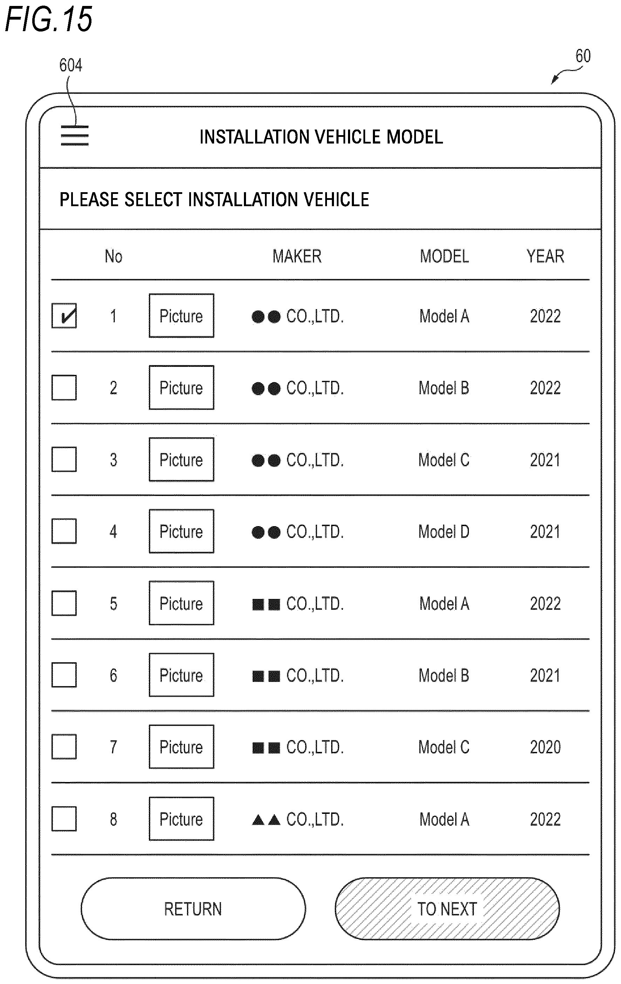

Returning to FIG. 9, after step S 110, the store tablet 60 acquires vehicle model information of the non-electric bicycle before installation of the assist device (step S120). The vehicle model information includes information such as a picture of a vehicle body, a manufacturer, a model of the vehicle body, and a date of initial marketing, and a plurality of vehicle models are registered in advance in the store application. Specifically, when the control circuit 40 is selected, as illustrated in FIG. 15, a list of vehicle models registered in the store application is displayed on the store tablet 60. The staff member of the sales store X selects a vehicle model subjected to the installation work, and thus, the association between the store ID of the sales store X and the vehicle model information is completed. The order of step S 110 and step S 120 may be changed.

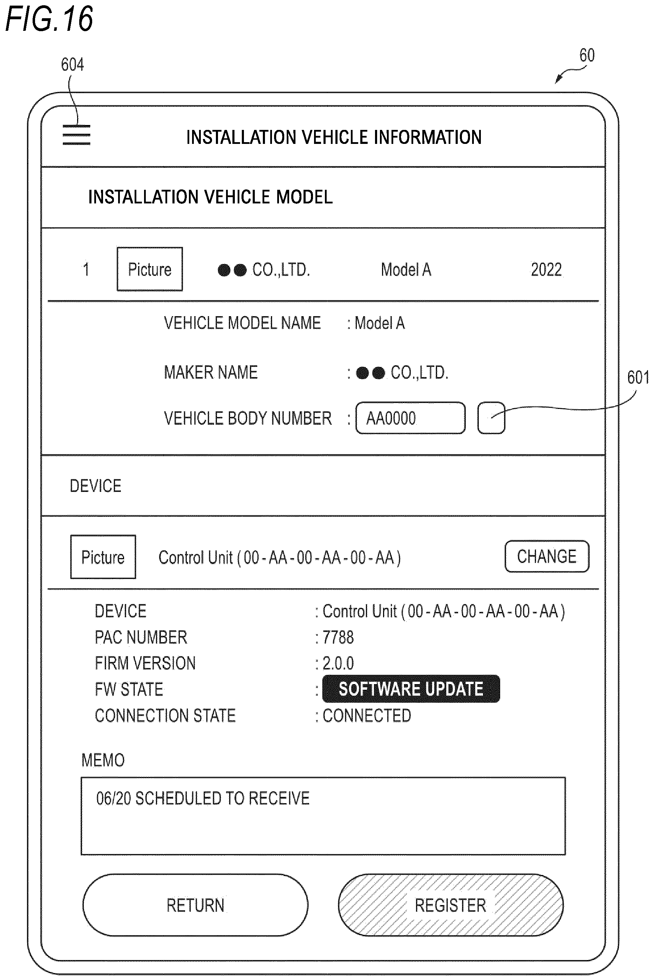

After step S120, the store tablet 60 acquires a vehicle body number which is identification information for identifying the vehicle body frame 67 (step S 130). The vehicle body number is a unique number that differs for each vehicle body frame. For example, even if the vehicle model is the same, the vehicle body number is different. To explain specifically about obtaining the vehicle body number, after the control circuit 40 and the vehicle model are selected, as illustrated in FIG. 16, a vehicle information screen showing information on the control circuit 40 and the vehicle model is displayed on the store tablet 60. When the staff member of the sales store X selects a button 601 arranged in a vicinity of the "vehicle body number" in the screen, a QR code reader is activated. When the staff member reads a QR code provided in advance by seal, engraving or the like on the vehicle body frame 67 with the QR code reader (see FIG. 12), the vehicle body number is registered in the store application, and the association between the store ID of the sales store X and the vehicle body number is completed. The vehicle body number is also associated with the communication address information of the control circuit 40 and the vehicle model information that are already associated with the store ID of the sales store X. After reading the QR code, the vehicle body number is displayed on the screen. In FIG. 16, the vehicle body number is displayed as "AA0000". By reading the QR code, erroneous input can be prevented unlike a case where the vehicle body number is directly input by character input. However, the vehicle body number may be obtained by directly inputting the vehicle body number by character input.

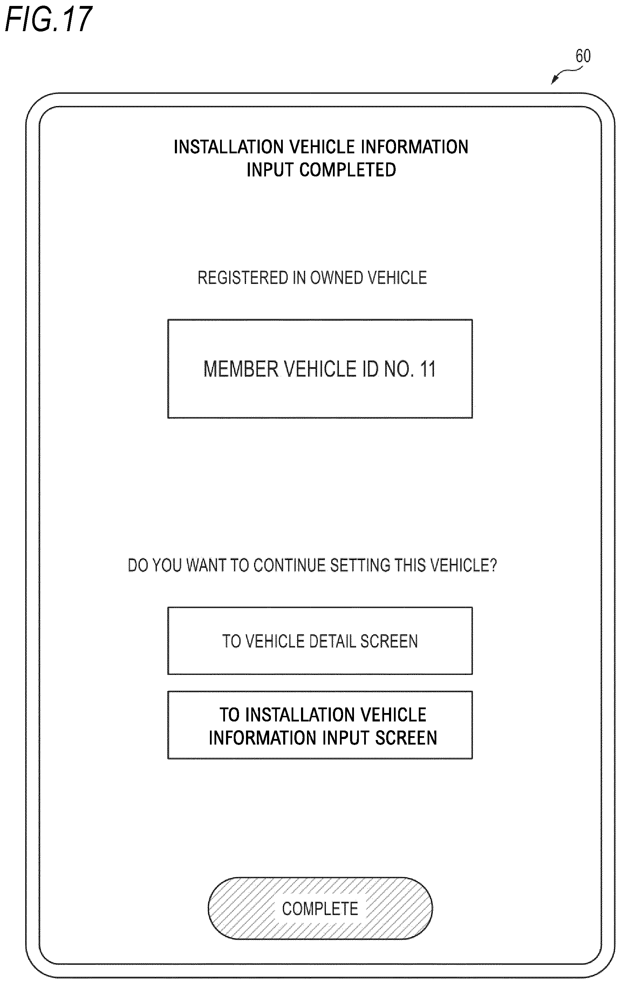

After step S130, the store tablet 60 acquires a vehicle ID which is identification information for identifying the electric bicycle 10 as a completed vehicle (step S140). Specifically, after the control circuit 40 and the vehicle body frame 67 are selected, the vehicle ID is given, and as illustrated in FIG. 17, the vehicle ID (a "member vehicle ID" in FIG. 17) is displayed on the store tablet 60. The vehicle ID is unique information given to the electric bicycle 10 after the association between the communication address information of the control circuit 40 and the vehicle body number of the vehicle body frame 67 is completed. When the vehicle ID is given, the store ID of the sales store X, the communication address information of the control circuit 40, the vehicle model information, and the vehicle body number are associated with the vehicle ID.

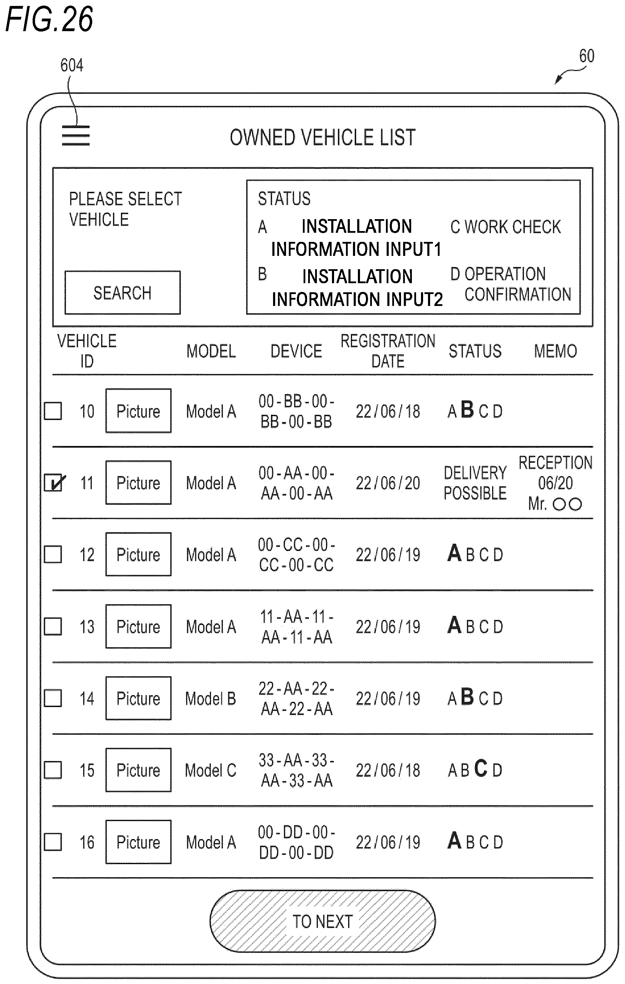

When the vehicle ID is associated with the store ID of the sales store X, the electric bicycle 10 is registered as a vehicle owned by the sales store X (see FIG. 26). Accordingly, the store tablet 60 of the sales store X can appropriately manage vehicles owned by its own store. Only vehicles to which the vehicle IDs associated with the store ID of the sales store X are given are displayed on an owned vehicle list screen in FIG. 26, and vehicles of the other stores associated with store IDs of sales stores other than the sales store X are not displayed. In addition to information such as the owning entity, the communication address information of the control circuit 40, and the vehicle body number of the electric bicycle 10, the vehicle ID is also associated with information such as a previous owning entity of the electric bicycle 10 and a status of the electric bicycle 10 (details will be described later).

When a "complete" button is selected on a screen in FIG. 17, the staff member of the sales store X can interrupt the installation work of the assist device. Accordingly, it is also possible for another staff member to be in charge of the work (from step S 150) to be described later, for example.

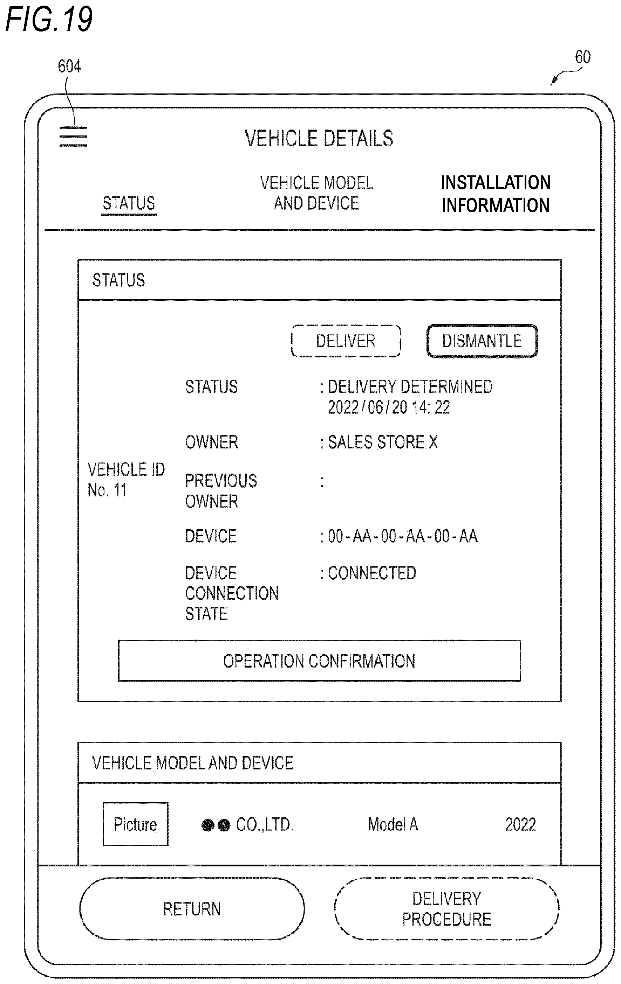

When a "to vehicle detail screen" button is selected on the screen in FIG. 17, the screen transitions to a screen in FIG. 19, and the vehicle information of the electric bicycle 10 to which the vehicle ID is given can be confirmed. The screen in FIG. 19 displays "delivery procedure" and "deliver" buttons, which will be described later, but these buttons cannot be selected until an installation check and operation confirmation, which will be described later, are completed. A "dismantle" button is displayed on the screen in FIG. 19. When the "dismantle" button is selected, an association relationship among the store ID, the communication address information of the control circuit 40, the vehicle model information, the vehicle body number, and the vehicle ID, which are associated with each other, is released. Accordingly, the staff member of the sales store X can detach the installed components and reinstall other components.

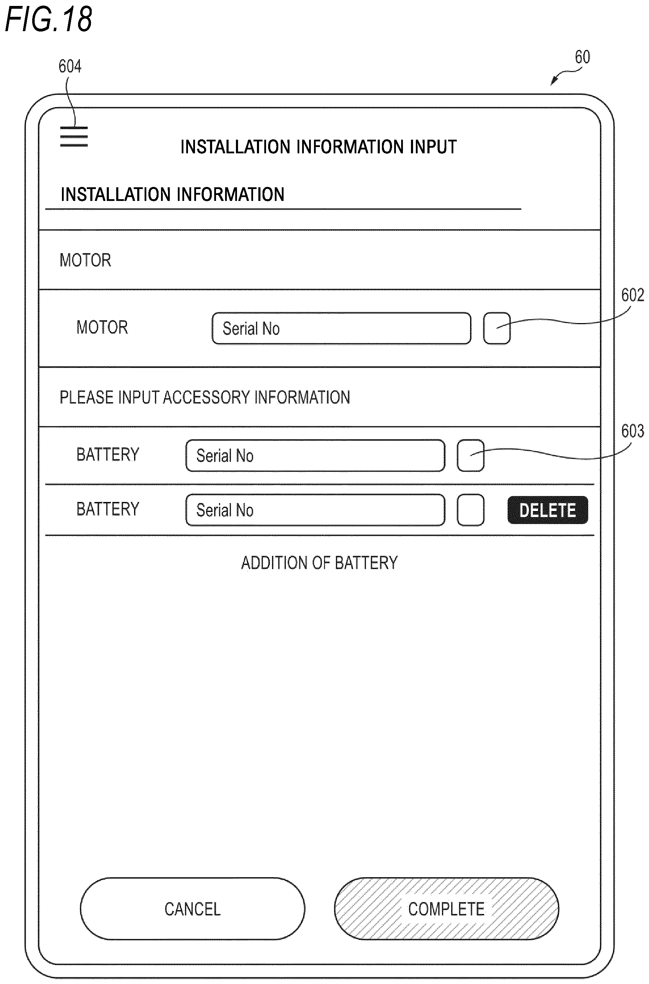

When a "to installation information input screen" button is selected on the screen in FIG. 17, the management method proceeds to step S 150 performed on a screen in FIG. 18.

In step S 150, the store tablet 60 acquires a power unit number which is identification information for identifying the power unit 20. Specifically, after the vehicle ID is acquired, as illustrated in FIG. 18, a screen for acquiring the power unit number is displayed on the store tablet 60. The staff member of the sales store X touches a button 602 arranged in a vicinity of the "motor" in the display screen to activate the QR code reader. When the staff member reads the QR code provided in advance on the power unit 20 with the QR code reader (see FIG. 12), the power unit number is registered in the store application, and the association between the store ID of the sales store X and the power unit number is completed. The power unit number is also associated with the communication address information of the control circuit 40, the vehicle body number, the vehicle model information, and the vehicle ID that are already associated with the store ID. After reading the QR code, the power unit number is displayed on the screen in FIG. 18. The acquisition of the power unit number is not limited to the reading of the QR code, and the power unit number may be directly input and acquired by character input.

After step S150, the store tablet 60 acquires a battery number which is identification information for identifying the battery 2 (step S160). Specifically, the battery number can also be acquired on the screen shown in FIG. 18. The staff member of the sales store X touches a button 603 arranged in a vicinity of the "battery" in the display screen to activate the QR code reader. When the staff member reads a QR code provided in advance on the battery 2 with the QR code reader (see FIG. 12), the battery number is registered in the store application, and the association between the store ID of the sales store X and the battery number is completed. The battery number is also associated with the communication address information, the vehicle body number, the vehicle model information, the vehicle ID, and the power unit number that are already associated with the store ID. After reading the QR code, the battery number is displayed on the screen in FIG. 18. The acquisition of the battery number is not limited to the reading of the QR code, and the number may be directly input and acquired by character input. In a case where a plurality of batteries are mounted on the electric bicycle 10, a plurality of battery numbers can be acquired. The order of step S150 and step S160 may be changed.

As described above, the store tablet 60 (the store application) acquires the store ID, the communication address information of the control circuit 40, the vehicle model information, the vehicle body number, the vehicle ID, the power unit number, and the battery number (hereinafter also simply referred to as vehicle information), and associates the information with each other. The acquisition of the vehicle information is performed by the acquisition unit 611 of the store tablet 60, and the association of the vehicle information is performed by the processing unit 612 of the store tablet 60. Accordingly, the sales store X which is the manufacturing entity, the managing entity, and the present owning entity of the electric bicycle 10 can appropriately manage the information on the electric bicycle 10 or the components constituting the electric bicycle 10, and information on the manufacturing entity, the managing entity, and the present owning entity of the electric bicycle 10 (that is, the store ID of the sales store X).

The store ID, the communication address information of the control circuit 40, the vehicle model information, the vehicle body number, the vehicle ID, the power unit number, and the battery number are stored in the store tablet 60. The information is transmitted from the store tablet 60 to the server 90 (see FIGS. 8 and 13) as vehicle information, and is also stored in the server 90. Therefore, the vehicle information of the electric bicycle 10 is appropriately managed by the store tablet 60 of the sales store X, and is also appropriately managed by the server 90.

After step S160, as illustrated in FIG. 12, based on the vehicle information acquired in the aforementioned steps and associated with each other, the store application inquires of the server 90 whether the combination is certified, that is, whether the vehicle is a certified vehicle.

When the server 90 receives the inquiry, the server confirms whether the inquired combination is a certified combination. When the vehicle is a certified vehicle, the server 90 transmits control parameters associated with the combination to the store application. When the vehicle is not a certified vehicle, a message indicating that the vehicle is not a certified vehicle is transmitted to the store application. In this way, it is possible to easily determine whether the electric bicycle 10 is a certified vehicle based on the vehicle information associated with each other.

The above control parameters will now be described. A combination of the vehicle body and each component (power unit, battery) certified and registered by the certification agency is registered, and control parameters for each combination are registered. When the combination of the vehicle body frame 67 and the motor M is a certified combination, the control parameters include specific information about the vehicle body frame 67 of the certified vehicle, such as the circumferential length Ct of the rear wheels 78, the number of teeth of the drive sprocket 80 and the driven sprocket 81, the gear ratio, and the like. Further, the control parameter includes information on the setting of the generated torque of the motor M according to the combination of the vehicle body frame 67 and the motor M. After the information on the setting of the generated torque of the motor M is written in the control circuit 40 as described later, it is used to determine the target torque that the control circuit 40 instructs the motor M.

Upon receiving the control parameters form the server 90, the store application establishes a BT connection with the control circuit 40 and writes the control parameters to the control circuit 40. The server 90 stores combination information. The staff member of the sales store X may also save a state of the installed electric bicycle 10 accordingly. The staff account of the staff member of the sales store X may be stored in association with the combination information or the like, and further the user information may be stored in association with the combination information or the like. Such information stored in the server 90 can be acquired from the store tablet 60, in which the store application is installed, at any time in response to a request.

(Installation Check Process)

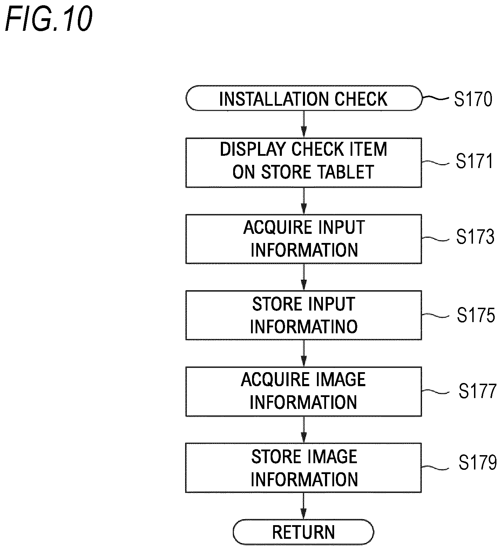

After the assist device is installed, the staff member of the sales store X performs an installation check of step S170 in FIG. 10.

In step S170, the staff member of the sales store X confirms whether the assist device is correctly installed to the electric bicycle 10 while performing the installation check of the assist device on the store application.

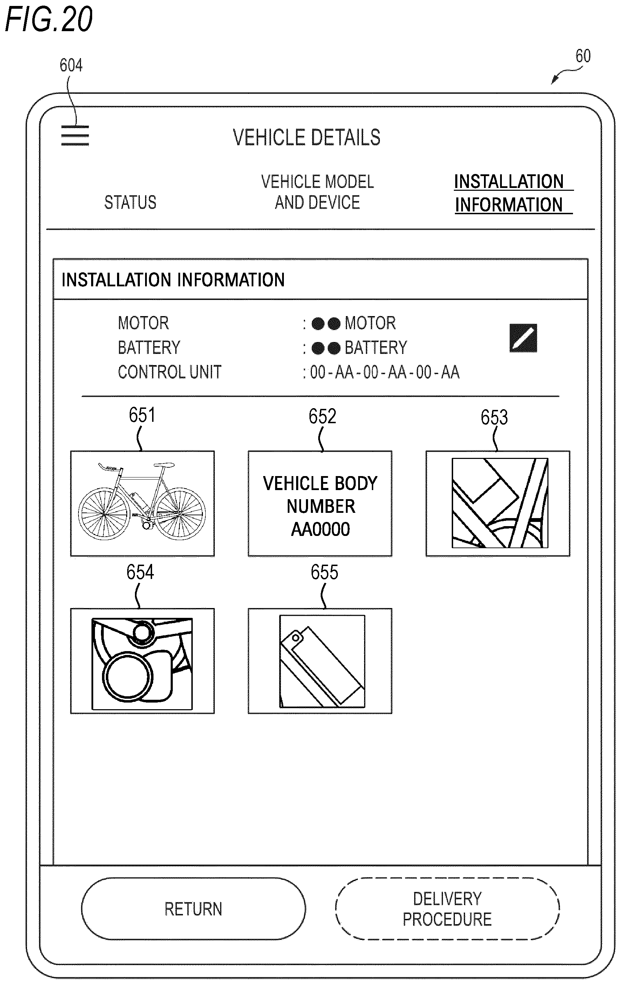

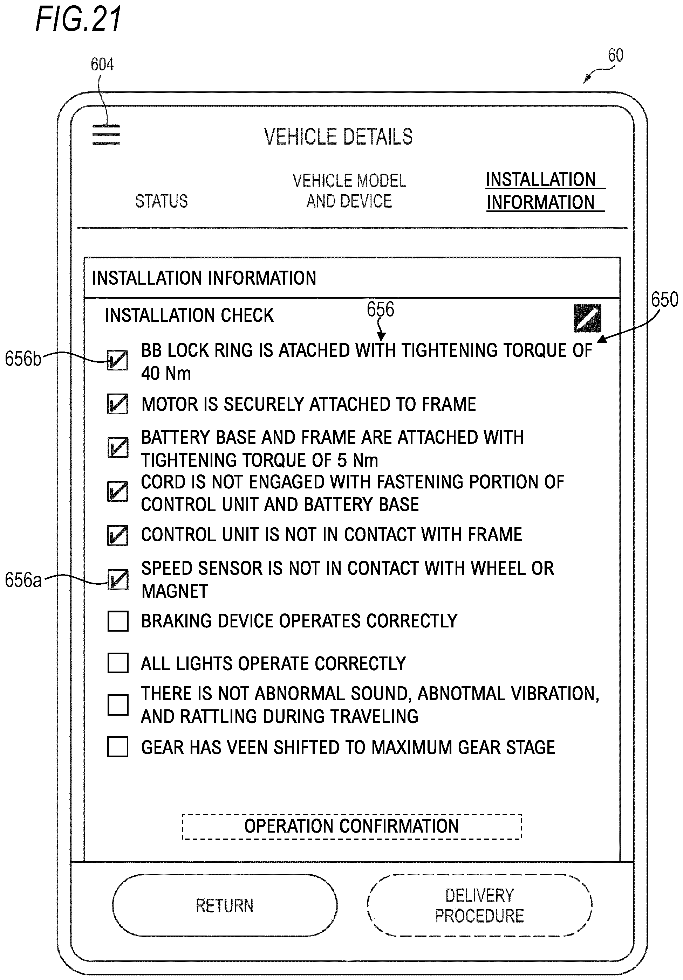

FIG. 20 and FIG. 21 are an installation check screen 650 displayed when the installation check is performed. The screen in FIG. 20 and FIG. 21 exists on the same page as the screen in FIG. 19, and is displayed when the screen in FIG. 19 is scrolled downward. The screen in FIG. 20 and FIG. 21 is also displayed when an "installation information" tab displayed on an upper part of the screen in FIG. 19 is selected.

The screen in FIG. 21 is a screen in which a plurality of check items 656 are displayed. When the installation check is performed, the display generation unit 613 generates information for displaying the check items 656 on the store tablet 60, and thus the check items 656 are displayed on the store tablet 60 (step S171). The check items 656 are information to be confirmed by the staff member with regard to the electric bicycle 10. For example, the following ten items are displayed as the check items 656.

1. "A BB lock ring is attached with a tightening torque of 40 Nm."
2. "The motor is securely attached to the frame."
3. "A battery base and a frame are attached with a tightening torque of 5 Nm."
4. "A cord is not engaged with a fastening portion of the control unit and the battery base."
5. "The control unit is not in contact with the frame."
6. "A speed sensor is not in contact with a wheel or a magnet."
7. "A braking device operates correctly."
8. "All lights operate correctly."
9. "There is no abnormal sound, abnormal vibration, and rattling during traveling."
10. "The gear has been shifted to the maximum gear stage."

As shown in the second item, the check items 656 include information on an installation state of the vehicle body frame 67 and the motor M. As shown in the third item, the check items 656 include information on an installation state of the vehicle body frame 67 and the battery unit 4. As shown in the fourth and fifth items, the check items 656 include information on an installation state of the control unit 39 (the control unit in FIG. 21) to the vehicle body frame 67. Thus, it is possible to confirm that the motor M, the battery unit 4, and the control unit 39 are properly installed to the electric bicycle 10. The tenth item is displayed only when the aforementioned switching transmission device 30 is present. The "maximum gear stage" refers to a gear stage that is the maximum gear ratio when the switching transmission device 30 is present. The item is to ensure that the operation check is performed at the maximum gear stage at the time of the operation confirmation to be described later.

The check items 656 are determined in advance by the product planner shown in FIG. 1, for example, and are registered in the store application or the server 90 in advance. The check items 656 are not limited to those determined in advance by the product planner, and additional items may be registered for each store.

The staff member of the sales store X proceeds the installation check according to the check items 656 displayed on the store tablet 60. The check item 656 has a check box 656a, which is information confirming that the staff member has confirmed the item to be checked. The staff member touches the screen and enters a check mark 656b in the check box 656a in accordance with the check box 656a displayed on the store tablet 60. Thus, the acquisition unit 611 of the store tablet 60 acquires the input information (input of the check mark 656b here) indicating that the staff member has confirmed the check items 656 (step S173).

The store tablet 60 stores the input information in the storage unit 620 (step S175). The store tablet 60 may transmit the input information to the server 90, which is an example of a remote device configured to communicate with the store tablet 60, and store it in the storage unit 920 of the server 90. Also, the store tablet 60 may transmit the input information to another remote device (e.g., another store tablet, PC, etc.) configured to communicate with the store tablet 60 and store it in the storage unit.

Next, the staff member of the sales store X images the electric bicycle 10 to which the assist device is installed by a camera mounted on the store tablet 60. Thus, the acquisition unit 611 of the store tablet 60 acquires image information of the electric bicycle 10 (step S177). Although the image information includes still images such as photographs and moving images, in the present embodiment, a case where the store tablet 60 acquires photographs as image information will be described.

FIG. 20 is a screen in which the image information is displayed in the installation check screens 650. The screen in FIG. 20 exists on the same page as the screen in FIG. 21 and is located before the screen in FIG. 21. That is, when the screen in FIG. 21 is scrolled upward (Specifically, touch and hold the screen while swiping down), the screen in FIG. 20 is displayed. As shown in FIG. 20, the image information includes, for example, a photograph 651 of the entire electric bicycle 10 such that the body frame 67 and the motor M (power unit 20) are appear in the same angle of view, a photograph 652 of the body number indicated on the body frame 67, a photograph 653 around the control circuit 40 (control unit 39), a photograph 654 around the motor M (power unit 20), and a photograph 655 around the battery 2 (battery unit 4). The image information is not limited to these, and may include a photograph of the power unit number indicated on the power unit 20. Furthermore, the image information may include a photograph containing a user ID displayed on the user's mobile terminal 8, a photograph containing an ID card containing a staff account of a staff member who performed the installation of the assist device, and the like.

The acquisition unit 611 of the store tablet 60 acquires the image information and stores the image information in the storage unit 620 (step S179). In this way, the state of the electric bicycle 10 after the installation of the assist device can be imaged and stored, and the electric bicycle 10 can be appropriately managed from a visual viewpoint. Similarly to the input information, the acquisition unit 611 of the store tablet 60 may transmit the image information to the server 90, which is an example of a remote device configured to communicate with the store tablet 60, and store it in the storage unit 920 of the server 90. Also, the store tablet 60 may transmit the image information to another remote device configured to communicate with the store tablet 60 and store it in its storage unit.

When the image information is stored, the processing unit 612 of the store tablet 60 may store the image information in the storage unit 620 in a state where the image information is associated with the identification information of the imaged object. For example, the processing unit 612 of the store tablet 60 may store the photograph 654 around the power unit 20 in a state that it is associated with the power unit number acquired in step S150.

In the present embodiment, after inputting and storing the check items 656 (Step S173, S175), the image information of the electric bicycle 10 is acquired and stored (Step S177, S179), but the order may be reversed. The screen in FIG. 20 may be displayed below the screen in FIG. 21.

(Operation Confirmation Process)

When the control unit 610 of the store tablet 60 determines that the installation check of step S170 (checking all check items 656 and saving photos) is completed, the "operation check" button displayed on the lower side in FIG. 21 is switched to a selectable state. After the "operation confirmation" button is selected, the operation confirmation process starts (step S 180). In the operation confirmation process, the staff member of the sales store X inputs power to the crank pedal 79 as described later, so that the sensors SE1 to SE4 and the control circuit 40 of the electric bicycle 10 execute the steps S182 to S184 described later. Then, the display generation unit 613 of the store tablet 60 displays the information obtained in each step on the store tablet 60, and the staff member of the store X confirms the information displayed on the store tablet 60 on the store application to confirm whether the electric bicycle 10 operates correctly. On the other hand, when the installation check is not completed, the control unit 610 of the store tablet 60 maintains the "operation check " button in an unselectable state. In other words, the operation confirmation process is permitted to be executed when all the check marks 656b are entered in the check boxes 656a, and is prohibited to be executed when the check marks 656b are not entered in at least one check box 656a.

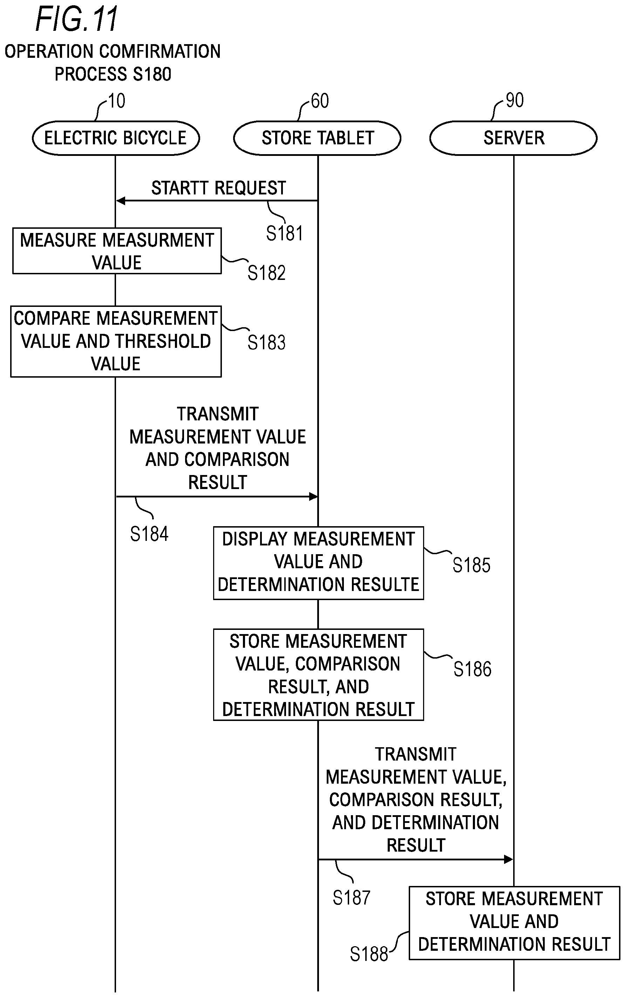

The operation confirmation process (step S180) will now be described in detail with reference to FIG. 11.

In the operation confirmation process, when the installation check is completed, the store application makes BT connection with the control circuit 40, makes a start request to the control circuit 40, and turns on the power of the control circuit 40 (step S181).

The control circuit 40 energizes the power unit 20 and the battery 2 to self-diagnose the existence of an error, and transmits the diagnosis result to the store application. The store application displays an error number when there is an error, and displays the operation confirmation item 661 described later on the store tablet 60 when there is no error. When the staff member of the sales store X rotates the crank pedal 79 by hand with the rear wheel 78 afloat or rotates the crank pedal 79 by an on-base testing machine to input power to the crank pedal 79, the sensors SE1 to SE4 and the control circuit 40 of the electric bicycle 10 execute steps S182 to S184, which will be described later. It should be noted that the staff member of the sales store X may input power to the crank pedal 79 by actually running the electric bicycle 10 within the range where the store tablet 60 and the control circuit 40 are BT-connected.

When the operation confirmation starts, the motor M starts to be driven with the rotation of the crank pedal 79, and the assist force of the motor M is generated. That is, the electric bicycle 10 is in a state in which the rear wheel 78 is driven by the motor M in which the assist force is generated. In this state, the sensors SE1 to SE4 installed on the electric bicycle 10 measure at least one measurement value measured through the operation of the electric bicycle 10 (step S182). The measured values include not only the rotational speed of the motor M, the pedal torque value Tq, the rotational speed of the rear wheel 78, and the cadence C obtained directly from the sensors SE1 to SE4, respectively, but also those obtained indirectly from the measured values through calculation by the control circuit 40. For example, the measured value includes the vehicle speed V [km/h] of the electric bicycle 10, the output P_motor [W] of the motor M, the output torque Tq_motor [N · m] of the motor M, the output P_pedal [W] of the crank pedal 79, and the gear stage (transmission ratio) of the switching transmission 30.

The vehicle speed V is calculated, for example, from the above formula (1). The output P_motor [W] and the output torque Tq_motor [N · m] of the motor M are calculated, for example, based on a value of the current flowing through the motor M, a value of the voltage applied to the motor M, and a rotation speed of the motor M. The output P_pedal of the crank pedal 79 is expressed by the following formula (8).

$$P\_pedal[W]=2\pi \times Tq[N \cdot m] \times C[rpm]/60 \ (8)$$

The gear ratio is obtained by calculating the combined gear ratio Rc from the above formula (6).

The measured value includes the remaining capacity (also called State of Charge: SOC) or the degradation amount (also called State of Health: SOH) as the state amount of the battery 2. For example, the SOC of the battery 2 is calculated by the control circuit 40 based on a current value obtained from a current sensor or the like (not shown) provided in the battery unit 4. For example, the SOH of the battery 2 is calculated by the control circuit 40 based on the internal resistance measured and stored in a memory (not shown) provided in the battery unit 4.

After measuring the measured value, the control circuit 40 compares the measured value with a determination threshold value corresponding to the measured value (step S183). The determination threshold value is a predetermined value. In step S183, a comparison result of whether the measured value is larger than the corresponding determination threshold value (In other words, whether the measured value is within the normal range) is obtained.

The control circuit 40 transmits the measured value, the determination threshold value, and the comparison result obtained in steps S182 and S183 to the store tablet 60 via the BLE unit 44 (step S184), and the acquisition unit 611 of the store tablet 60 acquires the measured value, the determination threshold value, and the comparison result. Here, the transmission from the control circuit 40 to the store tablet 60 may be carried out not through the BLE unit 44 installed in the electric bicycle 10 but through the portable terminal 8 attached to the portable terminal holder 6 or held by the user.

The display generation unit 613 of the store tablet 60 generates display information for displaying at least one of measurement values, comparison results, and determination results based on the comparison results on the store tablet 60, and displays the display information on the store tablet 60 (step S185).

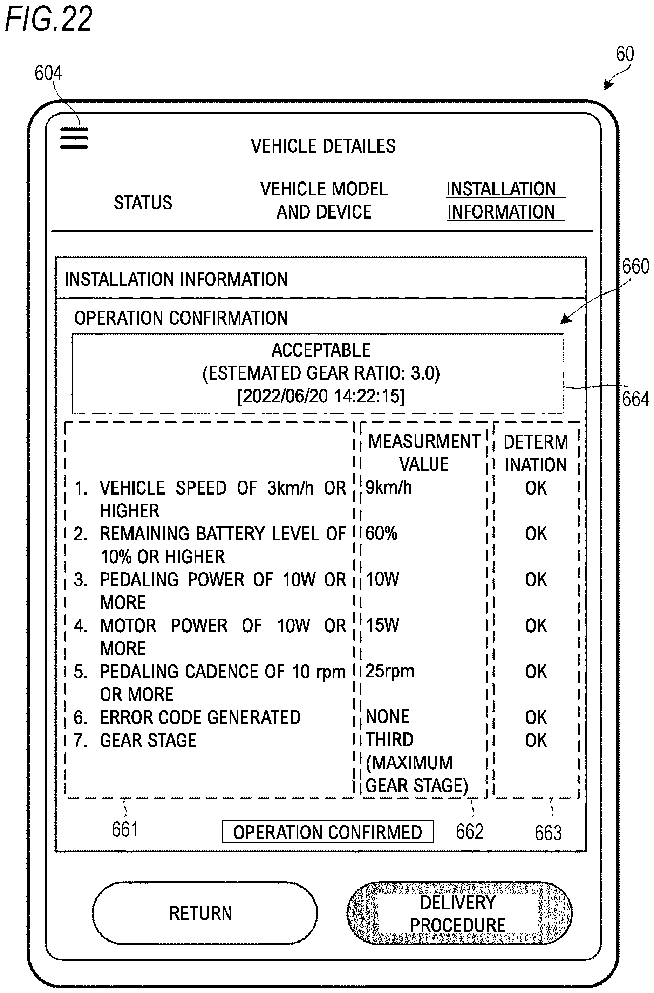

FIG. 22 is an operation confirmation screen 660 displayed when confirming the operation of the electric bicycle 10. The screen in FIG. 22 exists on the same page as the screens in FIGS. 19 to 21, and is displayed when the screen in FIG. 21 is scrolled down. That is, the operation confirmation screen 660 is displayed below the installation check screen 650. In an example of the operation confirmation screen 660 shown in FIG. 22, the following seven operation confirmation items 661 are displayed on the store tablet 60 as operation confirmation.

1. "A vehicle speed of 3 km/h or higher"
2. "A remaining battery level of 10% or more"
3. "Pedaling power of 10 W or more"
4. "Motor power of 10 W or more"
5. "Pedaling cadence of 10 rpm or more"
6. "Error code generated"
7. "Gear stage"

In the present embodiment, in the operation confirmation process of the electric bicycle 10, each sensor installed on the electric bicycle 10 measures a plurality of measured values. Specifically, the vehicle speed V, the remaining capacity SOC of the battery 2, the output P_pedal of the crank pedal 79 ("pedaling power " in FIG. 22), the output P_motor of the motor M (" motor power " in FIG. 22), the cadence C ("pedaling cadence " in FIG. 22), and the gear stage are measured as measured values. A corresponding determination threshold value is predetermined for each measurement value, and the control circuit 40 compares the measurement value with the determination threshold value. It is also checked whether an error has occurred in the operation confirmation process.

In the operation confirmation screen 660, seven operation confirmation items 661 displayed together with the determination threshold value, a measurement value 662 of each operation confirmation items 661, and a determination result 663 of each operation confirmation items 661 are displayed. The determination result 663 indicates, for example, whether or not the operation of each component is normal based on the comparison result of each item, and when "OK " is displayed as shown in FIG. 22, it indicates that the operation is normal. On the other hand, when "NG " is displayed as the determination result 663, for example, it indicates that the operation is abnormal. The display generation unit 613 may display the comparison result (That is, whether the measured value is greater than the determination threshold value) on the store tablet 60.

When the respective measurement values 662 satisfy the respective corresponding determination threshold values in all of the operation check items 661 and thus "OK " (i.e., normal) is obtained for the determination result 663 of each of the operation check items 661 within a predetermined time period from the time when the" operation confirmation" button in FIG. 21 is selected, an overall determination result 664, which is the overall determination result of the operation confirmation, becomes "passed". On the other hand, when "NG " is displayed in at least one operation confirmation item 661, the overall determination result 664 becomes "fail", and the store application displays an error code or prompts the operation correction or parts replacement.

As described above, in the management method of the present embodiment, since the measurement value 662 measured in the state where the rear wheel 78 is driven by the motor M is compared with the determination threshold value corresponding to the measurement value 662, it is possible to grasp whether or not the assist device attached to the vehicle body frame 67 operates normally, and the state of the electric bicycle 10 can be appropriately managed. In particular, in the present embodiment, the store tablet 60 displays the overall determination result 664 based on the comparison result between the respective measurement values 662 and the corresponding respective determination thresholds, so that a highly reliable result can be obtained regarding the state of the electric bicycle 10 after the installation of the assist device.

After displaying the measured values 662, the determination threshold values, the determination results 663, and the overall determination result 664 on the store tablet 60, the store tablet 60 stores the measured values 662, the comparison results, the determination results 663, and the overall determination result 664 in the storage unit 620 (step S 186). The store tablet 60 may also transmit the measured values 662, the comparison results, the determination results 663, and the overall determination result 664 to the server 90 (step S187) and store them in the storage unit 920 (step S188).

Here, the store application preferably displays the date and time when the determination was made together with the overall judgment result 664. In addition, the store application may display the gear ratio (estimated gear ratio) calculated in the operation confirmation process together with the display of the overall determination result 664 or separately from the display of the overall determination result 664.

The estimated gear ratio is the composite gear ratio Rc calculated according to the equation (5) when the gear ratio Rg between the drive sprocket 80 and the driven sprocket 81 and the gear ratio Rt of the switching transmission device 30 are known. In addition, the estimated gear ratio may be the composite gear ratio Rc calculated according to the equation (6), instead of the equation (5), based on the rotation speed of the motor M detected by the motor rotation speed sensor SE1 in actual traveling and the rotation speed of the rear wheel 78 detected by the rear wheel rotation speed sensor SE3, or may be the composite gear ratio Rc calculated in the bench test. The composite gear ratio Rc is acquired by the control circuit 40 when the maximum gear stage is set. The composite gear ratio Rc calculated as described above is also referred to as a reference composite gear ratio Rc1, that is, the estimated gear ratio displayed in FIG. 17 is the reference composite gear ratio Rc1.

As information to be compared with the reference composite gear ratio Rc1, during traveling of the electric bicycle 10 after delivering to the user, the control circuit 40 calculates the composite gear ratio Rc according to the equation (6) based on the rotation speed of the motor M detected by the motor rotation speed sensor SE1 and the rotation speed of the rear wheel 78 detected by the rear wheel rotation speed sensor SE3 at all times or at a predetermined cycle. The composite gear ratio Rc is referred to as a present composite gear ratio Rc2. The present composite gear ratio Rc2 is a gear ratio detected without using the reference composite gear ratio Rc1, and may be calculated according to an equation obtained by modifying the equation (7) using another method (for example, a GPS, a cycle computer, or the like to be described later). It is preferable that the present composite gear ratio Rc2 is the gear ratio in the gear stage (the maximum gear stage) having the largest gear ratio. By comparing the reference composite gear ratio Rc1 with the present composite gear ratio Rc2, it is possible to manage a failure after the installation, which may cause the regulation non-compliance state, or remodeling and improvement after the installation, which may cause the regulation non-compliance state.

In the case of a certified vehicle, since an assumed gear ratio (a gear ratio registered in advance in the server 90) can be obtained, it is possible to compare the estimated gear ratio with the assumed gear ratio and confirm whether the estimated gear ratio is the same as the assumed gear ratio by confirming the estimated gear ratio (the reference composite gear ratio Rc1) displayed in FIG. 22. In the case of a certified vehicle, the gear ratio (the estimated gear ratio) calculated by rotation in idle and the assumed gear ratio should be the same value. Accordingly, probability of the estimated gear ratio can be improved, and it is possible to more accurately compare the reference composite gear ratio Rc1 and the present composite gear ratio Rc2 after delivery of the electric bicycle 10.

The store application transmits the operation confirmation result and the estimated gear ratio to the server 90, and the server 90 stores the operation confirmation result and the estimated gear ratio. When the operation confirmation is completed, the server 90 registers the electric bicycle 10 as an inspected electric bicycle.

It is also possible to optionally change the entity performing the steps S181 to S188. For example, step S183 for comparing the measured value with the determination threshold value may be executed not by the control circuit 40 but by the control unit 610 of the store tablet 60 or the control unit 910 of the server 90.

When the operation confirmation is completed, the "delivery procedure" button displayed in the lower part of the vehicle detail screen in FIGS. 19 to 22 can be selected. That is, after it is determined that the state of the electric bicycle 10 to which the assist device is installed is normal based on the result of the determination in the operation confirmation process, the procedure for delivering the electric bicycle 10 from the sales store X to the user becomes possible.

(Delivery Process)

Returning to FIG. 8, after step S180, the store tablet 60 performs a delivery procedure of the electric bicycle 10 from the sales store X to the user (step S190). The delivery procedure is a procedure for changing the owning entity of the electric bicycle 10 from the sales store X to the user. The change from the sales store X of the owning entity of the electric bicycle 10 to the user can be regarded as transferring the ownership of the electric bicycle 10 from the sales store X to the user.

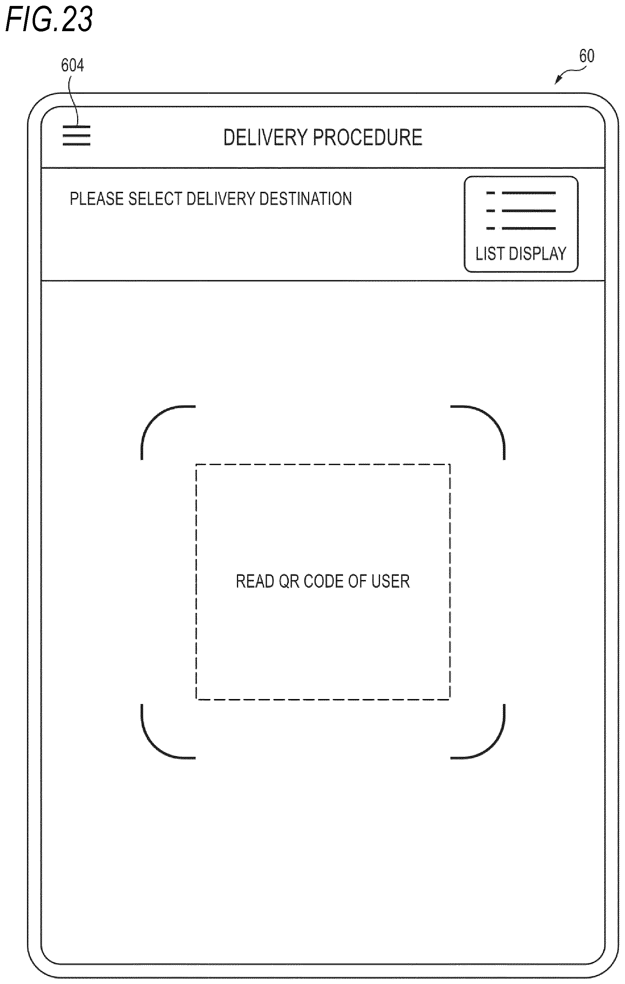

After the completion of the operation confirmation in step S180, the staff member of the sales store X selects the "delivery procedure" button displayed in the vehicle detail screen in FIGS. 19 to 22. When the "delivery procedure" button is selected, as illustrated in FIG. 23, the QR code reader is activated. The staff member of the sales store X reads the QR code including the user information displayed on the portable terminal 8 (the user application) of the user as a delivery destination with the store tablet 60, and acquires the user information including the user ID. The method of acquiring the user information is not limited to the method using the QR code. For example, on an upper part of the screen in FIG. 23, a "list display" button for displaying a list of users (for example, customers with past transaction) already registered in the store application of the sales store X is displayed. The staff member of the sales store X may select the "list display" button and select a user as a delivery destination from the user list displayed on the screen to acquire the user information of the delivery destination.

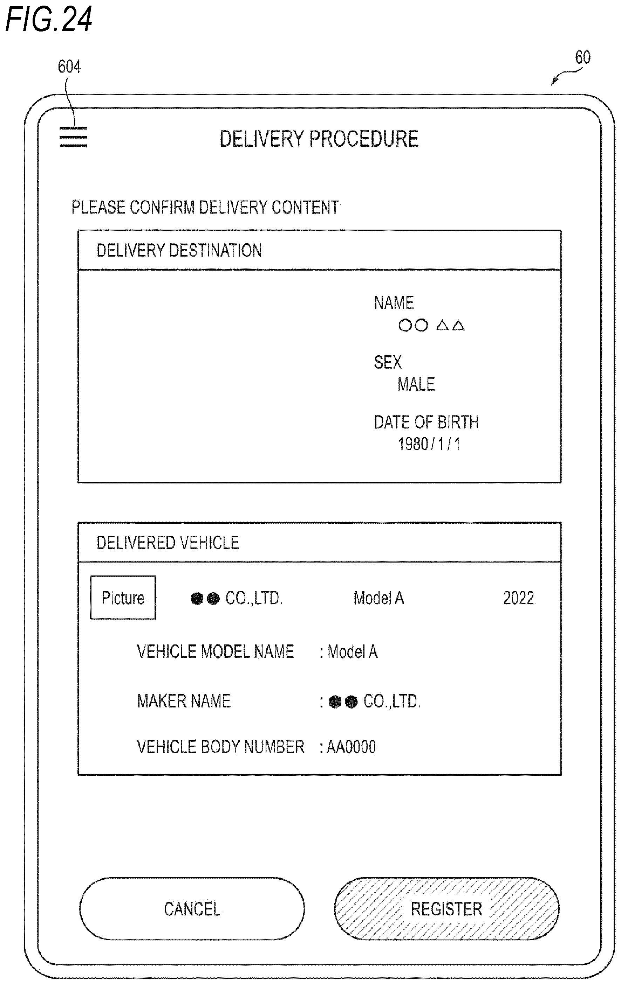

When the user information is acquired, a screen for confirming a delivery content is displayed before delivery registration as illustrated in FIG. 24. The user information of the user as the delivery destination of the electric bicycle 10 is displayed on an upper side of the confirmation screen, and the vehicle information of the electric bicycle 10 as a delivered vehicle is displayed on a lower side of the screen. The staff member of the sales store X confirms that the information on the delivered vehicle and the user information of the delivery destination is correct, and selects the "register" button at the bottom of the screen.

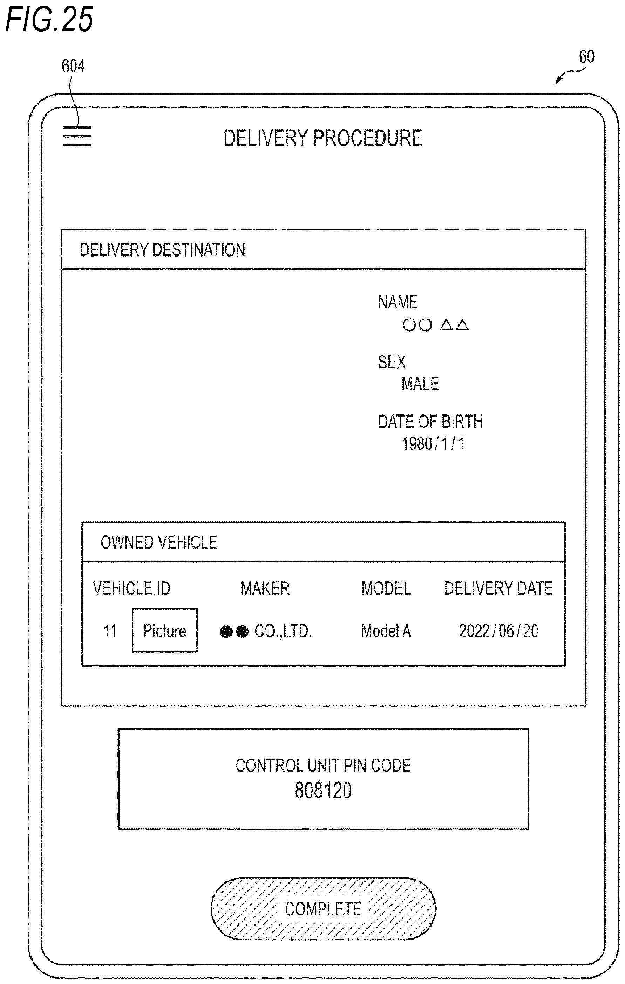

FIG. 25 is a screen displayed after the "register" button in FIG. 24 is selected. When the "register" button is selected, the fact that the owning entity of the electric bicycle 10 is changed from the sales store X to the user is stored in the store tablet 60, and the owning entity is updated. Furthermore, the store tablet 60 transmits a change content of the owning entity to the server 90, and the server 90 stores the change content and updates the owning entity. More specifically, the store tablet 60 and the server 90 store release of the association between the vehicle ID and the store ID of the electric bicycle 10 and new association between the vehicle ID and the user ID. The portion in which the owning entity in the vehicle information stored in the server 90 is changed from the sales store X to the user may be an aspect in which the ownership of the electric bicycle 10 stored in the server 90 is transferred from the sales store X to the user.

When the owning entity is updated, a new PIN code of the control circuit 40 is transmitted from the store tablet 60 (the store application) to the control circuit 40 and the server 90, and the control circuit 40 and the server 90 update PIN code information of the control circuit 40. As illustrated in FIG. 25, a new PIN code is displayed on the store tablet 60. Even if the communication between the server 90 and the store tablet 60 becomes unstable and the server 90 is unable to update the PIN code information in the delivery procedure, the staff member of the sales store X can perform the communication between the store tablet 60 and the control circuit 40 by confirming the new PIN code displayed on the store tablet 60.

As described above, the store tablet 60 (the store application) can associate the vehicle ID with the store ID or associate the vehicle ID with the user ID, thereby changing the owning entity of the electric bicycle 10 and appropriately managing the electric bicycle 10 together with the owning entity.

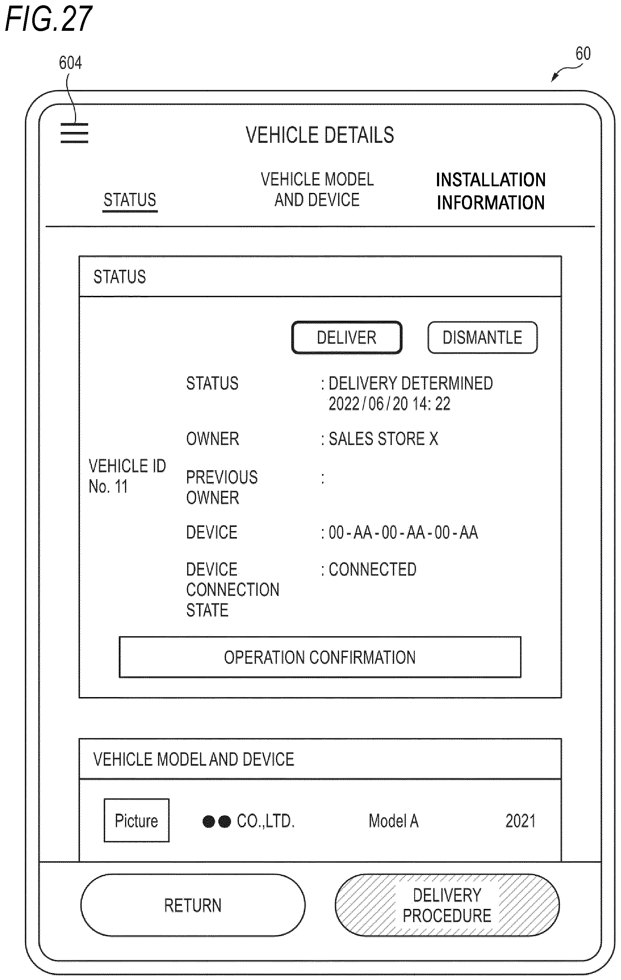

In the above description, on the screen in FIG. 22 after the operation confirmation of the electric bicycle 10 is completed, the "delivery procedure" button is selected to perform the delivery procedure, but the method of proceeding to the delivery procedure is not limited thereto. When the time from the completion of the operation confirmation to the delivery procedure to the user becomes available, for example, the screen of the store application may be moved from the screen in FIG. 22 in order to perform work on another vehicle. In such a case, when performing the delivery procedure to the user, the staff member of the sales store X first selects an "owned vehicle" button from the store menu illustrated in FIG. 30, and displays a screen illustrated in FIG. 26 in which the vehicles owned by the sales store X are listed. The staff member then selects the electric bicycle 10 to be delivered to the user from the owned vehicle list. After the electric bicycle 10 is selected, a BT connection is established between the store tablet 60 and the control circuit 40 of the electric bicycle 10. After the BT connection, a screen (same as the "vehicle details" screen in FIGS. 19 to 22) as illustrated in FIG. 27 is displayed, and the vehicle information of the electric bicycle 10 is displayed. By selecting the "delivery procedure" button or the "deliver" button on the screen in FIG. 27, the QR code reader of FIG. 23 is activated. After the QR code reader is activated, the store tablet 60 performs the delivery procedure of the electric bicycle 10 in the same manner as described above.

Here, the owned vehicle list screen in FIG. 26 will be described in detail. As described above, when the vehicle ID of the electric bicycle 10 is associated with the store ID of the sales store X in step S 140, the electric bicycle 10 is registered as a vehicle owned by the sales store X.

On the owned vehicle list screen, the vehicle IDs of the owned vehicles and vehicle information associated with the vehicle IDs (for example, communication address information of the control circuit 40) are displayed, and in addition, a status of each of the owned vehicles is also displayed. The status of the owned vehicle indicates the status of the owned vehicle before delivery from the installation of the assist device, and is divided into four statuses A, B, C, and D. The status A means a status in which the steps up to step S140 in FIG. 9 are completed, that is, a status in which the vehicle ID is given. The status B means a status in which the steps up to step S 160 are completed, that is, a status in which the installation of the assist device to the electric bicycle 10 is completed. The status C means a status in which the steps up to step S 170 are completed, that is, a status in which the installation check is completed. The status D means a status in which the steps up to step S 180 are completed, that is, a status in which the operation confirmation of the electric bicycle 10 is completed and the delivery is possible.

In the owned vehicle list screen in FIG. 26, the status is displayed in association with each vehicle ID. Specifically, in a status column of each vehicle, the characters A to D are displayed, and for example, the status of a vehicle whose vehicle ID is No. 10 is the status B, in which a status character corresponding to the vehicle is emphasized (for example, colored or made larger). In an example of the screen in FIG. 26, when the status of the vehicle is the status D, the status column is displayed as "delivery possible". Since the status is displayed for each vehicle on the owned vehicle list screen, it is possible to easily confirm the status of the owned vehicles of the sales store X, and for example, it is possible to easily confirm which vehicle can be delivered. Therefore, the sales store X can easily manage the owned vehicles owned by the store.

A "search" button is displayed on the owned vehicle list screen in FIG. 26. When the staff member of the sales store X selects the "search" button, the staff member can set, for example, conditions based on the status of the vehicle, a registration date registered as the owned vehicle, the vehicle model information, and the like, and extract vehicles matching the conditions from the plurality of owned vehicles. Accordingly, when there are many owned vehicles, the staff member can easily extract a target vehicle.

(Pick-Up Process)

The management method of the electric bicycle 10 described above includes step S 190 of performing the delivery procedure of the electric bicycle 10 from the sales store X to the user. In addition to this, the management method may further include a step of performing a procedure of picking up the electric bicycle 10 from the user. In other words, a pick-up procedure is a procedure for delivering the electric bicycle 10 from the user to the sales store X, and is a procedure for changing the ownership of the electric bicycle 10 in which the owning entity of the electric bicycle 10 is changed from the user to the sales store X.

When the user visits the sales store X, the staff member of the sales store X first operates the store tablet 60 to select "user search" from the store menu illustrated in FIG. 30. When the "user search" is selected, the QR code reader is activated. The staff member reads the QR code including the user information displayed on the portable terminal 8 (the user application) of the user who is the owning entity of the electric bicycle 10 with the store tablet 60, and acquires the user information including the user ID. The method of acquiring the user information is not limited to the method using the QR code. For example, when the "list display" button for displaying a list of users (customers) already registered in the store application is displayed as in the screen in FIG. 23, the staff member may select the "list display" button and select the user who is the owning entity of the electric bicycle 10 from the displayed user list to acquire the user information.

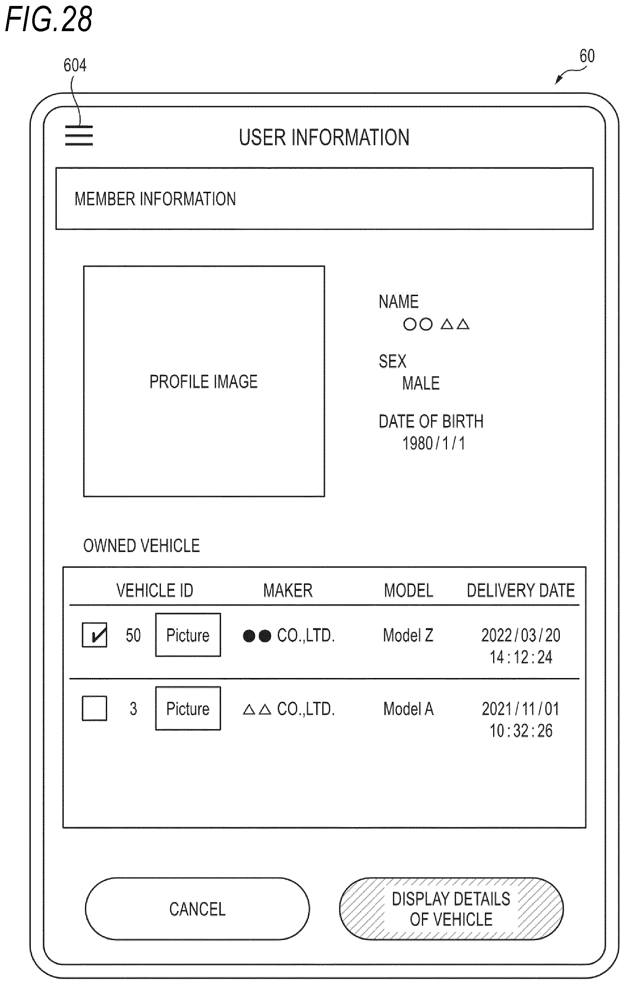

When the user information is acquired, a user information screen is displayed on the store tablet 60 as illustrated in FIG. 28. A vehicle to which a vehicle ID is given is displayed on the user information screen. When the user owns a plurality of vehicles to which the vehicle IDs are given, the plurality of vehicles are displayed. The staff member of the sales store X selects a vehicle to be picked up from the owned vehicles of the user, and selects a "display vehicle details" button displayed at the bottom of the screen.

When the "display vehicle details" button is selected, the store tablet 60 and the control circuit 40 of the electric bicycle 10 communicate with each other by the BT connection. At this time, the store tablet 60 transmits the vehicle ID of the electric bicycle 10 to the server 90, and upon receiving the vehicle ID, the server 90 transmits the PIN code of the control circuit 40 of the electric bicycle 10 stored in the server 90 to the store tablet 60. After the PIN code is input to the store tablet 60, the connection between the store tablet 60 and the control circuit 40 is completed.

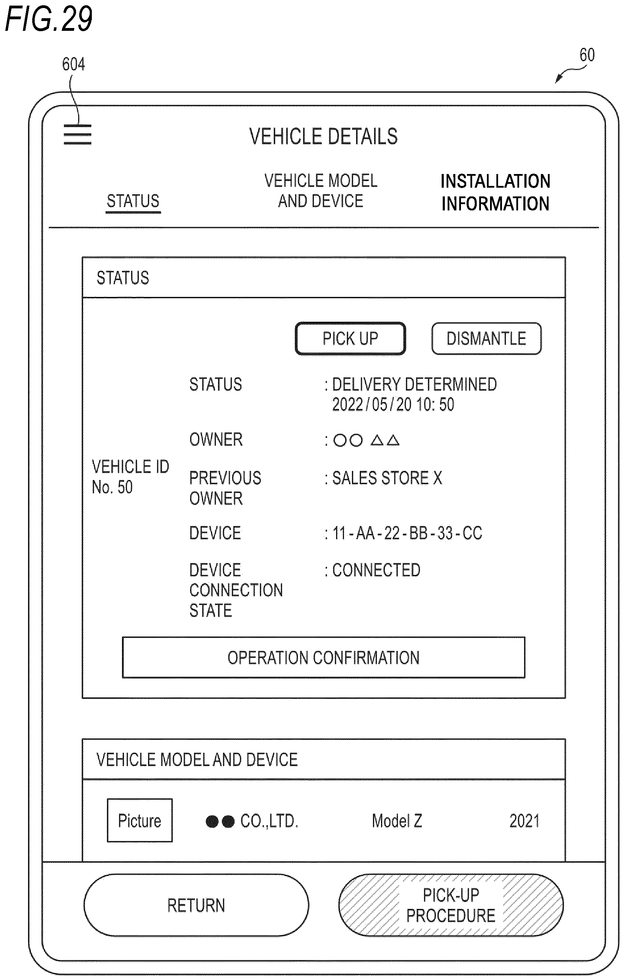

After the "display vehicle details" button is selected, the vehicle detail screen is displayed on the store tablet 60 as illustrated in FIG. 29. When the connection between the store tablet 60 and the control circuit 40 is completed, a "pick-up procedure" button and a "pick up" button can be selected on the screen in FIG. 29. By selecting the "pick-up procedure" button or the "pick up" button, the fact that the owning entity of the electric bicycle 10 is changed from the user to the sales store X is stored in the store tablet 60 (the store application), and the owning entity of the electric bicycle 10 is updated. Furthermore, the store tablet 60 transmits the change content of the owning entity to the server 90, and the server 90 stores the change content and updates the owning entity of the electric bicycle 10. When the server 90 stores the change in the owning entity, the pick-up procedure of the electric bicycle 10 is completed. After the completion of the pick-up procedure of the electric bicycle 10, an owned vehicle list (see FIG. 26) of the sales store X on the store application is updated, and an owned vehicle list of the user (see FIG. 28) is also updated.

The change in the owning entity from the user to the sales store X in the pick-up procedure may be temporary. For example, when an abnormality occurs in the electric bicycle 10 owned by the user and requests the sales store X to repair the electric bicycle 10, the sales store X may temporarily change the owning entity of the electric bicycle 10 from the user to the sales store X according to the aforementioned method. When the owning entity of the electric bicycle 10 is changed to the sales store X, the staff member of the sales store X can select an "operation confirmation" button displayed at the center of the screen on the screen in FIG. 29. The staff member can perform the operation confirmation of the electric bicycle 10 based on operation confirmation items 661 displayed on the store tablet 60, and can confirm and repair the abnormality of the electric bicycle 10. After the repair or the like of the electric bicycle 10 is completed, the owning entity of the electric bicycle 10 is again changed from the sales store X to the user.

The vehicle management method described in the above embodiment can be realized by, for example, executing a management program prepared in advance by a computer (That is, the control unit 610 of the store tablet 60 to be described later, the control unit 910 of the server 90 to be described later, and/or the control circuit 40 of the electric bicycle 10). The management program is stored in a computer-readable storage medium, and is executed by being read from the storage medium. In addition, the management program may be provided in a form stored in a non-transitory storage medium such as a flash memory, or may be provided via a network such as the Internet.

(Modified example 1)

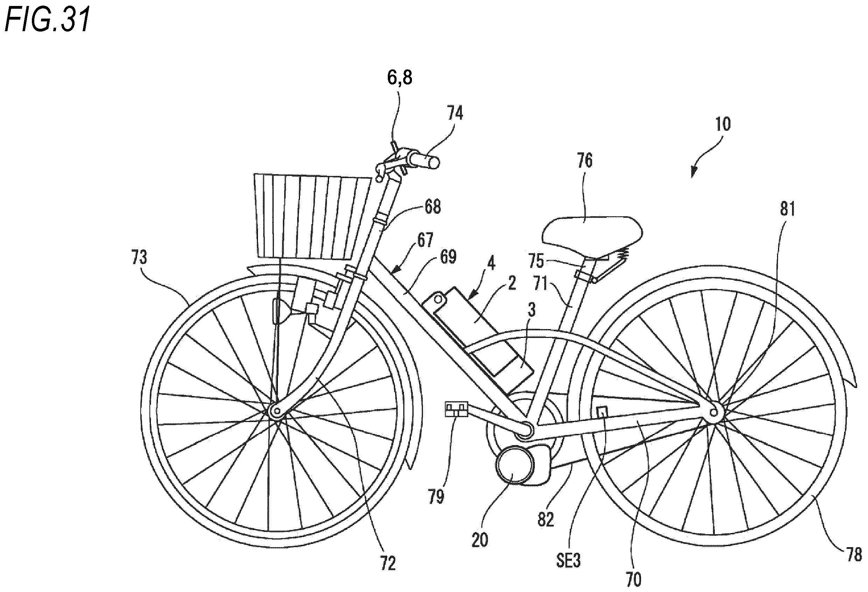

In the above-described embodiment, a sports cycle type bicycle as shown in FIG. 3 is shown as the electric bicycle 10, but is not limited thereto. For example, the electric bicycle 10 may be a city cycle type as shown in FIG. 31.

(Modified example 2)

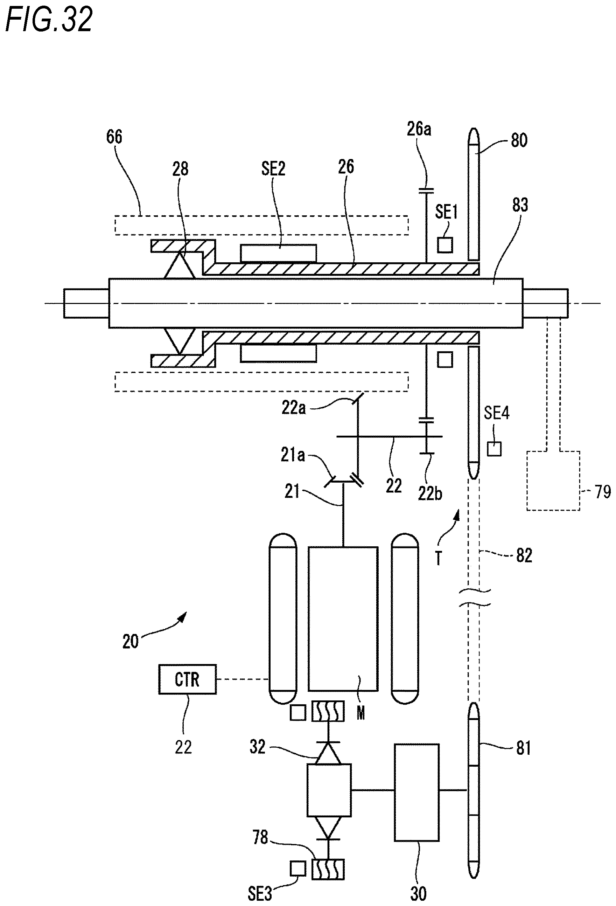

In the power unit 20 of the above-described embodiment, the output shaft 21 of the motor M and the crankshaft 83 are arranged in parallel, but as a modified example shown in FIG. 32, the output shaft 21 of the motor M may be arranged perpendicular to the crankshaft 83. The power of the motor M is transmitted to the idle shaft 22 by, for example, a bevel gear mechanism. The idle shaft 22 is provided with a bevel gear 22a meshing with the motor output gear 21a and a relay gear 22b meshing with the driven gear 26a.

(Modified example 3)

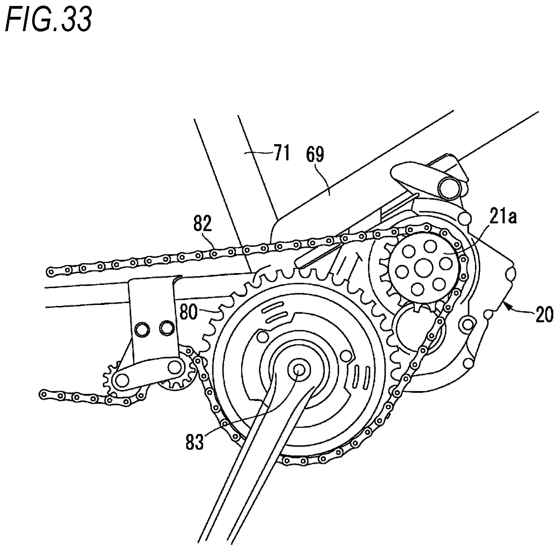

As shown in FIG. 33, the power transmission mechanism T may be configured such that the chain 82 is wound around the drive sprocket 80, the motor output gear 21a of the motor M, and the driven sprocket 81 provided on the axle of the rear wheel 78, and the power of the motor M is directly transmitted to the chain 82.

Although the embodiment has been described above with reference to the drawings, it is needless to say that the present invention is not limited to such an example. It is apparent that those skilled in the art can conceive of various modifications and alterations within the scope described in the claims, and it is understood that such modifications and alterations naturally fall within the technical scope of the present invention. In addition, respective constituent elements in the above embodiment may be freely combined without departing from the gist of the invention.

Although the management method of the above embodiment is applied to a completed vehicle in which an assist device is retrofitted to a new non-electric bicycle (in other words, a non-electric bicycle before use) at a sales store, it is not limited to this, but can also be applied to a completed vehicle in which an assist device is retrofitted to a non-electric bicycle (In other words, a non-electric bicycle in use) after sales. Specifically, as shown in FIG. 34, when the user purchases a new non-electric bicycle from the dealer A and the user wishes to electrify the non-electric bicycle in use, the user brings the non-electric bicycle to the dealer B and requests the dealer B to electrify the non-electric bicycle. The management method described above can be applied to a completed vehicle retrofitted with an assist device at dealer B.

The control method of the above embodiment can also be applied to a completed vehicle manufactured in a factory where an assist device is installed at the same site where the vehicle body is manufactured (That is, finished vehicle factory for electric bicycle). In other words, even if the time interval between the manufacture of the vehicle body and the installation of the assist device is short, the control method described above can be applied to the completed vehicle.

In the above embodiment, the electric bicycle 10 is exemplified as the vehicle, but the present invention is not limited thereto, and may be a three-wheeled vehicle or a four-wheeled vehicle other than a two-wheeled vehicle.

In the above embodiment, the control circuit 40 has been described as having a configuration that mainly controls the motor M, but is not limited thereto. For example, the control circuit 40 may be configured to control various components (for example, the battery 2, the GNSS unit 43, and the BLE unit 44) mounted on the electric bicycle 10, that is, the control circuit 40 may control at least one of the electric bicycle 10 and the motor M.

In the above embodiment, the store tablet 60 (the store application) acquires the store ID, the communication address information of the control circuit 40, the vehicle model information, the vehicle body number, the vehicle ID, the power unit number, the battery number, and the user ID and associates the information with each other, but the present invention is not limited thereto. The store tablet 60 (the store application) may acquire any two of the store ID, the communication address information, the vehicle model information, the vehicle body number, the vehicle ID, the power unit number, the battery number, and the user ID as first identification information and second identification information, and associate the first identification information with the second identification information. For example, by associating the identification information of at least two parts (the control circuit 40, the vehicle body frame 67, the power unit 20, the battery unit 4), it is possible to manage that at least two parts are physically attached. Specifically, by associating the communication address information of the control circuit 40 with the vehicle body number of the vehicle body frame 67, it is possible to manage that the control circuit 40 and the vehicle body frame 67 are physically attached. Further, for example, by associating the identification information of the entity of manufacturing or others with the identification information of the parts, it becomes easier to manage than when the two are managed separately. Specifically, by associating the store ID of the sales store X with the communication address information of the control circuit 40, it becomes easier to manage than when the two are managed separately. The store tablet 60 may associate the store ID, the communication address information, the vehicle model information, the vehicle body number, the vehicle ID, the power unit number, the battery number, and the user ID with the store tablet information which is the identification information of the store tablet 60.

In the above embodiment, the owning entity of the electric bicycle 10 is changed between the sales store X and the user, but the present invention is not limited thereto, and the owning entity of the electric bicycle 10 may be changed between the sales stores. For example, when the owning entity of the electric bicycle 10 of the sales store X is changed to a sales store Y, the sales store Y first displays a store QR code displayed on the store menu (see FIG. 30) of the store application in which a store ID of the sales store Y is registered. The sales store X may read the QR code of the sales store Y with the QR code reader of the store tablet 60, and may perform the delivery procedure of the electric bicycle 10 from the sales store X to the sales store Y in the above-described manner.

In the present specification, at least the following matters are described. Although corresponding constituent elements or the like in the above embodiment are shown in parentheses, the present invention is not limited thereto.

(1) Management method for a vehicle (electric bicycle 10) which is configured by installation of a vehicle body (vehicle body frame 67) and a power source (power unit 20, motor M) mounted on the vehicle body, the method including:

a measurement step (step S183) of measuring, in a first time period, in a state where the vehicle configured by installation of the vehicle body and the power source drives a wheel (rear wheal 78) connected to the power source by the power source, a measurement value (measurement value 662) that is at least one of

(A) a rotational state quantity of at least one of the power source, the wheel, and a power transmission path between the power source and the wheel (vehicle speed, cadence, gear stage, rotational speed of rear wheal 78, rotation speed of motor M), or a generated power amount (output P_motor of motor M, output P_pedal of crank pedal 79, ouput torque Tq_motor of motor M, pedal torque value Tq of crank pedal 79), or
(B) a state quantity (state of charge SOC, state of health SOH) of an energy source (battery 2) configured to supply energy (electric power) for the power source;

a comparison step of comparing, in a second time period after the first time period, the measurement value with a threshold value for the measurement value.

According to (1), since the measured value measured in the state where the wheel is driven by the power source is compared with the threshold value for the measured value, the state of the vehicle to which the vehicle body and the power source are installed can be appropriately managed.

In the above embodiment, the "comparison step " is not limited to the case where it is performed by the comparison unit 402 of the control circuit 40, but may also be performed by the control unit 610 of the store tablet 60 or by the control unit 910 of the server 90. The "comparison step " may also be performed by a combination of control circuit 40, store tablet 60, and server 90.

(2) The management method for a vehicle according to claim 1, further including a first generation step (step S185) of generating, in a third time period after the second time period, display information (operation confirmation screen 660) for displaying a comparison result in the comparison step or a determination result (determination result 663, overall determination result 664) based on the comparison result in the comparison step on a terminal (store tablet 60) used by an entity of manufacturing or others (sales store X, staff member) which is any one of a manufacturing entity, a managing entity, an owning entity, or a use entity of the vehicle.

According to (2), the entity of manufacturing or others can check the comparison result or the determination result by the terminal.

The "manufacturing entity" is a company or a worker who manufacture a vehicle by installing a vehicle body and a power source, and in the above embodiment, it is the sales store X or its staff member, or it is the dealer B in FIGS. 1 and 34. In addition, as described above, when the manufacture of the vehicle body and the installation of the vehicle body and the power source are carried out at a factory, the "manufacturing entity" is the factory concerned. A "managing entity " is a person who does not manufacture the vehicle, but manages it by checking the comparison result or the determination result. For example, when a mechanic who is different from the staff member of the sales store performs the installation check process and the operation check process of the above embodiment, the mechanic becomes the manager. The operator S in FIGS. 1 and 34 is also an example of a "managing entity". The "use entity" is a person who uses the vehicle and, in the above embodiment, is a user. The "owning entity" is the person who owns the vehicle and, in the above embodiment, is the sales store X or the user. If the user purchases the vehicle from the sales store, the owning entity of the vehicle is the user. On the other hand, when a user rents and uses a vehicle from a business operator who leases or rents the vehicle, for example, the owning entity of the vehicle becomes the business operator. In this case, the owning entity of the vehicle (business operator) is different from the use entity (user) who actually uses the vehicle. Here, when the "entity of manufacturing or others" (especially the" use entity") is a user, the "terminal used by the entity of manufacturing or others" is the mobile terminal 8.

(3) The management method for a vehicle according to claim 2, further including a second generation step (step S171) of generating, in a forth time period before the first time period, information for displaying, on the terminal, confirmation information (check item 656) that is information to be confirmed by the entity of manufacturing or others with regard to the vehicle configured by installation of the vehicle body and the power source.

According to (3), the entity of manufacturing or others can confirm the confirmation information including the information to be confirmed by the terminal.

(4) The management method for a vehicle according to claim 3, in which the confirmation information includes information on an installation state of the vehicle body and the power source.

According to (4), it is possible to prompt the entity of manufacturing or others to confirm that the power source is properly installed to the vehicle body.

(5) The management method for a vehicle according to claim 3 or 4, in which

the vehicle is provided with an information processing unit (control circuit 40) configured to perform a comparison between the measurement value and the threshold value in the comparison step, and

the confirmation information includes information on an installation state of the information processing unit to the vehicle.

According to (5), it is possible to prompt the entity of manufacturing or others to confirm that the information processing unit is properly installed to the vehicle.

(6) The management method for a vehicle according to any one of claims 3 to 5, in which

the confirmation information includes execution confirmation information (check box 656a) that is information for confirming that the entity of manufacturing or others has confirmed an item to be confirmed (check item 656) included in the confirmation information.

According to (6), it is possible to confirm from the execution confirmation information whether the entity of manufacturing or others has confirmed the items to be confirmed.

(7) The management method for a vehicle according to claim 6, further including a first acquisition step (step S173) of acquiring, in a fifth time period before the first time period and after the fourth time period, input information (input of check mark 656b) that is information input by the entity of manufacturing or others in accordance with the execution confirmation information displayed on the terminal.

According to (7), it is possible to acquire the fact as the input information that the entity of manufacturing or others has confirmed the item to be confirmed.

(8) The management method for a vehicle according to claim 7, in which

a measurement in the measurement step, a comparison in the comparison step, or a generation in the first generation step is

allowed to be performed when the input information in the first acquisition step has been acquired, and

prohibited from being performed when the input information in the first acquisition step has not been acquired.

According to (8), it is possible to allow or prohibit from performing the measurement, the comparison, or the generation according to presence of absence of the input information.

In the above embodiment, when the input information is not obtained (i.e., when the check mark 656b is not entered in the check box 656a), performing the measurement, the comparison, or the generation in each step is prohibited, but the performing the measurement and the comparison may be permitted even when the input information is not obtained. In this case, only the generation in the first generation step is prohibited until the input information is obtained, and the generation in the first generation step is performed when the input information is obtained.

(9) The management method for a vehicle according to claim 7 or 8, further including a first storage step of storing, in a storage unit (storage unit 620) of the terminal or another storage unit (storage unit 920) of a remote device (server 90) capable of communicating with the terminal:

in a sixth time period after the first time period, the measurement value measured in the measurement step;

in a sixth time period after the second time period, the comparison result of a comparison in the comparison step or the determination result based on the comparison result in the comparison step;

in a sixth time period after the third time period, the display information generated in the first generation step; or

in a sixth time period after the fifth time period, the input information acquired in the first acquisition step.

According to (9), since the measurement value, the comparison result, the display information, or the input information is stored in the storage unit, the vehicle can be appropriately managed.

(10) The management method for a vehicle according to any one of claims 2 to 9, in which

the measurement value in the measurement step includes a plurality of measurement values,

the threshold value in the comparison step includes a plurality of threshold values, and

the display information in the first generation step includes an overall determination result (overall determination result 664) that is the determination result as a whole based on the comparison result between each of the plurality of measurement values and corresponding each of the plurality of threshold values.

According to (10), since the overall determination result is displayed on the terminal of the entity of manufacturing or others based on a plurality of measurement values, a highly reliable result can be obtained with regard to the state of a vehicle to which a vehicle body and a power source are installed.

(11) The management method for a vehicle according to any one of claims 2 to 10, in which the display information in the first generation step includes the measurement value measured in the measurement step.

According to (11), since the measured value is displayed on the terminal, the entity of manufacturing or others can grasp the condition of the vehicle in detail.

(12) The management method for a vehicle according to any one of claims 2 to 11, in which

the measurement value in the measurement step is measured by a measurement unit (sensors SE1~SE4, current sensor) provided in the vehicle and transmitted to the terminal via a communication unit (BLE unit 44) provided in the vehicle.

According to (12), it is possible to measure the measurement value with the measurement unit installed in the vehicle.

(13) The management method for a vehicle according to claim 12, in which

the vehicle is provided with an information processing unit (control circuit 40) capable of communicating with the measurement unit, and

a comparison between the measurement value and the threshold value in the comparison step is performed by the information processing unit.

According to (13), it is possible to compare the measurement value with the threshold value with the information processing unit provided in the vehicle.

(14) The management method for a vehicle according to any one of claims 2 to 13, further including:

a second acquisition step (steps S100 and S140) of acquiring first identification information (vehicle ID) that is identification information of the vehicle and second identification information (store ID) that is identification information of the entity of manufacturing or others,

an association step (step S140) of associating, in a seventh time period before the first time period, the first identification information with the second identification information.

According to (14), it is possible to perfume the measurement step and the comparison step in a state where the vehicle and the entity of manufacturing or others are associated with each other and the vehicle is appropriately managed.

(15) The management method for a vehicle according to claim 14, further including a change step (step S190) of changing, in eighth time period after the third time period, the second identification information associated with the first identification information to another second identification information (user ID) that is identification information of another entity of manufacturing or others different from the entity of manufacturing or others.

According to (15), it is possible to change the entity of manufacturing or others of the vehicle based on the comparison result or the determination result. Further, since the first identification information and the second identification information are associated with each other, changes in the entity of manufacturing or others can be appropriately managed being associated with the vehicle.

(16) The management method for a vehicle according to any one of claims 1 to 15, further including a third acquisition step (step S177) of acquiring:

image information (photograph 651) on the vehicle configured by installation of the vehicle body and the power source in which the vehicle body and the power source appear in a same angle of view;

image information (photograph 654) in which a part of the vehicle body where the power source is installed appears; or image information (photograph 652) in which identification information of the vehicle body indicated on the vehicle body, or identification information of the power source indicated on the power source, or identification information of an entity of manufacturing or others which is any one of a manufacturing entity, a managing entity, an owning entity, or a use entity of the vehicle appears.

According to (16), by acquiring image information on the vehicle body, the power source, or the entity of manufacturing or others, it is possible to manage the vehicle from a visual viewpoint.

(17) The management method for a vehicle according to claim 16, further including a second storage step (step S 179) of storing, in a time period after a time period in which the third acquisition step is performed, the acquired image information in a storage unit (storage unit 620) of a terminal (store tablet 60) used by the entity of manufacturing or others or another storage unit (storage unit 920) of a remote device (server 90) that is configured to communicate with the terminal used by the entity of manufacturing or others.

According to (17), it is possible to appropriately manage the vehicle by storing image information.

(18) Management method for a vehicle (electric bicycle 10) which is configured by installation of a vehicle body (vehicle body frame 67) and a power source (power unit 20, motor M) mounted on the vehicle body, the method including:

a generation step (step S 171) of generating, in a ninth time period, information for displaying confirmation information (check item 656) that is information to be confirmed by an entity of manufacturing or others (staff member of sales store) which is any one of a manufacturing entity, a managing entity, an owning entity, or a use entity of the vehicle with regard to the vehicle configured by installation of the vehicle body and the power source, on a terminal (store tablet 60) used by the entity of manufacturing or others, and

an acquisition step (step S173) of acquiring, in tenth time period after the ninth time period, input information (input of the check mark 656b) that is information input by the entity of manufacturing or others in accordance with execution confirmation information (check box 656a) that is information for confirming that the entity of manufacturing or others has confirmed an item to be confirmed (check item 656) included in the confirmation information.

According to (18), since the fact that the entity of manufacturing or others has confirmed the item to be confirmed with regard to the vehicle to which the vehicle body and the power source are installed is acquired as the input information, it is possible to appropriately manage the state of the vehicle.

(19) Management method for a vehicle (electric bicycle 10) configured by installation of a vehicle body (vehicle body frame 67) and a power source (power unit 20, motor M) mounted on the vehicle body, the method including an acquisition step (step S 177) of acquiring:

image information (photograph 651) on the vehicle configured by installation of the vehicle body and the power source in which the vehicle body and the power source appear in a same angle of view;

image information (photograph 654) in which a part of the vehicle body where the power source is installed appears; or

image information (photograph 652) in which identification information of the vehicle body indicated on the vehicle body, or identification information of the power source indicated on the power source, or identification information of an entity of manufacturing or others which is any one of a manufacturing entity, a managing entity, an owning entity, or a use entity of the vehicle appears.

According to (19), by acquiring image information on the vehicle body, the power source, or the entity of manufacturing or others, it is possible to appropriately manage the vehicle from a visual viewpoint.

(20) A management program for a vehicle (electric bicycle 10) which is configured by installation of a vehicle body (vehicle body frame 67) and a power source (power unit 20, motor M) mounted on the vehicle body, the program causing a computer (control circuit 40) to execute:

an acquisition step (step S 182) of acquiring, in a first time period, in a state where the vehicle configured by installation of the vehicle body and the power source drives a wheel (rear wheel 78) connected to the power source by the power source, a measurement value (measurement value 662) that is at least one of

(A) a rotational state quantity of at least one of the power source, the wheel, and a power transmission path between the power source and the wheel (vehicle speed, cadence, gear stage, rotational speed of rear wheel 78, rotational speed of motor M), or a generated power amount (output P_motor of motor M, output P_pedal of crank pedal 79, ouput torque Tq_motor of motor M, pedal torque value Tq of crank pedal 79), or

(B) a state quantity (state of charge SOC, state of health SOH) of an energy source (battery 2) configured to supply energy (electric power) for the power source;

a comparison step (step S 183) of comparing, in a second time period after the first time period, the measurement value with a threshold value for the measurement value.

According to (20), since the measured value measured in a state where the wheel is driven by the power source is compared with the threshold value for the measured value, it is possible to appropriately manage the state of the vehicle to which the vehicle body and the power source are installed.

(21) A management program for a vehicle (electric bicycle 10) which is configured by installation of a vehicle body (vehicle body frame 67) and a power source (power unit 20, motor M) mounted on the vehicle body, the program causing a computer (control unit 610 of store tablet 60) to execute:

a generation step (step S 171) of generating, in a ninth time period, information for displaying confirmation information (check item 656) that is information to be confirmed by an entity of manufacturing or others (staff member of sales store) which is any one of a manufacturing entity, a managing entity, an owning entity, or a use entity of the vehicle with regard to the vehicle configured by installation of the vehicle body and the power source, on a terminal (store tablet 60) used by the entity of manufacturing or others, and

an acquisition step (step S173) of acquiring, in tenth time period after the ninth time period, input information (input of check mark 656b) that is information input by the entity of manufacturing or others in accordance with execution confirmation information (check box 656a) that is information for confirming that the entity of manufacturing or others has confirmed an item to be confirmed included in the confirmation information.

According to (21), since the fact that the entity of manufacturing or others has confirmed the item to be confirmed with regard to the vehicle to which the vehicle body and the power source are installed is acquired as the input information, it is possible to appropriately manage the state of the vehicle.

(22) A management program for a vehicle (electric bicycle 10) which is configured by installation of a vehicle body (vehicle body frame 67) and a power source (power unit 20, motor M) mounted on the vehicle body, the program causing a computer (control unit 610 of store tablet 60) to execute an acquisition step (step S 177) of acquiring:

image information (photograph 651) on the vehicle configured by installation of the vehicle body and the power source in which the vehicle body and the power source appear in a same angle of view;
image information (photograph 654) in which a part of the vehicle body where the power source is installed appears; or
image information (photograph 652) in which identification information of the vehicle body indicated on the vehicle body, or identification information of the power source indicated on the power source, or identification information of an entity of manufacturing or others which is any one of a manufacturing entity, a managing entity, an owning entity, or a use entity of the vehicle appears.

According to (22), by acquiring image information on the vehicle body, the power source, or the entity of manufacturing or others, it is possible to appropriately manage the vehicle from a visual viewpoint.

(23) A computer-readable storage medium storing the management program according to any one of claims 20 to 22.

According to (23), it is possible to execute the above management program by the computer.

(24) An information processing device (control circuit 40) for managing a vehicle (electric bicycle 10) which is configured by installation of a vehicle body (vehicle body frame 67) and a power source (power unit 20, motor M) mounted on the vehicle body, the information processing device including:

an acquisition unit (measurement value acquisition unit 401) configured to acquire, in a first time period, in a state where the vehicle configured by installation of the vehicle body and the power source drives a wheel (rear wheel 78) connected to the power source by the power source, a measurement value that is at least one of

(A) a rotational state quantity of at least one of the power source, the wheel, and a power transmission path between the power source and the wheel (vehicle speed, cadence, gear stage, rotational speed of rear wheel 78, rotational speed of motor M), or a generated power amount (output P_motor of motor M, output P_pedal of crank pedal 79, ouput torque Tq_motor of motor M, pedal torque value Tq of crank pedal 79), or
(B) a state quantity (state of charge SOC, state of health SOH) of an energy source (battery 2) configured to supply energy (electric power) for the power source;

a comparison unit (comparison unit 402) configured to compare, in a second time period after the first time period, the measurement value with a threshold value for the measurement value.

According to (24), since the measured value measured in a state where the wheel is driven by the power source is compared with the threshold value for the measured value, it is possible to appropriately manage the state of the vehicle to which the vehicle body and the power source.

The "information processing device" in (24) is not limited to the control circuit 40 of the above embodiment, but may be a control unit 610 of the store tablet 60 or a control unit 910 of the server 90, or a combination thereof.

(25) An information processing device (control unit 610 of store tablet 60) for managing a vehicle (electric bicycle 10) which is configured by installation of a vehicle body (vehicle body frame 67) and a power source (power unit 20, motor M) mounted on the vehicle body, the information processing device including:

a display generation unit (display generation unit 613) configured to generate information for displaying confirmation information (check item 656) that includes information to be confirmed by an entity of manufacturing or others (staff member of sales store) which is any one of a manufacturing entity, a managing entity, an owning entity, or a use entity of the vehicle with regard to the vehicle configured by installation of the vehicle body and the power source, on a terminal (store tablet 60) used by the entity of manufacturing or others, and
an acquisition unit (acquisition unit 611) configured to acquire input information (input of check mark 656b) that is information input by the entity of manufacturing or others in accordance with execution confirmation information (check box 656a) that is information for confirming that the entity of manufacturing or others has confirmed an item to be confirmed.

According to (25), since the fact that the entity of manufacturing or others has confirmed the item to be confirmed with regard to the vehicle to which the vehicle body and the power source are installed is acquired as the input information, it is possible to appropriately manage the state of the vehicle.

(26) An information processing device (store tablet 60) for managing a vehicle (electric vehicle 10) which is configured by installation of a vehicle body (vehicle body frame 67) and a power source (power unit 20, motor M) mounted on the vehicle body, the information processing device including an acquisition unit (acquisition unit 611) configured to acquire:

image information (photograph 651) on the vehicle configured by installation of the vehicle body and the power source in which the vehicle body and the power source appear in a same angle of view;

image information (photograph 654) in which a part of the vehicle body where the power source is installed appears; or image information (photograph 652) in which identification information of the vehicle body indicated on the vehicle body, or identification information of the power source indicated on the power source, or identification information of an entity of manufacturing or others which is any one of a manufacturing entity, a managing entity, an owning entity, or a use entity of the vehicle appears.

According to (26), by acquiring image information on the vehicle body, the power source, or the entity of manufacturing or others, it is possible to appropriately manage the vehicle from a visual viewpoint.

The "information processing device" in (25) and (26) is not limited to the control unit 610 of the store tablet 60 of the above embodiment, but may also be the control circuit 40 or the control unit 910 of the server 90, or a combination thereof.

The present application is based on Japan Patent Application (Patent Application No. 2022-37059) filed on March 10, 2022 and Japan Patent Application (Patent Application No. 2022-146575) filed on September 14, 2022, and the contents thereof are incorporated herein by reference.

REFERENCE SIGNS LIST

2: battery (energy storage device)
10: electric bicycle (vehicle)
20: power unit (power source)
40: control circuit (information processing unit, computer, information processing device)
401: measurement value acquisition unit (acquisition unit)
402: comparison unit
44: BLE unit (communication unit)
60: store tablet (terminal)
610: control unit (computer, information processing device)
611: acquisition unit
613: display generation unit
620: storage unit
651: photograph (image information)
652: photograph (image information)
654: photograph (image information)
656: check item
656a: check box (execution confirmation information)
656b: check mark (input information)
660: operation confirmation screen (display information)
662: measurement value
663: determination result
664: overall determination result
67: vehicle body frame (vehicle body)
78: rear wheel (wheel)
90: server (remote device)
910: control unit (computer, information processing device)
920: storage unit
M: motor (power source)

**Claims**

1.  Management method for a vehicle which is configured by installation of a vehicle body and a power source mounted on the vehicle body, the method comprising:

    a measurement step of measuring, in a first time period, in a state where the vehicle configured by installation of the vehicle body and the power source drives a wheel connected to the power source by the power source, a measurement value that is at least one of

    (A) a rotational state quantity of at least one of the power source, the wheel, and a power transmission path between the power source and the wheel, or a generated power amount, or
    (B) a state quantity of an energy source configured to supply energy for the power source;

    a comparison step of comparing, in a second time period after the first time period, the measurement value with a threshold value for the measurement value.

2.  The management method for a vehicle according to claim 1, further comprising a first generation step of generating, in a third time period after the second time period, display information for displaying a comparison result in the comparison step or a determination result based on the comparison result in the comparison step on a terminal used by an entity of manufacturing or others which is any one of a manufacturing entity, a managing entity, an owning entity, or a use entity of the vehicle.

3.  The management method for a vehicle according to claim 2, further comprising a second generation step of generating, in a forth time period before the first time period, information for displaying, on the terminal, confirmation information that is information to be confirmed by the entity of manufacturing or others with regard to the vehicle configured by installation of the vehicle body and the power source.

4.  The management method for a vehicle according to claim 3, wherein
    the confirmation information includes information on an installation state of the vehicle body and the power source.

5.  The management method for a vehicle according to claim 3 or 4, wherein

    the vehicle is provided with an information processing unit configured to perform a comparison between the measurement value and the threshold value in the comparison step, and
    the confirmation information includes information on an installation state of the information processing unit to the vehicle.

6.  The management method for a vehicle according to any one of claims 3 to 5, wherein
    the confirmation information includes execution confirmation information that is information for confirming that the entity of manufacturing or others has confirmed an item to be confirmed included in the confirmation information.

7.  The management method for a vehicle according to claim 6, further comprising a first acquisition step of acquiring, in a fifth time period before the first time period and after the fourth time period, input information that is information input by the entity of manufacturing or others in accordance with the execution confirmation information displayed on the terminal.

8.  The management method for a vehicle according to claim 7, wherein

    a measurement in the measurement step, a comparison in the comparison step, or a generation in the first generation step is
    allowed to be performed when the input information in the first acquisition step has been acquired, and
    prohibited from being performed when the input information in the first acquisition step has not been acquired.

9.  The management method for a vehicle according to claim 7 or 8, further comprising a first storage step of storing, in a storage unit of the terminal or another storage unit of a remote device capable of communicating with the terminal:

    in a sixth time period after the first time period, the measurement value measured in the measurement step;
    in a sixth time period after the second time period, the comparison result of a comparison in the comparison step or the determination result based on the comparison result in the comparison step;
in a sixth time period after the third time period, the display information generated in the first generation step; or
in a sixth time period after the fifth time period, the input information acquired in the first acquisition step.

10. The management method for a vehicle according to any one of claims 2 to 9, wherein

the measurement value in the measurement step includes a plurality of measurement values,
the threshold value in the comparison step includes a plurality of threshold values, and
the display information in the first generation step includes an overall determination result that is the determination result as a whole based on the comparison result between each of the plurality of measurement values and corresponding each of the plurality of threshold values.

11. The management method for a vehicle according to any one of claims 2 to 10, wherein
the display information in the first generation step includes the measurement value measured in the measurement step.

12. The management method for a vehicle according to any one of claims 2 to 11, wherein
the measurement value in the measurement step is measured by a measurement unit provided in the vehicle and transmitted to the terminal via a communication unit provided in the vehicle.

13. The management method for a vehicle according to claim 12, wherein

the vehicle is provided with an information processing unit capable of communicating with the measurement unit, and
a comparison between the measurement value and the threshold value in the comparison step is performed by the information processing unit.

14. The management method for a vehicle according to any one of claims 2 to 13, further comprising:

a second acquisition step of acquiring first identification information that is identification information of the vehicle and second identification information that is identification information of the entity of manufacturing or others,
an association step of associating, in a seventh time period before the first time period, the first identification information with the second identification information.

15. The management method for a vehicle according to claim 14, further comprising a change step of changing, in eighth time period after the third time period, the second identification information associated with the first identification information to another second identification information that is identification information of another entity of manufacturing or others different from the entity of manufacturing or others.

16. The management method for a vehicle according to any one of claims 1 to 15, further comprising a third acquisition step of acquiring:

image information on the vehicle configured by installation of the vehicle body and the power source in which the vehicle body and the power source appear in a same angle of view;
image information in which a part of the vehicle body where the power source is installed appears; or
image information in which identification information of the vehicle body indicated on the vehicle body, or identification information of the power source indicated on the power source, or identification information of an entity of manufacturing or others which is any one of a manufacturing entity, a managing entity, an owning entity, or a use entity of the vehicle appears.

17. The management method for a vehicle according to claim 16, further comprising a second storage step of storing, in a time period after a time period in which the third acquisition step is performed, the acquired image information in a storage unit of a terminal used by the entity of manufacturing or others or another storage unit of a remote device capable of communicating with the terminal used by the entity of manufacturing or others.

18. Management method for a vehicle which is configured by installation of a vehicle body and a power source mounted on the vehicle body, the method comprising:

a generation step of generating, in a ninth time period, information for displaying confirmation information that is information to be confirmed by an entity of manufacturing or others which is any one of a manufacturing entity, a managing entity, an owning entity, or a use entity of the vehicle with regard to the vehicle configured by installation of the vehicle body and the power source, on a terminal used by the entity of manufacturing or others, and

an acquisition step of acquiring, in tenth time period after the ninth time period, input information that is information input by the entity of manufacturing or others in accordance with execution confirmation information that is information for confirming that the entity of manufacturing or others has confirmed an item to be confirmed included in the confirmation information.

19. Management method for a vehicle which is configured by installation of a vehicle body and a power source mounted on the vehicle body, the method comprising an acquisition step of acquiring:

image information on the vehicle configured by installation of the vehicle body and the power source in which the vehicle body and the power source appear in a same angle of view;
image information in which a part of the vehicle body where the power source is installed appears; or
image information in which identification information of the vehicle body indicated on the vehicle body, or identification information of the power source indicated on the power source, or identification information of an entity of manufacturing or others which is any one of a manufacturing entity, a managing entity, an owning entity, or a use entity of the vehicle appears.

20. A management program for a vehicle which is configured by installation of a vehicle body and a power source mounted on the vehicle body, the program causing a computer to execute:

an acquisition step of acquiring, in a first time period, in a state where the vehicle configured by installation of the vehicle body and the power source drives a wheel connected to the power source by the power source, a measurement value that is at least one of

(A) a rotational state quantity of at least one of the power source, the wheel, and a power transmission path between the power source and the wheel, or a generated power amount, or
(B) a state quantity of an energy source configured to supply energy for the power source;

a comparison step of comparing, in a second time period after the first time period, the measurement value with a threshold value for the measurement value.

21. A management program for a vehicle which is configured by installation of a vehicle body and a power source mounted on the vehicle body, the program causing a computer to execute:

a generation step of generating, in a ninth time period, information for displaying confirmation information that is information to be confirmed by an entity of manufacturing or others which is any one of a manufacturing entity, a managing entity, an owning entity, or a use entity of the vehicle with regard to the vehicle configured by installation of the vehicle body and the power source, on a terminal used by the entity of manufacturing or others, and
an acquisition step of acquiring, in tenth time period after the ninth time period, input information that is information input by the entity of manufacturing or others in accordance with execution confirmation information that is information for confirming that the entity of manufacturing or others has confirmed an item to be confirmed included in the confirmation information.

22. A management program for a vehicle which is configured by installation of a vehicle body and a power source mounted on the vehicle body, the program causing a computer to execute an acquisition step of acquiring:

image information on the vehicle configured by installation of the vehicle body and the power source in which the vehicle body and the power source appear in a same angle of view;
image information in which a part of the vehicle body where the power source is installed appears; or
image information in which identification information of the vehicle body indicated on the vehicle body, or identification information of the power source indicated on the power source, or identification information of an entity of manufacturing or others which is any one of a manufacturing entity, a managing entity, an owning entity, or a use entity of the vehicle appears.

23. A computer-readable storage medium storing the management program according to any one of claims 20 to 22.

24. An information processing device for managing a vehicle which is configured by installation of a vehicle body and a power source mounted on the vehicle body, the information processing device comprising:

an acquisition unit configured to acquire, in a first time period, in a state where the vehicle configured by installation of the vehicle body and the power source drives a wheel connected to the power source by the power source, a measurement value that is at least one of

(A) a rotational state quantity of at least one of the power source, the wheel, and a power transmission path between the power source and the wheel, or a generated power amount, or
(B) a state quantity of an energy source configured to supply energy for the power source;

a comparison unit configured to compare, in a second time period after the first time period, the measurement value with a threshold value for the measurement value.

25. An information processing device for managing a vehicle installed with a vehicle body and a power source mounted on the vehicle body, the information processing device comprising:

a display generation unit configured to generate information for displaying confirmation information that includes information to be confirmed by an entity of manufacturing or others which is any one of a manufacturing entity, a managing entity, an owning entity, or a use entity of the vehicle with regard to the vehicle configured by installation of the vehicle body and the power source, on a terminal used by the entity of manufacturing or others, and an acquisition unit configured to acquire input information that is information input by the entity of manufacturing or others in accordance with execution confirmation information that is information for confirming that the entity of manufacturing or others has confirmed an item to be confirmed.

26. An information processing device for managing a vehicle which is configured by installation of a vehicle body and a power source mounted on the vehicle body, the information processing device comprising an acquisition unit configured to acquire:

image information on the vehicle configured by installation of the vehicle body and the power source in which the vehicle body and the power source appear in a same angle of view;
image information in which a part of the vehicle body where the power source is installed appears; or
image information in which identification information of the vehicle body indicated on the vehicle body, or identification information of the power source indicated on the power source, or identification information of an entity of manufacturing or others which is any one of a manufacturing entity, a managing entity, an owning entity, or a use entity of the vehicle appears.

# FIG.1

ASSIST DEVICE RELATION MANUFACTURERS

| MANUFACTURER F | | OPERATOR S | MANUFACTURERS A AND C | | MANUFACTURER D | MANUFACTURER B |
|---|---|---|---|---|---|---|
| VEHICLE BODY | | SERVER | APPLICATION | CONTROL CIRCUIT | POWER UNIT | BATTERY |

PAYMENT | PRODUCT DELIVERY

PRODUCT DATA (VIA APPLICATION)

STORE APPLICATION

PRODUCT DELIVERY

PRODUCT DELIVERY

PRODUCT DELIVERY

MANUFACTURING AND DEVELOPMENT REQUEST

**PRODUCT PLANNER**
- ■ PLAN PRODUCT, AND INTEGRATE MANUFACTURERS
- ■ APPLY FOR CERTIFICATION OF ASSIST DEVICE

CERTIFICATION APPLICATION (ASSIST DEVICE)

**CERTIFICATION AGENCY**
- ■ DETERMINE STANDARD COMPLIANCE OF APPLIED PRODUCT
- ■ ISSUE STICKER OR THE LIKE AS CERTIFICATION FOR PRODUCT WHICH IS CERTIFIED AND REGISTERED

DEVELOPMENT AND PRODUCTION COST

CERTIFICATION (ASSIST DEVICE)

(CONT.)

EP 4 492 032 A1

(FIG. 1 CONTINUED)

PAYMENT

PRODUCT DELIVERY

**DEALER B (INSTALLATION STORE)**

■ EXHIBIT AND SELL ELECTRIFICATION DEVICES SUCH AS CONTROL CIRCUIT, POWER UNIT, AND BATTERY IN STORE.

■ **COMBINE AND INSTALL APPROPRIATE PRODUCT**

PRODUCT ORDER
PRODUCT PAYMENT
HANDLING APPLICATION

SHARE CERTIFICATION INFORMATION

TRAVEL DATA (VIA APPLICATION)

USER APPLICATION

PAYMENT

SALES

CONSUMER

■ **DESIRE TO PURCHASE ELECTRIC ASSIST BICYCLE APPLIED ELECTRIFICATION ON NON-ELECTRIC BICYCLE**

LEGALITY CONFIRMATION

LEGALITY CERTIFICATION

REGULATORY AGENCY

■ REGULATE ILLEGAL VEHICLE BASED ON CERTIFICATION INFORMATION AND STATE OF VEHICLE BODY

EP 4 492 032 A1

## FIG.2

ASSIST RATIO

VEHICLE SPEED (km/h)

FIG.3

EP 4 492 032 A1

FIG.4

37

*FIG.5*

FIG.6

FIG.7

CURRENT (A)

TORQUE (Nm)

VEHICLE SPEED (km/h)

FIG.8

EP 4 492 032 A1

(CONT.)

## (FIG.8 CONTINUED)

SERVER

SERVICE INTRODUCTION WEBSITE

APPLICATION STORE

90

SERVER

USER WEBSITE

MEMBER INFORMATION STORAGE

STORE API

USER API

VEHICLE INFORMATION STORAGE

VEHICLE INFORMATION CHANGE

TRAVELING LOG STORAGE

MANAGEMENT WEBSITE

EP 4 492 032 A1

## FIG.9

```
        ( START )
            │
            ▼
┌───────────────────────────┐
│ LOG INTO STORE APPLICATION │── S100
│    (ACQUIRE STORE ID)      │
└───────────────────────────┘
            │
            ▼
┌───────────────────────────┐
│   ACQUIRE COMMUNICATION    │
│    ADDRESS INFORMATION     │── S110
│     OF CONTROL CIRCUIT     │
└───────────────────────────┘
            │
            ▼
   ┌──────────────────┐
   │  ACQUIRE VEHICLE │── S120
   │ MODEL INFORMATION│
   └──────────────────┘
            │
            ▼
   ┌──────────────────┐
   │  ACQUIRE VEHICLE │── S130
   │   BODY NUMBER    │
   └──────────────────┘
            │
            ▼
  ┌────────────────────┐
  │ ACQUIRE VEHICLE ID │── S140
  └────────────────────┘
            │
            ▼
┌──────────────────────────┐
│ ACQUIRE POWER UNIT NUMBER │── S150
└──────────────────────────┘
            │
            ▼
┌────────────────────────┐
│ ACQUIRE BATTERY NUMBER │── S160
└────────────────────────┘
            │
            ▼
┌────────────────────────┐
│  INSTALLATION CHECK    │── S170
└────────────────────────┘
            │
            ▼
┌────────────────────────┐
│ OPERATION CONFIRMATION │── S180
└────────────────────────┘
            │
            ▼
   ┌──────────────────┐
   │  DELIVER TO USER │── S190
   └──────────────────┘
            │
            ▼
         (  END  )
```

*FIG.10*

```
   ( INSTALLATION CHECK )────S170
              │
   ┌──────────────────────┐
   │   DISPLAY CHECK ITEM  │────S171
   │    ON STORE TABLET    │
   └──────────────────────┘
              │
   ┌──────────────────────┐
   │     ACQUIRE INPUT     │────S173
   │     INFORMATION       │
   └──────────────────────┘
              │
   ┌──────────────────────┐
   │      STORE INPUT      │────S175
   │      INFORMATINO      │
   └──────────────────────┘
              │
   ┌──────────────────────┐
   │     ACQUIRE IMAGE     │────S177
   │     INFORMATION       │
   └──────────────────────┘
              │
   ┌──────────────────────┐
   │      STORE IMAGE      │────S179
   │      INFORMATION      │
   └──────────────────────┘
              │
        ( RETURN )
```

## *FIG.11*

OPERATION COMFIRMATION
PROCESS S180

| ELECTRIC BICYCLE 10 | STORE TABLET 60 | SERVER 90 |

STARTT REQUEST
S181

MEASURE MEASURMENT VALUE
S182

COMPARE MEASUREMENT VALUE AND THRESHOLD VALUE
S183

TRANSMIT MEASUREMENT VALUE AND COMPARISON RESULT
S184

DISPLAY MEASUREMENT VALUE AND DETERMINATION RESULTE
S185

STORE MEASUREMENT VALUE, COMPARISON RESULT, AND DETERMINATION RESULT
S186

TRANSMIT MEASUREMENT VALUE, COMPARISON RESULT, AND DETERMINATION RESULT
S187

STORE MEASUREMENT VALUE AND DETERMINATION RESULT
S188

## FIG.12

[INSTALLATION FLOW]

| CONTROL CIRCUIT | VEHICLE BODY | POWER UNIT | BATTERY | STORE APPLICATION | SERVER | STORE STAFF |
|---|---|---|---|---|---|---|
| INSTALL CONTROL SOFTWARE IN ADVANCE | RECORD THE FOLLOWING USING QR CODE IN ADVANCE · PRODUCT NUMBER · SOLID NUMBER | RECORD THE FOLLOWING USING QR CODE IN ADVANCE · PRODUCT NUMBER · SOLID NUMBER | RECORD THE FOLLOWING USING QR CODE IN ADVANCE · PRODUCT NUMBER · SOLID NUMBER | | REGISTER COMBINATION OF CERTIFIED VEHICLE BODY AND COMPONENTS/ CONTROL PARAMETERS FOR EACH COMBINATION IN ADVANCE | STAFF ACCOUNT IS ASSIGNED IN ADVANCE. WHEN WORKING, LOG INTO STORE APPLICATION USING ASSIGNED ACCOUNT. |
| ATTACH ──────────────────────────────────────────────────────────────▶ | | ATTACH | ATTACH | | | ATTACH POWER UNIT/ BATTERY/CONTROL CIRCUIT TO VEHICLE BODY |
| BT CONNECTION ──────────────────────────▶ | | | | ACQUIRE MAC ADDRESS | | |
| | | | | ACQUIRE VEHICLE MODEL INFORMATION | | |

(CONT.)

EP 4 492 032 A1

| | QR CODE | | | READ QR CODE | | |
|---|---|---|---|---|---|---|
| | | | | ACQUIRE VEHICLE ID | | |
| | | QR CODE | QR CODE | READ QR CODE | | |
| | | | | INQUIRY WHETHER COMBINATION IS CERTIFIED | CONFIRM | |
| | | | | | TRANSMIT CONTROL PARAMETERS | |
| ESTABLISH BT CONNECTION WITH DEALER APPLICATION | | | | ESTABLISH BT CONNECTION WITH CONTROL CIRCUIT AND WRITE CONTROL PARAMETERS | | |
| | | | | | SAVE COMBINATION INFORMATION | |

EP 4 492 032 A1

## FIG.13

STORE TABLET 60

CONTROL UNIT 610

STORAGE UNIT 620

STORE ID

STORE TABLET INFORMATION

COMMUNICATION ADDRESS
INFORMATION

VEHICLE MODEL
INFORMATION

VEHICLE BODY NUMBER

VEHICLE ID

BATTERY NUMBER

POWER UNIT NUMBER

USER ID/ANOTHER STORE ID

INPUT INSTALLATION CHECK
(IMAGE INFORMATION,
INPUT INFORMATION)

TRANSMIT OPERATION
CONFIRMATION INFORMATION
(MEASURMENT VALUE,
COMPARISON RESULT)

ACQUISITION
UNIT 611

DISPLAY
GENERATION
UNIT 613

PROCESSING
UNIT 612

ELECTLIC BICYCLE 10

BLE 44

CONTROL CIRCUIT 40

COMPARISON UNIT 402

MEASUMENT VALUE
ACQUISITION UNIT 401

SENSOR SE1~SE4

SERVER 90

CONTROL UNIT 910

STORAGE UNIT 920

48

# FIG.14

604

60

```
┌─────────────────────────────────────────────┐
│  ≡              INSTALLATION DEVICE           │
├─────────────────────────────────────────────┤
│                                               │
│  PLEASE SELECT INSTALLATION DEVICE (CONTROL CIRCUIT)  │
│                                               │
│              MODEL                            │
│  ┌─┐                                          │
│  │✔│   Control Unit ( 00 - AA - 00 - AA - 00 - AA )   │
│  └─┘                                          │
│  ┌─┐                                          │
│  │ │   Control Unit ( 11 - BB - 11 - BB - 11 - BB )   │
│  └─┘                                          │
│                                               │
│                                               │
│                 ( TO NEXT )                   │
└─────────────────────────────────────────────┘
```

## FIG.15

604

60

### INSTALLATION VEHICLE MODEL

PLEASE SELECT INSTALLATION VEHICLE

| | No | | MAKER | MODEL | YEAR |
|---|---|---|---|---|---|
| ☑ | 1 | Picture | ●● CO.,LTD. | Model A | 2022 |
| ☐ | 2 | Picture | ●● CO.,LTD. | Model B | 2022 |
| ☐ | 3 | Picture | ●● CO.,LTD. | Model C | 2021 |
| ☐ | 4 | Picture | ●● CO.,LTD. | Model D | 2021 |
| ☐ | 5 | Picture | ■■ CO.,LTD. | Model A | 2022 |
| ☐ | 6 | Picture | ■■ CO.,LTD. | Model B | 2021 |
| ☐ | 7 | Picture | ■■ CO.,LTD. | Model C | 2020 |
| ☐ | 8 | Picture | ▲▲ CO.,LTD. | Model A | 2022 |

RETURN    TO NEXT

## FIG.16

INSTALLATION VEHICLE INFORMATION

INSTALLATION VEHICLE MODEL

1 | Picture | ●● CO.,LTD. | Model A | 2022

VEHICLE MODEL NAME : Model A

MAKER NAME : ●● CO.,LTD.

VEHICLE BODY NUMBER : AA0000

DEVICE

Picture | Control Unit ( 00 - AA - 00 - AA - 00 - AA ) | CHANGE

DEVICE : Control Unit ( 00 - AA - 00 - AA - 00 - AA )
PAC NUMBER : 7788
FIRM VERSION : 2.0.0
FW STATE : SOFTWARE UPDATE
CONNECTION STATE : CONNECTED

MEMO

06/20 SCHEDULED TO RECEIVE

RETURN | REGISTER

# FIG.17

60

INSTALLATION VEHICLE INFORMATION
INPUT COMPLETED

REGISTERED IN OWNED VEHICLE

MEMBER VEHICLE ID NO. 11

DO YOU WANT TO CONTINUE SETTING THIS VEHICLE?

TO VEHICLE DETAIL SCREEN

TO INSTALLATION VEHICLE
INFORMATION INPUT SCREEN

COMPLETE

## FIG.18

604

60

≡       INSTALLATION INFORMATION INPUT

INSTALLATION INFORMATION

MOTOR

602

MOTOR      Serial No      ☐

PLEASE INPUT ACCESSORY INFORMATION

603

BATTERY      Serial No      ☐

BATTERY      Serial No      ☐    **DELETE**

ADDITION OF BATTERY

CANCEL        COMPLETE

# FIG.19

604

60

## VEHICLE DETAILS

| STATUS | VEHICLE MODEL AND DEVICE | INSTALLATION INFORMATION |

### STATUS

DELIVER     DISMANTLE

VEHICLE ID
No. 11

| STATUS | : DELIVERY DETERMINED 2022/06/20 14:22 |
| OWNER | : SALES STORE X |
| PREVIOUS OWNER | : |
| DEVICE | : 00-AA-00-AA-00-AA |
| DEVICE CONNECTION STATE | : CONNECTED |

OPERATION CONFIRMATION

### VEHICLE MODEL AND DEVICE

Picture     ●● CO.,LTD.     Model A     2022

RETURN     DELIVERY PROCEDURE

# FIG.20

604                                            60

## VEHICLE DETAILS

| STATUS | VEHICLE MODEL AND DEVICE | INSTALLATION INFORMATION |

### INSTALLATION INFORMATION

MOTOR            : ●● MOTOR
BATTERY         : ●● BATTERY
CONTROL UNIT   : 00 - AA - 00 - AA - 00 - AA

651

652

**VEHICLE BODY NUMBER AA0000**

653

654

655

RETURN                DELIVERY PROCEDURE

## FIG.21

604

60

# VEHICLE DETAILS

| STATUS | VEHICLE MODEL AND DEVICE | <u>INSTALLATION INFORMATION</u> |

---

INSTALLATION INFORMATION

INSTALLATION CHECK          656                                    650

☑ BB LOCK RING IS ATACHED WITH TIGHTENING TORQUE OF 40 Nm

656b

☑ MOTOR IS SECURELY ATTACHED TO FRAME

☑ BATTERY BASE AND FRAME ARE ATTACHED WITH TIGHTENING TORQUE OF 5 Nm

☑ CORD IS NOT ENGAGED WITH FASTENING PORTION OF CONTROL UNIT AND BATTERY BASE

☑ CONTROL UNIT IS NOT IN CONTACT WITH FRAME

☑ SPEED SENSOR IS NOT IN CONTACT WITH WHEEL OR MAGNET

656a

☐ BRAKING DEVICE OPERATES CORRECTLY

☐ ALL LIGHTS OPERATE CORRECTLY

☐ THERE IS NOT ABNORMAL SOUND, ABNOTMAL VIBRATION, AND RATTLING DURING TRAVELING

☐ GEAR HAS VEEN SHIFTED TO MAXIMUM GEAR STAGE

OPERATION CONFIRMATION

RETURN                    DELIVERY PROCEDURE

## FIG.22

**VEHICLE DETAILES**

| STATUS | VEHICLE MODEL AND DEVICE | INSTALLATION INFORMATION |

**INSTALLATION INFORMATION**

OPERATION CONFIRMATION

```
ACCEPTABLE
(ESTEMATED GEAR RATIO: 3.0)
[2022/06/20 14:22:15]
```

| | MEASURMENT VALUE | DETERMINATION |
|---|---|---|
| 1. VEHICLE SPEED OF 3km/h OR HIGHER | 9km/h | OK |
| 2. REMAINING BATTERY LEVEL OF 10% OR HIGHER | 60% | OK |
| 3. PEDALING POWER OF 10W OR MORE | 10W | OK |
| 4. MOTOR POWER OF 10W OR MORE | 15W | OK |
| 5. PEDALING CADENCE OF 10 rpm OR MORE | 25rpm | OK |
| 6. ERROR CODE GENERATED | NONE | OK |
| 7. GEAR STAGE | THIRD (MAXIMUM GEAR STAGE) | OK |

661    OPERATION CONFIRMED    662    663

RETURN

DELIVERY PROCEDURE

## FIG.23

604      60

DELIVERY PROCEDURE

PLEASE SELECT DELIVERY DESTINATION

LIST DISPLAY

READ QR CODE OF USER

# FIG.24

604

60

**DELIVERY PROCEDURE**

PLEASE CONFIRM DELIVERY CONTENT

DELIVERY DESTINATION

NAME
○○ △△

SEX
MALE

DATE OF BIRTH
1980 / 1 / 1

DELIVERED VEHICLE

Picture    ●● CO.,LTD.    Model A    2022

VEHICLE MODEL NAME    : Model A

MAKER NAME    : ●● CO.,LTD.

VEHICLE BODY NUMBER    : AA0000

CANCEL    REGISTER

# FIG.25

604

60

DELIVERY PROCEDURE

**DELIVERY DESTINATION**

NAME
○○ △△

SEX
MALE

DATE OF BIRTH
1980 / 1 / 1

**OWNED VEHICLE**

| VEHICLE ID | | MAKER | MODEL | DELIVERY DATE |
|---|---|---|---|---|
| 11 | Picture | ●● CO.,LTD. | Model A | 2022 / 06 / 20 |

CONTROL UNIT PIN CODE
808120

COMPLETE

# FIG.26

604 · · · · · · · · · · · · · · · · · · · · · · · · · · · · · · · 60

**OWNED VEHICLE LIST**

☰ 604

| | |
|---|---|
| PLEASE SELECT VEHICLE | STATUS<br>A **INSTALLATION INFORMATION INPUT1** · · · C WORK CHECK<br>B **INSTALLATION INFORMATION INPUT2** · · · D OPERATION CONFIRMATION |
| SEARCH | |

| | VEHICLE ID | | MODEL | DEVICE | REGISTRATION DATE | STATUS | MEMO |
|---|---|---|---|---|---|---|---|
| ☐ | 10 | Picture | Model A | 00-BB-00-BB-00-BB | 22/06/18 | A **B** C D | |
| ☑ | 11 | Picture | Model A | 00-AA-00-AA-00-AA | 22/06/20 | DELIVERY POSSIBLE | RECEPTION 06/20 Mr. ○○ |
| ☐ | 12 | Picture | Model A | 00-CC-00-CC-00-CC | 22/06/19 | **A** B C D | |
| ☐ | 13 | Picture | Model A | 11-AA-11-AA-11-AA | 22/06/19 | **A** B C D | |
| ☐ | 14 | Picture | Model B | 22-AA-22-AA-22-AA | 22/06/19 | A **B** C D | |
| ☐ | 15 | Picture | Model C | 33-AA-33-AA-33-AA | 22/06/18 | A B **C** D | |
| ☐ | 16 | Picture | Model A | 00-DD-00-DD-00-DD | 22/06/19 | **A** B C D | |

( TO NEXT )

## FIG.27

604

60

**VEHICLE DETAILS**

| STATUS | VEHICLE MODEL AND DEVICE | **INSTALLATION INFORMATION** |

---

**STATUS**

[ DELIVER ]    [ DISMANTLE ]

| | | |
|---|---|---|
| | STATUS | : DELIVERY DETERMINED 2022 / 06 / 20 14: 22 |
| | OWNER | : SALES STORE X |
| VEHICLE ID No. 11 | PREVIOUS OWNER | : |
| | DEVICE | : 00 - AA - 00 - AA - 00 - AA |
| | DEVICE CONNECTION STATE | : CONNECTED |

OPERATION CONFIRMATION

---

**VEHICLE MODEL AND DEVICE**

| Picture | ●● CO.,LTD. | Model A | 2021 |

( RETURN )    ( DELIVERY PROCEDURE )

## FIG.28

**USER INFORMATION**

MEMBER INFORMATION

PROFILE IMAGE

NAME
○○ △△

SEX
MALE

DATE OF BIRTH
1980 / 1 / 1

OWNED VEHICLE

| | VEHICLE ID | | MAKER | MODEL | DELIVERY DATE |
|---|---|---|---|---|---|
| ☑ | 50 | Picture | ●● CO.,LTD. | Model Z | 2022 / 03 / 20 14 : 12 : 24 |
| ☐ | 3 | Picture | △△ CO.,LTD. | Model A | 2021 / 11 / 01 10 : 32 : 26 |

CANCEL

DISPLAY DETAILS OF VEHICLE

## FIG.29

604

60

**VEHICLE DETAILS**

STATUS | VEHICLE MODEL AND DEVICE | **INSTALLATION INFORMATION**

STATUS

PICK UP | DISMANTLE

STATUS : DELIVERY DETERMINED
2022 / 05 / 20 10 : 50

OWNER : ○○ △△

VEHICLE ID No. 50

PREVIOUS OWNER : SALES STORE X

DEVICE : 11 - AA - 22 - BB - 33 - CC

DEVICE CONNECTION STATE : CONNECTED

OPERATION CONFIRMATION

VEHICLE MODEL AND DEVICE

Picture | ●● CO.,LTD. | Model Z | 2021

RETURN | PICK-UP PROCEDURE

# FIG.30

60

STORE MENU

| | | | |
|---|---|---|---|
| ATTACHMENT VEHICLE | OWNED VEHICLE | USER SEARCH | STORE QR CODE |
| SET | HELP | TERMS OF USE | PRIVATE POLICY |
| SOFTWARE INFORMATION | | | |

LOG OUT

FIG.31

EP 4 492 032 A1

*FIG.32*

## FIG.33

# FIG.34

**MANUFACTURER F**
VEHICLE BODY

**ASSIST DEVICE RELATION MANUFACTURERS**

| OPERATOR S | MANUFACTURERS A AND C | | MANUFACTURER D | MANUFACTURER B |
|---|---|---|---|---|
| SERVER | APPLICATION | CONTROL CIRCUIT | POWER UNIT | BATTERY |

PAYMENT | PRODUCT DELIVERY

PRODUCT DATA (VIA APPLICATION)

STORE APPLICATION

PRODUCT DELIVERY

PRODUCT DELIVERY

PRODUCT DELIVERY

**DEALER A**
SALES OF VEHICLE BODY (PAST)

MANUFACTURING AND DEVELOPMENT REQUEST

**PRODUCT PLANNER**

- PLAN PRODUCT, AND INTEGRATE MANUFACTURERS
- APPLY FOR CERTIFICATION OF ASSIST DEVICE

DEVELOPMENT AND PRODUCTION COST

CERTIFICATION APPLICATION (ASSIST DEVICE)

CERTIFICATION (ASSIST DEVICE)

**CERTIFICATION AGENCY**

- DETERMINE STANDARD COMPLIANCE OF APPLIED PRODUCT
- ISSUE STICKER OR THE LIKE AS CERTIFICATION FOR PRODUCT WHICH IS CERTIFIED AND REGISTERED

(CONT.)

EP 4 492 032 A1

(FIG. 34 CONTINUED)

**DEALER B (INSTALLATION STORE)**

■ EXHIBIT AND SELL ELECTRIFICATION
DEVICES SUCH AS CONTROL CIRCUIT,
POWER UNIT, AND BATTERY IN STORE.

■ **COMBINE AND INSTALL APPROPRIATE
PRODUCT**

PRODUCT ORDER
PRODUCT PAYMENT
HANDLING APPLICATION

SHARE
CERTIFICATION
INFORMATION

PAYMENT | SALES

TRAVEL DATA
(VIA APPLICATION)

USER
APPLICATION

VEHICLE
BROUGHT
IN AND
PAYMENT

SALES AND
ATTACHMENT
WORK

**CONSUMER**

■ PURCHASE AND OWN NON-ELECTRIC BICYCLE BODY (PAST)

■ REQUEST ELECTRIFICATION AT DEALER B (PRESENT)

LEGALITY
CONFIRMATION

LEGALITY
CERTIFICATION

**REGULATORY AGENCY**

■ REGULATE ILLEGAL VEHICLE
BASED ON CERTIFICATION
INFORMATION AND STATE OF
VEHICLE BODY

## INTERNATIONAL SEARCH REPORT

| | International application No. |
|---|---|
| | **PCT/JP2023/009361** |

**A. CLASSIFICATION OF SUBJECT MATTER**

*G01M 17/007*(2006.01)i; *B62M 6/40*(2010.01)i
FI: G01M17/007 H; B62M6/40

According to International Patent Classification (IPC) or to both national classification and IPC

**B. FIELDS SEARCHED**

Minimum documentation searched (classification system followed by classification symbols)

G01M17/00-17/10; B62M6/40; B62M23/00; G06Q10/00; G06Q50/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-79951 A (SHIMANO KK) 27 May 2021 (2021-05-27) | 1-3, 10, 12-13, 20, 24 |
| | paragraphs [0035]-[0093], fig. 1-9 | |
| Y | paragraphs [0035]-[0093], fig. 1-9 | 4-5, 11, 14, 16-17 |
| A | entire text, all drawings | 6-9, 15, 18, 21, 25 |
| X | JP 2020-131813 A (SHIMANO KK) 31 August 2020 (2020-08-31) | 19, 22-23, 26 |
| | paragraphs [0069]-[0103], [0108]-[0150], fig. 8-14, 16-20 | |
| Y | paragraphs [0069]-[0103], [0108]-[0150], fig. 8-14, 16-20 | 4-5, 11, 14, 16-17 |
| Y | JP 2021-98432 A (PANASONIC IP MAN CORP) 01 July 2021 (2021-07-01) | 14, 16-17 |
| | paragraphs [0014]-[0109], fig. 1-5 | |
| A | WO 2021/049646 A1 (HONDA MOTOR CO., LTD.) 18 March 2021 (2021-03-18) | 1-26 |
| | entire text, all drawings | |
| A | US 2018/0257739 A1 (LEE, Wen-Sung) 13 September 2018 (2018-09-13) | 1-26 |
| | entire text, all drawings | |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 May 2023** | **30 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| JP | 2021-79951 | A | 27 May 2021 | (Family: none) | | | |
| JP | 2020-131813 | A | 31 August 2020 | (Family: none) | | | |
| JP | 2021-98432 | A | 01 July 2021 | (Family: none) | | | |
| WO | 2021/049646 | A1 | 18 March 2021 | US | 2022/0089251 | A1 | |
| | | | | EP | 4029769 | A1 | |
| | | | | CN | 114401889 | A | |
| US | 2018/0257739 | A1 | 13 September 2018 | US | 10071788 | B1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11005583 A
- JP 2001039377 A
- JP 2022037059 A
- JP 2022146575 A